(19) Europäisches Patentamt
European Patent Office
Office européen des brevets

(11) EP 3 521 380 B1

(12) # EUROPEAN PATENT SPECIFICATION

(45) Date of publication and mention of the grant of the patent:
**08.03.2023 Bulletin 2023/10**

(21) Application number: **17855998.5**

(22) Date of filing: **22.09.2017**

(51) International Patent Classification (IPC):
***C09B 67/22*** (2006.01) ***B41M 5/00*** (2006.01)
***C09B 11/28*** (2006.01) ***C09B 33/048*** (2006.01)
***C09D 11/328*** (2014.01) ***C09B 11/24*** (2006.01)

(52) Cooperative Patent Classification (CPC):
**C09D 11/328; C09B 11/24; C09B 67/0041**

(86) International application number:
**PCT/JP2017/034345**

(87) International publication number:
**WO 2018/062044 (05.04.2018 Gazette 2018/14)**

(54) **COLORING COMPOSITION, INK FOR INKJET RECORDING, INKJET RECORDING METHOD, AND INKJET PRINTER CARTRIDGE**

FÄRBEZUSAMMENSETZUNG, TINTE FÜR TINTENSTRAHLAUFZEICHNUNG, TINTENSTRAHLAUFZEICHNUNGSVERFAHREN UND PATRONE FÜR TINTENSTRAHLDRUCKER

COMPOSITION COLORANTE, ENCRE POUR ENREGISTREMENT À JET D'ENCRE, PROCÉDÉ D'ENREGISTREMENT À JET D'ENCRE, ET CARTOUCHE POUR IMPRIMANTE À JET D'ENCRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2016 JP 2016193944**
**03.02.2017 JP 2017019100**

(43) Date of publication of application:
**07.08.2019 Bulletin 2019/32**

(73) Proprietor: **FUJIFILM Corporation**
**Tokyo 106-8620 (JP)**

(72) Inventors:
- **TATEISHI, Keiichi**
**Ashigarakami-gun**
**Kanagawa 258-8577 (JP)**
- **SAITOU, Takashi**
**Ashigarakami-gun**
**Kanagawa 258-8577 (JP)**

(74) Representative: **Klunker IP**
**Patentanwälte PartG mbB**
**Destouchesstraße 68**
**80796 München (DE)**

(56) References cited:
**EP-A1- 1 247 846** **EP-A1- 3 421 549**
**WO-A1-2013/099677** **WO-A1-2015/105108**
**WO-A1-2017/146235** **JP-A- 2002 201 391**
**JP-A- 2016 047 908** **JP-A- 2016 069 655**
**US-A1- 2014 305 336**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 521 380 B1

## Description

## BACKGROUND OF THE INVENTION

1. Field of the Invention

The present invention relates to a coloring composition, an inkjet recording ink, an ink jet recording method, and an inkjet printer cartridge.

2. Description of the Related Art

In the ink jet recording method, as is well-known in the related art, small ink droplets are jetted to be attached to a recording medium such as paper to perform printing. In this printing method, a high-resolution and high-quality image can be printed rapidly and simply using an inexpensive device. Particularly in color printing, recently, a technique of the printing method has been developed as an image forming method capable of replacing photography.

For example, JP2013-133395A and WO2015/105108A describe an ink jet recording ink including a xanthene compound.

WO 2015/105108 A1 teaches a compound that is represented by the following formula, and a coloring composition comprising the same:

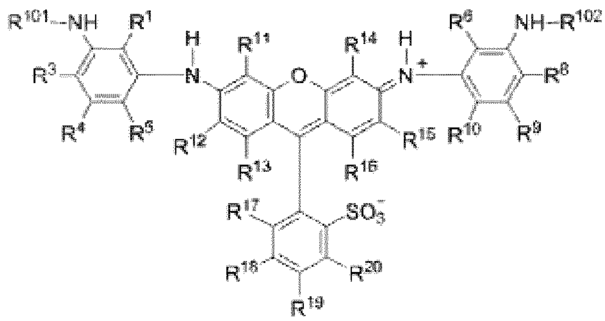

In this formula, $R^1$ to $R^{20}$ each individually represent a hydrogen atom or a substituent. $R^{101}$ and $R^{102}$ each independently represent an alkyl group, an aryl group, a heterocyclic group, an alkylsulfonyl group, an arylsulfonyl group, an alkoxycarbonyl group, an aryloxy carbonyl group, a carbamoyl group, a monoalkylamino carbonyl group, a dialkylamino carbonyl group, a monoarylamino carbonyl group, a diarylamino carbonyl group, or an alkyl aryl amino carbonyl group, and each of these groups may have a substituent.

EP 1 247 846 A1 discloses another aqueous ink for ink-jet recording, which contains at least one naphthol sulfonate disazo dye according to the following formula or its salts as colorant and an aqueous solvent as main components:

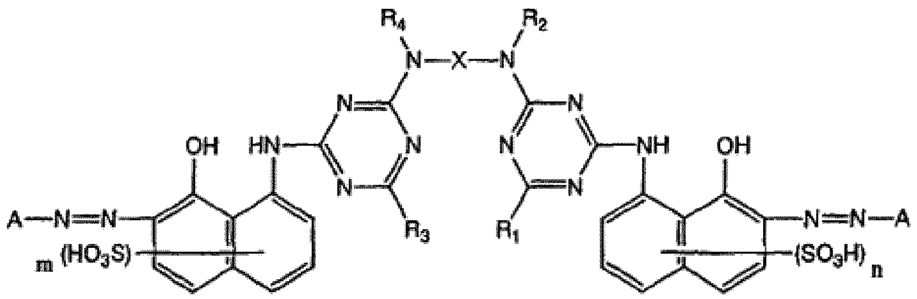

.

US 2014/305336 A1 teaches a compound having a xanthene skeleton and has the following formula:

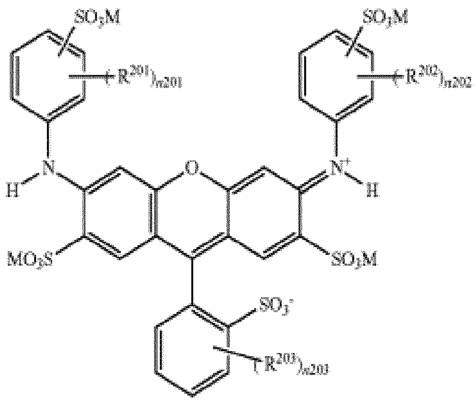

wherein $R^{201}$, $R^{202}$ and $R^{203}$ each independently represent a monovalent substituent, n201 and n202 each independently represent a number of 0 to 4, and n203 represents a number of 0 to 4, when n201, n202 and n203 each represent a number of 2 or more, a plurality of $R^{201}$'s, $R^{202}$'s and $R^{203}$'s may be the same or different, M represents a hydrogen atom or a counter cation, and M's may be the same or different, and a coloring composition containing the compound.

## SUMMARY OF THE INVENTION

However, in the dye field, further improvement of performance is required.

An object of the present invention is to provide: a coloring composition with which an image having excellent color (chroma) and adhesion and having excellent light fastness, ozone fastness, and moisture resistance can be formed; an inkjet recording ink including the coloring composition; an ink jet recording method using the ink jet recording ink; and an ink jet printer cartridge that is filled with the ink jet recording ink.

The present inventors performed a thorough investigation and found that the above-described object can be achieved by the following means. In the present invention, by using a compound represented by Formula (1) and an azo compound represented by Formula (D) in combination, high adhesion (color developability) and image fastness can be realized while reducing the dye concentration (improving reliability of continuous jettability of the ink) in the coloring composition (ink). This configuration is preferable because, by using different coloring agent mother nuclei having excellent color (chroma) and high adhesion in combination, [adhesion] and [image fastness] can be satisfied at a high level as compared to a case where one of the coloring agent mother nuclei is used alone.

The detailed reason is not clear but is presumed to be that, in a case where a xanthene dye represented by Formula (1) and an azo dye represented by Formula (D) are present together (for example, in an ink jet recording ink, or an ink jet printed material prepared using an ink jet recording method; on paper for ink jet recording), a physicochemical interaction hardly occurs, and required performance can be realized without causing a large drawback such as deterioration in light fastness or deterioration in ink storage stability.

That is, the present invention, which is defined in the appended claims, is as follows.

[1] A coloring composition comprising:

a compound represented by the following Formula (1); and
a compound represented by the following Formula (D),

Formula (1)

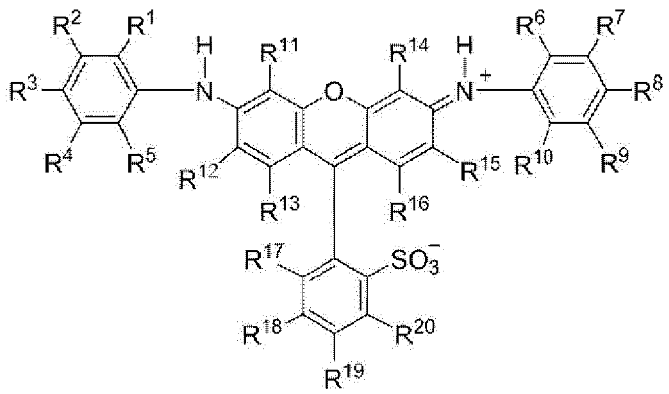

in the Formula (1), $R^1$, $R^5$, $R^6$, and $R^{10}$ each independently represent an unsubstituted alkyl group having 1 to 6 carbon atoms,

$R^{11}$, $R^{13}$, $R^{14}$, $R^{16}$, $R^{17}$, $R^{18}$, $R^{19}$, and $R^{20}$ each independently represent a hydrogen atom or a substituent, wherein $R^4$, $R^9$, $R^{12}$, and $R^{15}$ each independently represent a hydrogen atom or a substituent selected from an unsubstituted alkyl group having 1 to 6 carbon atoms and an ionic hydrophilic group, selected from the group consisting of a carboxyl group, a sulfo group, and a phosphono group, wherein the ionic hydrophilic group may include a counter cation selected from a hydrogen atom, an alkali metal cation, and an ammonium ion,

$R^2$, $R^3$, $R^7$, and $R^8$ each independently represent a hydrogen atom, an unsubstituted alkyl group having 1 to 6 carbon atoms, or a substituent represented by the following Formula (A), and

at least one of $R^2$, $R^3$, $R^7$, or $R^8$ represents a substituent represented by the following Formula (A),

Formula (A)

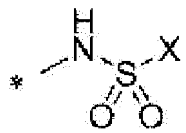

in the Formula (A), X represents a substituent represented by the following Formula (X1), (X2), or (X3), and

* represents a bond to a benzene ring,

Formula (X1)

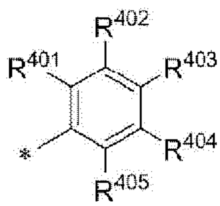

in the Formula (X1), $R^{401}$, $R^{402}$, $R^{403}$, $R^{404}$, and $R^{405}$ each independently represent a hydrogen atom or a substituent,

$R^{401}$, $R^{402}$, $R^{403}$, $R^{404}$, and $R^{405}$ satisfy the following condition (i) or (ii),

* represents a bond to a sulfur atom,

the condition (i): at least one of $R^{401}$, $R^{402}$, $R^{403}$, $R^{404}$, or $R^{405}$ represents a hydroxyl group and at least one of $R^{401}$, $R^{402}$, $R^{403}$, $R^{404}$, or $R^{405}$ represents a carboxyl group, and

the condition (ii): at least two of $R^{401}$, $R^{402}$, $R^{403}$, $R^{404}$, or $R^{405}$ represent a carboxyl group,

Formula (X2)

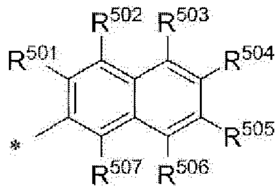

in the Formula (X2), $R^{501}$, $R^{502}$, $R^{503}$, $R^{504}$, $R^{505}$, $R^{506}$, and $R^{507}$ each independently represent a hydrogen atom or a substituent, $R^{501}$, $R^{502}$, $R^{503}$, $R^{504}$, $R^{505}$, $R^{506}$, and $R^{507}$ satisfy the following condition (iii) or (iv),
* represents a bond to a sulfur atom,
the condition (iii): at least one of $R^{501}$, $R^{502}$, $R^{503}$, $R^{504}$, $R^{505}$, $R^{506}$, or $R^{507}$ represents a hydroxyl group and at least one of $R^{501}$, $R^{502}$, $R^{503}$, $R^{504}$, $R^{505}$, $R^{506}$, or $R^{507}$ represents a carboxyl group, and
the condition (iv): at least two of $R^{501}$, $R^{502}$, $R^{503}$, $R^{504}$, $R^{505}$, $R^{506}$, or $R^{507}$ represent a carboxyl group,

Formula (X3)

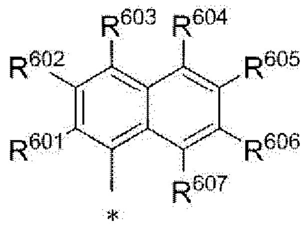

in the Formula (X3), $R^{601}$, $R^{602}$, $R^{603}$, $R^{604}$, $R^{605}$, $R^{606}$, and $R^{607}$ each independently represent a hydrogen atom or a substituent,
$R^{601}$, $R^{602}$, $R^{603}$, $R^{604}$, $R^{605}$, $R^{606}$, and $R^{607}$ satisfy the following condition (v) or (vi),
* represents a bond to a sulfur atom,
the condition (v): at least one of $R^{601}$, $R^{602}$, $R^{603}$, $R^{604}$, $R^{605}$, $R^{606}$, or $R^{607}$ represents a hydroxyl group and at least one of $R^{601}$, $R^{602}$, $R^{603}$, $R^{604}$, $R^{605}$, $R^{606}$, or $R^{607}$ represents a carboxyl group, and
the condition (vi): at least two of $R^{601}$, $R^{602}$, $R^{603}$, $R^{604}$, $R^{605}$, $R^{606}$, or $R^{607}$ represent a carboxyl group, and

Formula (D)

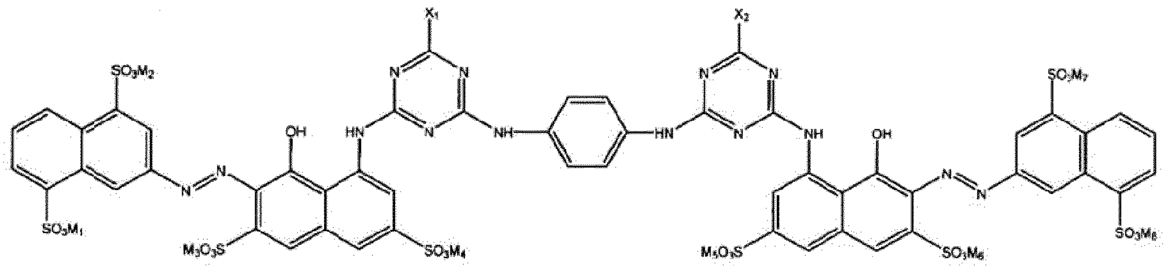

in the Formula (D), $X_1$ and $X_2$ each independently represent a chlorine atom, a hydroxyl group, or an amino group, and
$M_1$ to $M_8$ each independently represent a hydrogen atom, an ammonium ion, an alkali metal ion, or an organic cation.

[2] The coloring composition according to [1],
in which X in the Formula (A) represents a substituent represented by the Formula (X1), and $R^{401}$, $R^{402}$, $R^{403}$, $R^{404}$, and $R^{405}$ in the Formula (X1) satisfy the condition (i).

[3] The coloring composition according to [1],
in which X in the Formula (A) represents a substituent represented by the Formula (X2), and $R^{501}$, $R^{502}$, $R^{503}$, $R^{504}$, $R^{505}$, $R^{506}$, and $R^{507}$ in the Formula (X2) satisfy the condition (iii).

[4] The coloring composition according to [1], in which X in the Formula (A) represents a substituent represented by the Formula (X3), and $R^{601}$, $R^{602}$, $R^{603}$, $R^{604}$, $R^{605}$, $R^{606}$, and $R^{607}$ in the Formula (X3) satisfy the condition (v).

[5] The coloring composition according to any one of [1] to [4], in which a total content of the compound represented by the Formula (1) and the compound represented by the Formula (D) is 3.5 mass% or lower with respect to the coloring composition.

[6] The coloring composition according to any one of [1] to [5], in which a mass ratio {Formula (1)/Formula (D)} of a content of the compound represented by the Formula (1) to a content of the compound represented by the Formula (D) is {99/1} to {50/50}.

[7] An ink jet recording ink comprising the coloring composition according to any one of [1] to [6].

[8] An inkjet recording method using the ink jet recording ink according to [7].

[9] An ink jet printer cartridge that is filled with the ink jet recording ink according to [7].

According to the present invention, it is possible to provide: a coloring composition with which an image having excellent color and adhesion and having excellent light fastness, ozone fastness, and moisture resistance can be formed; an ink jet recording ink including the coloring composition; an ink jet recording method using the ink jet recording ink; and an ink jet printer cartridge that is filled with the inkjet recording ink.

## BRIEF DESCRIPTION OF THE DRAWINGS

Fig. 1 is a diagram showing a $^{1}$H-NMR (nuclear magnetic resonance) spectrum of an exemplary compound (1-11) in dimethyl sulfoxide-d6.
Fig. 2 is a diagram showing a $^{1}$H-NMR spectrum of an exemplary compound (1-18) in dimethyl sulfoxide-d6.
Fig. 3 is a diagram showing a $^{1}$H-NMR spectrum of an exemplary compound (1-26) in dimethyl sulfoxide-d6.
Fig. 4 is a diagram showing a $^{1}$H-NMR spectrum of an exemplary compound (1-30) in dimethyl sulfoxide-d6.

## DESCRIPTION OF THE PREFERRED EMBODIMENTS

Hereinafter, the present invention will be described in detail.
First, specific examples of a substituent in the present invention are defined as a substituent group A.

(Substituent Group A)

Examples of the substituent group A include a halogen atom, an alkyl group, an aralkyl group, an alkenyl group, an alkynyl group, an aryl group, a heterocyclic group, a cyano group, a hydroxyl group, a nitro group, an alkoxy group, an aryloxy group, a silyloxy group, a heterocyclic oxy group, an acyloxy group, a carbamoyloxy group, an alkoxycarbonyloxy group, an aryloxycarbonyloxy group, an amino group, an acylamino group, an aminocarbonylamino group, an alkoxycarbonylamino group, an aryloxycarbonylamino group, a sulfamoylamino group, an alkyl- or aryl-sulfonylamino group, a mercapto group, an alkylthio group, an arylthio group, a heterocyclic thio group, a sulfamoyl group, an alkyl- or aryl-sulfinyl group, an alkyl- or aryl-sulfonyl group, an acyl group, an aryloxycarbonyl group, an alkoxycarbonyl group, a carbamoyl group, an aryl or heterocyclic azo group, an imido group, a phosphino group, a phosphinyl group, a phosphinyloxy group, a phosphinylamino group, a silyl group, and an ionic hydrophilic group. These substituents may further have a substituent, and examples of this substituent include a group selected from the above-described substituent group A.
Examples of the halogen atom include a fluorine atom, a chlorine atom, a bromine atom, and an iodine atom.
Examples of the alkyl group include a linear, branched, or cyclic substituted or unsubstituted alkyl group. In addition, a cycloalkyl group, a bicycloalkyl group, a tricyclo structure having many ring structures, and the like are also included. Alkyl groups (for example, an alkyl group in an alkoxy group or an alkylthio group) in substituents described below are also included in the examples of the above-described alkyl group.
As the alkyl group, an alkyl group having 1 to 30 carbon atoms is preferable, and examples thereof include a methyl group, an ethyl group, a n-propyl group, an i-propyl group, a t-butyl group, a n-octyl group, an eicosyl group, a

2-chloroethyl group, a 2-cyanoethyl group, and a 2-ethylhexyl group. As the cycloalkyl group, a substituted or unsubstituted cycloalkyl group having 3 to 30 carbon atoms is preferable, and examples thereof include a cyclohexyl group, a cyclopentyl group, and a 4-n-dodecylcyclohexyl group. As the bicycloalkyl group, a substituted or unsubstituted bicycloalkyl group having 5 to 30 carbon atoms is preferable, that is, a monovalent group obtained by removing one hydrogen atom from bicycloalkane having 5 to 30 carbon atoms is preferable, and examples thereof include a bicyclo[1,2,2]heptan-2-yl group and a bicyclo[2,2,2]octan-3-yl group.

Examples of the aralkyl group include a substituted or unsubstituted aralkyl group. As the substituted or unsubstituted aralkyl group, an aralkyl group having 7 to 30 carbon atoms is preferable, and examples thereof include a benzyl group and a 2-phenethyl group.

Examples of the alkenyl group include a linear, branched, or cyclic substituted or unsubstituted alkenyl group. In addition, a cycloalkenyl group and a bicycloalkenyl group are also included.

As the alkenyl group, a substituted or unsubstituted alkenyl group having 2 to 30 carbon atoms is preferable, and examples thereof include a vinyl group, an allyl group, a prenyl group, a geranyl group, and an oleyl group. As the cycloalkenyl group, a substituted or unsubstituted cycloalkenyl group having 3 to 30 carbon atoms is preferable, that is, a monovalent group obtained by removing one hydrogen atom from cycloalkene having 3 to 30 carbon atoms is preferable, and examples thereof include a 2-cyclopenten-1-yl group and a 2-cyclohexen-1-yl group. As the bicycloalkenyl group, a substituted or unsubstituted bicycloalkenyl group can be used. A substituted or unsubstituted bicycloalkenyl group having 5 to 30 carbon atoms is preferable, that is, a monovalent group obtained by removing one hydrogen atom from bicycloalkene having one double bond is preferable, and examples thereof include a bicyclo[2,2,1]hept-2-en-1-yl group and a bicyclo[2,2,2]oct-2-en-4-yl group.

As the alkynyl group, a substituted or unsubstituted alkynyl group having 2 to 30 carbon atoms is preferable, and examples thereof include an ethynyl group, a propargyl group, and a trimethylsilylethynyl group.

As the aryl group, a substituted or unsubstituted aryl group having 6 to 30 carbon atoms is preferable, and examples thereof include a phenyl group, a p-tolyl group, a naphthyl group, a m-chlorophenyl group, an o-hexadecanoylaminophenyl group.

As the heterocyclic group, a monovalent group obtained by removing one hydrogen atom from a 5- or 6-membered substituted or unsubstituted aromatic or nonaromatic heterocyclic compound is preferable, and a 5- or 6-membered aromatic heterocyclic group having 3 to 30 carbon atoms is more preferable, and examples thereof include a 2-furyl group, a 2-thienyl group, a 2-pyrimidinyl group, and a 2-benzothiazolyl group. Examples of the nonaromatic heterocyclic group include a morpholinyl group.

As the alkoxy group, a substituted or unsubstituted alkoxy group having 1 to 30 carbon atoms is preferable, and examples thereof include a methoxy group, an ethoxy group, an isopropoxy group, a t-butoxy group, a n-octyloxy group, and a 2-methoxyethoxy group.

As the aryloxy group, a substituted or unsubstituted aryloxy group having 6 to 30 carbon atoms is preferable, and examples thereof include a phenoxy group, a 2-methylphenoxy group, a 4-t-butylphenoxy group, a 3-nitrophenoxy group, and a 2-tetradecanoylaminophenoxy group.

As the silyloxy group, a substituted or unsubstituted silyloxy group having 0 to 20 carbon atoms is preferable, and examples thereof include a trimethylsilyloxy group and a diphenylmethylsilyloxy group.

As the heterocyclic oxy group, a substituted or unsubstituted heterocyclic oxy group having 2 to 30 carbon atoms is preferable, and examples thereof include a 1-phenyltetrazole-5-oxy group and a 2-tetrahydropyranyloxy group.

As the acyloxy group, a formyloxy group, a substituted or unsubstituted alkylcarbonyloxy group having 2 to 30 carbon atoms, or a substituted or unsubstituted arylcarbonyloxy group having 6 to 30 carbon atoms is preferable, and examples thereof include an acetyloxy group, a pivaloyloxy group, a stearoyloxy group, a benzoyloxy group, and a p-methoxyphenylcarbonyloxy group.

As the carbamoyloxy group, a substituted or unsubstituted carbamoyloxy group having 1 to 30 carbon atoms is preferable, and examples thereof include a N,N-dimethylcarbamoyloxy group, a N,N-diethylcarbamoyloxy group, a morpholinocarbonyloxy group, a N,N-di-n-octylaminocarbonyloxy group, and a N-n-octylcarbamoyloxy group.

As the alkoxycarbonyloxy group, a substituted or unsubstituted alkoxycarbonyloxy group having 2 to 30 carbon atoms is preferable, and examples thereof include a methoxycarbonyloxy group, an ethoxycarbonyloxy group, a t-butoxycarbonyloxy group, and an n-octylcarbonyloxy group.

As the aryloxycarbonyloxy group, a substituted or unsubstituted aryloxycarbonyloxy group having 7 to 30 carbon atoms is preferable, and examples thereof include a phenoxycarbonyloxy group, a p-methoxyphenoxycarbonyloxy group, and a p-n-hexadecyloxyphenoxycarbonyloxy group.

Examples of the amino group include an alkylamino group, an arylamino group, and a heterocyclic amino group. As the amino group, a substituted or unsubstituted alkylamino group having 1 to 30 carbon atoms, a substituted or unsubstituted anilino group having 6 to 30 carbon atoms is preferable, and examples thereof include a methylamino group, a dimethylamino group, an anilino group, a N-methyl-anilino group, a diphenylamino group, and a triazinylamino group.

As the acylamino group, a formylamino group, a substituted or unsubstituted alkylcarbonylamino group having 1 to 30 carbon atoms, or a substituted or unsubstituted arylcarbonylamino group having 6 to 30 carbon atoms is preferable, and examples thereof include an acetylamino group, a pivaloylamino group, a lauroylamino group, a benzoylamino group, and a 3,4,5-tri-n-octyloxyphenylcarbonylamino group.

As the aminocarbonylamino group, a substituted or unsubstituted aminocarbonylamino group having 1 to 30 carbon atoms is preferable, and examples thereof include a carbamoylamino group, a N,N-dimethylaminocarbonylamino group, a N,N-diethylaminocarbonylamino group, and a morpholinocarbonylamino group.

As the alkoxycarbonylamino group, a substituted or unsubstituted alkoxycarbonylamino group having 2 to 30 carbon atoms is preferable, and examples thereof include a methoxycarbonylamino group, an ethoxycarbonylamino group, a t-butoxycarbonylamino group, a n-octadecyloxycarbonylamino group, and a N-methyl-methoxycarbonylamino group.

As the aryloxycarbonylamino group, a substituted or unsubstituted aryloxycarbonylamino group having 7 to 30 carbon atoms is preferable, and examples thereof include a phenoxycarbonylamino group, a p-chlorophenoxycarbonylamino group, and a m-n-octyloxyphenoxycarbonylamino group.

As the sulfamoylamino group, a substituted or unsubstituted sulfamoylamino group having 0 to 30 carbon atoms is preferable, and examples thereof include a sulfamoylamino group, a N,N-dimethylaminosulfonylamino group, and a N-n-octylaminosulfonylamino group.

As the alkyl- or aryl-sulfonylamino group, a substituted or unsubstituted alkylsulfonylamino group having 1 to 30 carbon atoms or a substituted or unsubstituted arylsulfonylamino group having 6 to 30 carbon atoms is preferable, and examples thereof include a methylsulfonylamino group, a butylsulfonylamino group, a phenylsulfonylamino group, a 2,3,5-trichlorophenylsulfonylamino group, and a p-methylphenylsulfonylamino group.

As the alkylthio group, a substituted or unsubstituted alkylthio group having 1 to 30 carbon atoms is preferable, and examples thereof include a methylthio group, an ethylthio group, and a n-hexadecylthio group.

As the arylthio group, a substituted or unsubstituted arylthio group having 6 to 30 carbon atoms is preferable, and examples thereof include a phenylthio group, a p-chlorophenylthio group, and a m-methoxyphenylthio group.

As the heterocyclic thio group, a substituted or unsubstituted heterocyclic thio group having 2 to 30 carbon atoms is preferable, and examples thereof include a 2-benzothiazolylthio group and a 1-phenyltetrazole-5-ylthio group.

As the sulfamoyl group, a substituted or unsubstituted sulfamoyl group having 0 to 30 carbon atoms is preferable, and examples thereof include a N-ethylsulfamoyl group, a N-(3-dodecyloxypropyl)sulfamoyl group, a N,N-dimethylsulfamoyl group, a N-acetylsulfamoyl group, a N-benzoylsulfamoyl group, and a N-(N'-phenylcarbamoyl)sulfamoyl group.

As the alkyl- or aryl-sulfinyl group, a substituted or unsubstituted alkylsulfinyl group having 1 to 30 carbon atoms or a substituted or unsubstituted arylsulfinyl group having 6 to 30 carbon atoms is preferable, and examples thereof include a methylsulfinyl group, an ethylsulfinyl group, a phenylsulfinyl group, and a p-methylphenylsulfinyl group.

As the alkyl- or aryl-sulfonyl group, a substituted or unsubstituted alkylsulfonyl group having 1 to 30 carbon atoms or a substituted or unsubstituted arylsulfonyl group having 6 to 30 carbon atoms is preferable, and examples thereof include a methylsulfonyl group, an ethylsulfonyl group, a phenylsulfonyl group, and a p-methylphenylsulfonyl group.

As the acyl group, a formyl group, a substituted or unsubstituted alkylcarbonyl group having 2 to 30 carbon atoms, a substituted or unsubstituted arylcarbonyl group having 7 to 30 carbon atoms, or a substituted or unsubstituted heterocyclic carbonyl group having 2 to 30 carbon atoms and being bonded to a carbonyl group through a carbon atom is preferable, and examples thereof include an acetyl group, a pivaloyl group, a 2-chloroacetyl group, a stearoyl group, a benzoyl group, a p-n-octyloxyphenylcarbonyl group, a 2-pyridylcarbonyl group, and a 2-furylcarbonyl group.

As the aryloxycarbonyl group, a substituted or unsubstituted aryloxycarbonyl group having 7 to 30 carbon atoms is preferable, and examples thereof include a phenoxycarbonyl group, an o-chlorophenoxycarbonyl group, a m-nitrophenoxycarbonyl group, and a p-t-butylphenoxycarbonyl group.

As the alkoxycarbonyl group, a substituted or unsubstituted alkoxycarbonyl group having 2 to 30 carbon atoms is preferable, and examples thereof include a methoxycarbonyl group, an ethoxycarbonyl group, a t-butoxycarbonyl group, and a n-octadecyloxycarbonyl group.

As the carbamoyl group, a substituted or unsubstituted carbamoyl group having 1 to 30 carbon atoms is preferable, and examples thereof include a carbamoyl group, a N-methylcarbamoyl group, a N,N-dimethylcarbamoyl group, a N,N-di-n-octylcarbamoyl group, and a N-(methylsulfonyl)carbamoyl group.

As the aryl- or heterocyclic azo group, a substituted or unsubstituted aryl azo group having 6 to 30 carbon atoms or a substituted or unsubstituted heterocyclic azo group having 3 to 30 carbon atoms is preferable, and examples thereof include a phenylazo group, a p-chlorophenylazo group, and a 5-ethylthio-1,3,4-thiadiazol-2-ylazo group.

As the imido group, for example, a N-succinimido group or a N-phthalimido group is preferable.

As the phosphino group, a substituted or unsubstituted phosphino group having 0 to 30 carbon atoms is preferable, and examples thereof include a dimethylphosphino group, a diphenylphosphino group, and a methylphenoxyphosphino group.

As the phosphinyl group, a substituted or unsubstituted phosphinyl group having 0 to 30 carbon atoms is preferable, and examples thereof include a phosphinyl group, a dioctyloxyphosphinyl group, and a diethoxyphosphinyl group.

As the phosphinyloxy group, a substituted or unsubstituted phosphinyloxy group having 0 to 30 carbon atoms is preferable, and examples thereof include a diphenoxyphosphinyloxy group and a dioctyloxyphosphinyloxy group.

As the phosphinylamino group, a substituted or unsubstituted phosphinylamino group having 0 to 30 carbon atoms is preferable, and examples thereof include a dimethoxyphosphinylamino group and a dimethylaminophosphinylamino group.

As the silyl group, a substituted or unsubstituted silyl group having 0 to 30 carbon atoms is preferable, and examples thereof include a trimethylsilyl group, a t-butyldimethylsilyl group, and a phenyldimethylsilyl group.

Examples of the ionic hydrophilic group include a sulfo group, a carboxyl group, a thiocarboxyl group, a sulfino group, a phosphono group, a dihydroxyphosphino group, and a quaternary ammonium group. Among these, a sulfo group or a carboxyl group is more preferable. In addition, the ionic hydrophilic group may include a cation or an anion, and a state including a cation or an anion is called a salt. In addition, the carboxyl group, the phosphono group, or the sulfo group may be in the form of a salt, and examples of a counter cation which forms a salt with the carboxyl group, the phosphono group, or the sulfo group include an ammonium ion, an alkali metal ion (for example, a lithium ion, a sodium ion, or a potassium ion), and an organic cation (for example, a tetramethylammonium ion, a tetramethylguanidium ion, or tetramethylphosphonium ion). Among these, a lithium salt, a sodium salt, a potassium salt, or an ammonium salt is preferable, a sodium salt or a mixed salt containing a sodium salt as a major component is more preferable, and a sodium salt is most preferable.

In the present invention, in a case where a compound is a salt, the salt is dissociated and present in a water-soluble ink in the form of ions.

[Compound represented by Formula (1)]

A compound represented by the following Formula (1) will be described.

Formula (1)

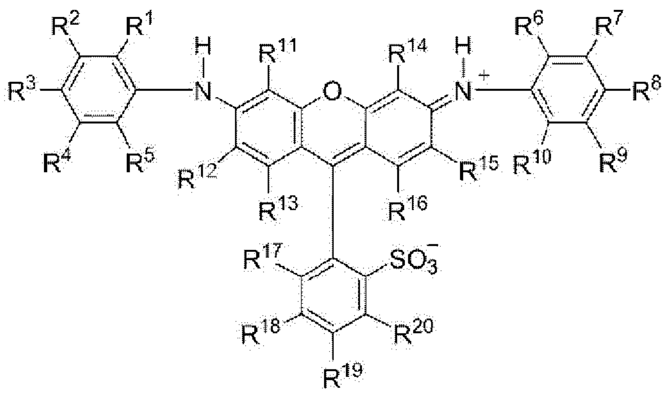

In Formula (1), $R^1$, $R^5$, $R^6$, and $R^{10}$ each independently represent an unsubstituted alkyl group having 1 to 6 carbon atoms. $R^{11}$, $R^{13}$, $R^{15}$, $R^{16}$, $R^{17}$ , $R^{18}$, $R^{19}$, and $R^{20}$ each independently represent a hydrogen atom or a substituent. $R^4$, $R^9$, $R^{12}$, and $R^{15}$ each independently represent a hydrogen atom or a substituent selected from an unsubstituted alkyl group having 1 to 6 carbon atoms and an ionic hydrophilic group, selected from the group consisting of a carboxyl group, a sulfo group, and a phosphono group, wherein the ionic hydrophilic group may include a counter cation selected from a hydrogen atom, an alkali metal cation, and an ammonium ion. $R^2$, $R^3$, R , and $R^8$ each independently represent a hydrogen atom, an unsubstituted alkyl group having 1 to 6 carbon atoms, or a substituent represented by the following Formula (A), and at least one of $R^2$, $R^3$, $R^7$, or $R^8$ represents a substituent represented by the following Formula (A).

Formula (A)

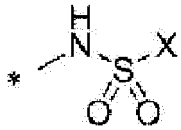

In Formula (A), X represents a substituent represented by the following Formula (X1), (X2), or (X3). * represents a bond to a benzene ring.

Formula (X1)

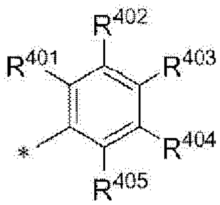

In Formula (X1), $R^{401}$, $R^{402}$, $R^{403}$, $R^{404}$, and $R^{405}$ each independently represent a hydrogen atom or a substituent. $R^{401}$, $R^{402}$, $R^{403}$, $R^{404}$, and $R^{405}$ satisfy the following condition (i) or (ii). * represents a bond to a sulfur atom.

Condition (i): at least one of $R^{401}$, $R^{402}$, $R^{403}$, $R^{404}$, or $R^{405}$ represents a hydroxyl group and at least one of $R^{401}$, $R^{402}$, $R^{403}$, $R^{404}$, or $R^{405}$ represents a carboxyl group
Condition (ii): at least two of $R^{401}$, $R^{402}$, $R^{403}$, $R^{404}$, or $R^{405}$ represent a carboxyl group

Formula (X2)

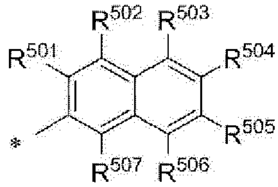

In Formula (X2), $R^{501}$, $R^{502}$, $R^{503}$, $R^{504}$, $R^{505}$, $R^{506}$, and $R^{507}$ each independently represent a hydrogen atom or a substituent. $R^{501}$, $R^{502}$, $R^{503}$, $R^{504}$, $R^{505}$, $R^{506}$, and $R^{507}$ satisfy the following condition (iii) or (iv). * represents a bond to a sulfur atom.
Condition (iii): at least one of $R^{501}$, $R^{502}$, $R^{503}$, $R^{504}$, $R^{505}$, $R^{506}$, or $R^{507}$ represents a hydroxyl group and at least one of $R^{501}$, $R^{502}$, $R^{503}$, $R^{504}$, $R^{505}$, $R^{506}$, or $R^{507}$ represents a carboxyl group
Condition (iv): at least two of $R^{501}$, $R^{502}$, $R^{503}$, $R^{504}$, $R^{505}$, $R^{506}$, or $R^{507}$ represent a carboxyl group

Formula (X3)

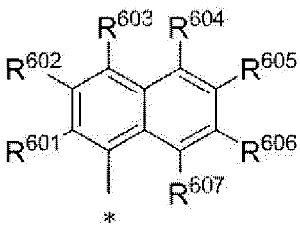

In Formula (X3), $R^{601}$, $R^{602}$, $R^{603}$, $R^{604}$, $R^{605}$, $R^{606}$, and $R^{607}$ each independently represent a hydrogen atom or a substituent. $R^{601}$, $R^{602}$, $R^{603}$, $R^{604}$, $R^{605}$, $R^{606}$, and $R^{607}$ satisfy the following condition (v) or (vi). * represents a bond to a sulfur atom.
Condition (v): at least one of $R^{601}$, $R^{602}$, $R^{603}$, $R^{604}$, $R^{605}$, $R^{606}$, or $R^{607}$ represents a hydroxyl group and at least one of $R^{601}$, $R^{602}$, $R^{603}$, $R^{604}$, $R^{605}$, $R^{606}$, or $R^{607}$ represents a carboxyl group
Condition (vi): at least two of $R^{601}$, $R^{602}$, $R^{603}$, $R^{604}$, $R^{605}$, $R^{606}$, or $R^{607}$ represent a carboxyl group

In Formula (1), $R^{11}$, $R^{13}$, $R^{14}$, $R^{16}$, $R^{17}$, $R^{18}$, $R^{19}$, and $R^{20}$ each independently represent a hydrogen atom or a substituent. In a case where $R^{11}$, $R^{13}$, $R^{14}$, $R^{16}$, $R^{17}$, $R^{18}$, $R^{19}$, and $R^{20}$ represent a substituent, the substituent is selected from, for example, the substituent group A.
It is preferable that $R^{11}$, $R^{13}$, $R^{14}$, $R^{16}$, $R^{17}$, $R^{18}$, $R^{19}$, and $R^{20}$ represent a hydrogen atom.
In Formula (1), $R^1$, $R^5$, $R^6$, and $R^{10}$ each independently represent an alkyl group having 1 to 6 carbon atoms

from the viewpoint of raw material availability and synthesis easiness, and preferably an alkyl group having 1 to 3 carbon atoms, and a methyl group or an ethyl group is still more preferable.

In Formula (1), $R^4$, $R^9$, $R^{12}$, and $R^{15}$ each independently represent a hydrogen atom or a substituent. In a case where $R^4$, $R^9$, $R^{12}$, and $R^{15}$ represent a substituent, the substituent is an alkyl group or an ionic hydrophilic group.

As the alkyl group, an unsubstituted alkyl group having 1 to 6 carbon atoms is used, an alkyl group having 1 to 3 carbon atoms is more preferable, a methyl group or an ethyl group is still more preferable, and a methyl group is still more preferable.

As the ionic hydrophilic group, a carboxyl group, a sulfo group, or a phosphono group is used. Examples of a counter cation of the ionic hydrophilic group include a hydrogen atom (proton), an alkali metal cation (a lithium ion, a sodium ion, or a potassium ion), and an ammonium ion. From the viewpoint of synthesis easiness (easy handleability of dye powder), the counter cation of the ionic hydrophilic group is preferably an alkali metal cation.

It is preferable that at least one of $R^4$, $R^9$, $R^{12}$, or $R^{15}$ represents an ionic hydrophilic group, and it is more preferable that two or more of $R^4$, $R^9$, $R^{12}$, or $R^{15}$ represents an ionic hydrophilic group.

A case where $R^{12}$ and $R^{15}$ represent an ionic hydrophilic group and $R^4$ and $R^9$ represent a hydrogen atom or a case where $R^4$ and $R^9$ represent an ionic hydrophilic group and $R^{12}$ and $R^{15}$ represent a hydrogen atom is preferable, and a case where $R^{12}$ and $R^{15}$ represent an ionic hydrophilic group and $R^4$ and $R^9$ represent a hydrogen atom is more preferable.

$R^4$ and $R^9$ each independently represent preferably a hydrogen atom, a sulfo group, or a carboxyl group and more preferably a hydrogen atom or a sulfo group.

$R^{12}$ and $R^{15}$ each independently represent preferably a hydrogen atom, a sulfo group, or a carboxyl group and more preferably a hydrogen atom or a sulfo group.

In Formula (1), $R^2$, $R^3$, $R^7$, and $R^8$ each independently represent a hydrogen atom, an alkyl group, or a substituent represented by Formula (A), and at least one of $R^2$, $R^3$, $R^7$, or $R^8$ represents a substituent represented by Formula (A).

In a case where $R^2$, $R^3$, $R^7$, and $R^8$ represent an alkyl group, an alkyl group having 1 to 6 carbon atoms is used, an alkyl group having 1 to 3 carbon atoms is preferable, and a methyl group or an ethyl group is more preferable.

A case where Rand $R^7$ each independently represent a substituent represented by Formula (A) and $R^3$ and $R^8$ each independently represent an alkyl group or a case where $R^3$ and $R^8$ each independently represent a substituent represented by Formula (A) and $R^2$ and $R^7$ each independently represent an alkyl group is preferable, and a case where $R^2$ and $R^7$ each independently represent a substituent represented by Formula (A) and $R^3$ and $R^8$ each independently represent an alkyl group is more preferable.

In Formula (A), X represents a substituent represented by Formula (X1), (X2), or (X3).

Examples of a counter cation of the carboxyl group represented by Formula (X1), (X2), or (X3) include a hydrogen atom (proton), an alkali metal cation (a lithium ion, a sodium ion, or a potassium ion), and an ammonium ion. The counter cation of the carboxyl group is preferably an alkali metal cation.

In Formula (X1), $R^{401}$, $R^{402}$, $R^{403}$, $R^{404}$, and $R^{405}$ each independently represent a hydrogen atom or a substituent. $R^{401}$, $R^{402}$, $R^{403}$, $R^{404}$, and $R^{405}$ satisfy the following condition (i) or (ii).

Condition (i): at least one of $R^{401}$, $R^{402}$, $R^{403}$, $R^{404}$, or $R^{405}$ represents a hydroxyl group and at least one of $R^{401}$, $R^{402}$, $R^{403}$, $R^{404}$, or $R^{405}$ represents a carboxyl group

Condition (ii): at least two of $R^{401}$, $R^{402}$, $R^{403}$, $R^{404}$, or $R^{405}$ represent a carboxyl group

It is preferable that $R^{401}$, $R^{402}$, $R^{403}$, $R^{404}$, and $R^{405}$ in Formula (X1) satisfy the condition (i). That is, it is preferable that at least one of $R^{401}$, $R^{402}$, $R^{403}$, $R^{404}$, or $R^{405}$ represents a hydroxyl group and at least one of $R^{401}$, $R^{402}$, $R^{403}$, $R^{404}$, or $R^{405}$ represents a carboxyl group.

Among $R^{401}$, $R^{402}$, $R^{403}$, $R^{404}$, and $R^{405}$, the number of hydroxyl groups is preferably 1 to 3, more preferably 1 or 2, and still more preferably 1. The number of carboxyl groups is more preferably 1 to 3 and still more preferably 1 or 2.

A case where $R^{403}$ represents a hydroxyl group and $R^{402}$ represents a carboxyl group or a case where $R^{401}$ represents a hydroxyl group and $R^{402}$ represents a carboxyl group is preferable, and a case where $R^{401}$ represents a hydroxyl group and $R^{402}$ represents a carboxyl group is more preferable.

In a case where $R^{401}$, $R^{402}$, $R^{403}$, $R^{404}$, and $R^{405}$ represent a substituent, the substituent is selected from, for example, the substituent group A. In particular, an alkyl group or an alkoxy group is preferable, an alkyl group having 1 to 6 carbon atoms or an alkoxy group is more preferable, an alkyl group having 1 to 3 carbon atoms or an alkoxy group is still more preferable, and a methyl group or a methoxy group is still more preferable. In addition, in a case where $R^{401}$, $R^{402}$, $R^{403}$, $R^{404}$, and $R^{405}$ represent a substituent, examples of the substituent in an aspect different from the above-described aspect include a carboxyl group, a chlorine atom, a nitro group, and a trifluoromethyl group. Among these, a carboxyl group, a chlorine atom, or a nitro group is more preferable, and a carboxyl group is still more preferable. In particular, in a case where $R^{401}$ represents a hydroxyl group and $R^{402}$ represents a carboxyl group, it is preferable that $R^{404}$ represents the above-described substituent (a carboxyl group, a chlorine atom, a nitro group, or a trifluoromethyl

group).

In a case where $R^{401}$, $R^{402}$, $R^{403}$, $R^{404}$, and $R^{405}$ in Formula (X1) satisfy the condition (ii), it is preferable that $R^{402}$ and $R^{404}$ represent a carboxyl group.

Specific examples of the group represented by Formula (X1) will be shown below, but the present invention is not limited to the examples. In structural formulae of the following specific compounds, Me represents a methyl group. * represents a bond to a sulfur atom.

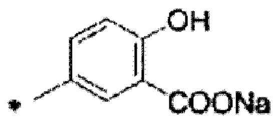
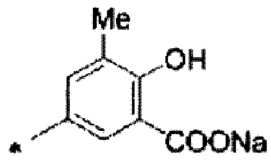
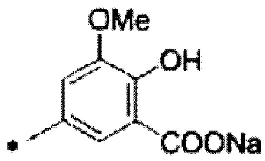

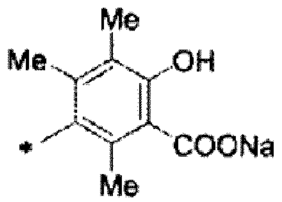
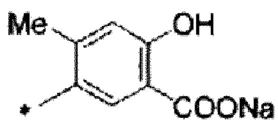
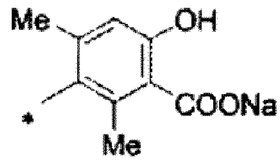

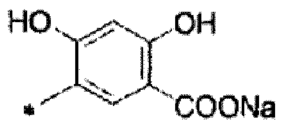
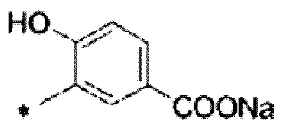
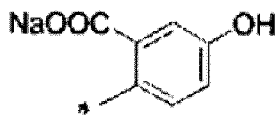

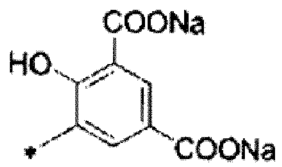
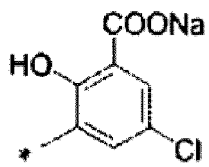
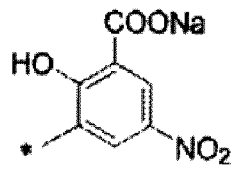

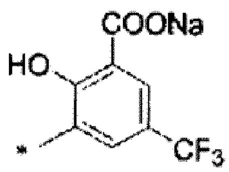

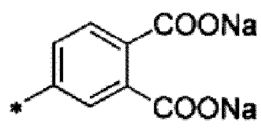
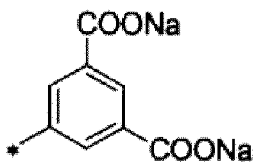
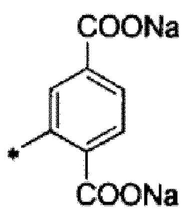

In Formula (X2), $R^{501}$, $R^{502}$, $R^{503}$, $R^{504}$, $R^{505}$, $R^{506}$, and $R^{507}$ each independently represent a hydrogen atom or a substituent. $R^{501}$, $R^{502}$, $R^{503}$, $R^{504}$, $R^{505}$, $R^{506}$, and $R^{507}$ satisfy the following condition (iii) or (iv).

Condition (iii): at least one of $R^{501}$, $R^{502}$, $R^{503}$, $R^{504}$, $R^{505}$, $R^{506}$, or $R^{507}$ represents a hydroxyl group and at least one of $R^{501}$, $R^{502}$, $R^{503}$, $R^{504}$, $R^{505}$, $R^{506}$, or $R^{507}$ represents a carboxyl group

Condition (iv): at least two of $R^{501}$, $R^{502}$, $R^{503}$, $R^{504}$, $R^{505}$, $R^{506}$, or $R^{507}$ represent a carboxyl group

It is preferable that $R^{501}$, $R^{502}$, $R^{503}$, $R^{504}$, $R^{505}$, $R^{506}$, and $R^{507}$ in Formula (X2) satisfy the condition (iii). That is, it is preferable that at least one of $R^{501}$, $R^{502}$, $R^{503}$, $R^{504}$, $R^{505}$, $R^{506}$, or $R^{507}$ represents a hydroxyl group and at least one of $R^{501}$, $R^{502}$, $R^{503}$, $R^{504}$, $R^{505}$, $R^{506}$, or $R^{507}$ represents a carboxyl group.

In a case where $R^{501}$, $R^{502}$, $R^{503}$, $R^{504}$, $R^{505}$, $R^{506}$, and $R^{507}$ represent a substituent, the substituent is selected

from, for example, the substituent group A. In particular, an alkyl group or an alkoxy group is preferable, an alkyl group having 1 to 6 carbon atoms or an alkoxy group is more preferable, an alkyl group having 1 to 3 carbon atoms or an alkoxy group is still more preferable, and a methyl group or a methoxy group is still more preferable.

Among $R^{501}$, $R^{502}$, $R^{503}$, $R^{504}$, $R^{505}$, $R^{506}$, and $R^{507}$, the number of hydroxyl groups is preferably 1 to 3, more preferably 1 or 2, and still more preferably 1. The number of carboxyl groups is more preferably 1 or 2 and still more preferably 1.

A case where $R^{504}$ represents a hydroxyl group and $R^{503}$ represents a carboxyl group or a case where $R^{504}$ represents a hydroxyl group and $R^{505}$ represents a carboxyl group is preferable, and a case where $R^{504}$ represents a hydroxyl group and $R^{503}$ represents a carboxyl group is more preferable.

Specific examples of the group represented by Formula (X2) will be shown below, but the present invention is not limited to the examples. * represents a bond to a sulfur atom.

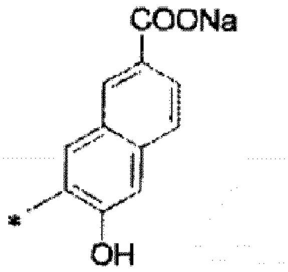
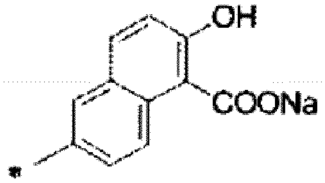
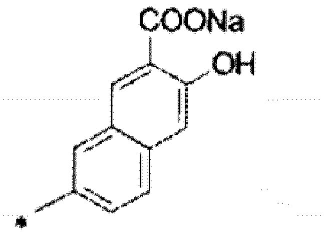

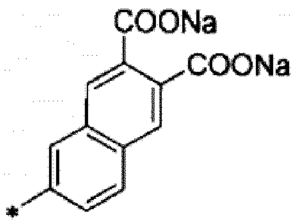
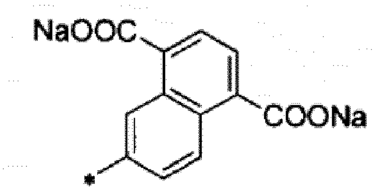
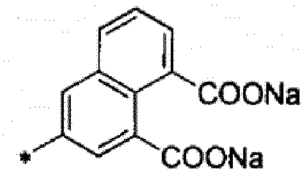

In Formula (X3), $R^{601}$, $R^{602}$, $R^{603}$, $R^{604}$, $R^{605}$, $R^{606}$, and $R^{607}$ each independently represent a hydrogen atom or a substituent. $R^{601}$, $R^{602}$, $R^{603}$, $R^{604}$, $R^{605}$, $R^{606}$, and $R^{607}$ satisfy the following condition (v) or (vi). * represents a bond to a sulfur atom.

Condition (v): at least one of $R^{601}$, $R^{602}$, $R^{603}$, $R^{604}$, $R^{605}$, $R^{606}$, or $R^{607}$ represents a hydroxyl group and at least one of $R^{601}$, $R^{602}$, $R^{603}$, $R^{604}$, $R^{605}$, $R^{606}$, or $R^{607}$ represents a carboxyl group

Condition (vi): at least two of $R^{601}$, $R^{602}$, $R^{603}$, $R^{604}$, $R^{605}$, $R^{606}$, or $R^{607}$ represent a carboxyl group

It is preferable that $R^{601}$, $R^{602}$, $R^{603}$, $R^{604}$, $R^{605}$, $R^{606}$, and $R^{607}$ in Formula (X3) satisfy the condition (v). That is, it is preferable that at least one of $R^{601}$, $R^{602}$, $R^{603}$, $R^{604}$, $R^{605}$, $R^{606}$, or $R^{607}$ represents a hydroxyl group and at least one of $R^{601}$, $R^{602}$, $R^{603}$, $R^{604}$, $R^{605}$, $R^{606}$, or $R^{607}$ represents a carboxyl group.

In a case where $R^{601}$, $R^{602}$, $R^{603}$, $R^{604}$, $R^{605}$, $R^{606}$, and $R^{607}$ represent a substituent, the substituent is selected from, for example, the substituent group A. In particular, an alkyl group or an alkoxy group is preferable, an alkyl group having 1 to 6 carbon atoms or an alkoxy group is more preferable, an alkyl group having 1 to 3 carbon atoms or an alkoxy group is still more preferable, and a methyl group or a methoxy group is still more preferable.

Among $R^{601}$, $R^{602}$, $R^{603}$, $R^{604}$, $R^{605}$, $R^{606}$, or $R^{607}$, the number of hydroxyl groups is preferably 1 to 3, more preferably 1 or 2, and still more preferably 1. The number of carboxyl groups is more preferably 1 or 2 and still more preferably 1.

A case where $R^{606}$ represents a hydroxyl group and $R^{605}$ represents a carboxyl group or a case where $R^{603}$ represents a hydroxyl group and $R^{602}$ represents a carboxyl group is preferable, and a case where $R^{606}$ represents a hydroxyl group and $R^{605}$ represents a carboxyl group is more preferable.

Specific examples of the group represented by Formula (X3) will be shown below, but the present invention is not limited to the examples. * represents a bond to a sulfur atom.

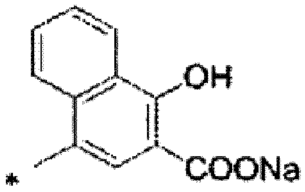

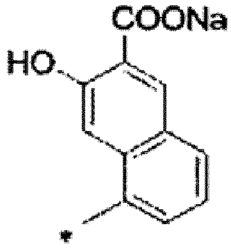

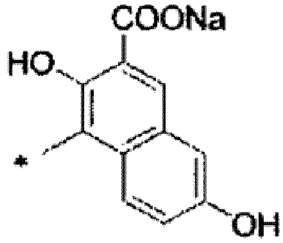

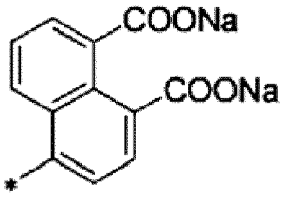

It is preferable that the compound represented by Formula (1) is a compound represented by the following Formula (2), (3), or (4).

Formula (2)

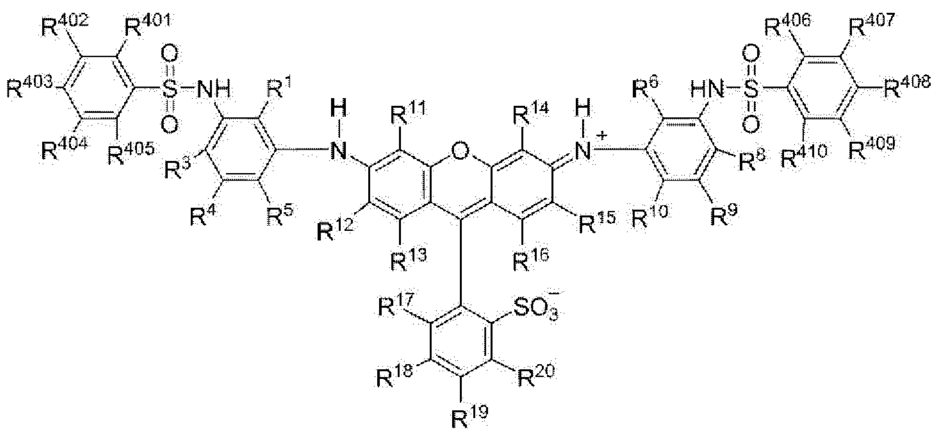

In Formula (2), $R^1$, $R^5$, $R^6$, and $R^{10}$ each independently represent an alkyl group. $R^4$, $R^9$, $R^{11}$, $R^{12}$, $R^{13}$, $R^{14}$, $R^{15}$, $R^{16}$, $R^{17}$, $R^{18}$, $R^{19}$, and $R^{20}$ each independently represent a hydrogen atom or a substituent. $R^3$ and $R^8$ each independently represent a hydrogen atom or an alkyl group. $R^{401}$, $R^{402}$, $R^{403}$, $R^{404}$, and $R^{405}$ each independently represent a hydrogen atom or a substituent. $R^{401}$, $R^{402}$, $R^{403}$, $R^{404}$, and $R^{405}$ satisfy the following condition (i-1) or (ii-1). $R^{406}$, $R^{407}$, $R^{408}$, $R^{409}$, and $R^{410}$ each independently represent a hydrogen atom or a substituent. $R^{406}$, $R^{407}$, $R^{408}$, $R^{409}$, and $R^{410}$ satisfy the following condition (i-2) or (ii-2).

Condition (i-1): at least one of $R^{401}$, $R^{402}$, $R^{403}$, $R^{404}$, or $R^{405}$ represents a hydroxyl group and at least one of $R^{401}$, $R^{402}$, $R^{403}$, $R^{404}$, or $R^{405}$ represents a carboxyl group

Condition (ii-1): at least two of $R^{401}$, $R^{402}$, $R^{403}$, $R^{404}$, or $R^{405}$ represent a carboxyl group

Condition (i-2): at least one of $R^{406}$, $R^{407}$, $R^{408}$, $R^{409}$, or $R^{410}$ represents a hydroxyl group and at least one of $R^{406}$, $R^{407}$, $R^{408}$, $R^{409}$, or $R^{410}$ represents a carboxyl group

Condition (ii-2): at least two of $R^{406}$, $R^{407}$, $R^{408}$, $R^{409}$, or $R^{410}$ represent a carboxyl group

Formula (3)

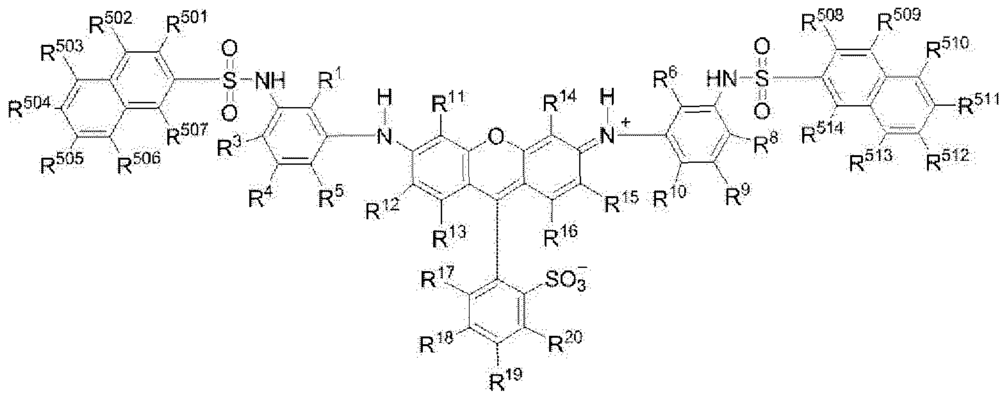

In Formula (3), $R^1$, $R^5$, $R^6$, and $R^{10}$ each independently represent an alkyl group. $R^4$, $R^9$, $R^{11}$, $R^{12}$, $R^{13}$, $R^{14}$, $R^{15}$, $R^{16}$, $R^{17}$, $R^{18}$, $R^{19}$, and $R^{20}$ each independently represent a hydrogen atom or a substituent. $R^3$ and $R^8$ each independently represent a hydrogen atom or an alkyl group. $R^{501}$, $R^{502}$, $R^{503}$, $R^{504}$, $R^{505}$, $R^{506}$, and $R^{507}$ each independently represent a hydrogen atom or a substituent. $R^{501}$, $R^{502}$, $R^{503}$, $R^{504}$, $R^{505}$, $R^{506}$, and $R^{507}$ satisfy the following condition (iii-1) or (iv-1). $R^{508}$, $R^{509}$, $R^{510}$, $R^{511}$, $R^{512}$, $R^{513}$, and $R^{514}$ each independently represent a hydrogen atom or a substituent. $R^{508}$, $R^{509}$, $R^{510}$, $R^{511}$, $R^{512}$, $R^{513}$, and $R^{514}$ satisfy the following condition (iii-2) or (iv-2).

Condition (iii-1): at least one of $R^{501}$, $R^{502}$, $R^{503}$, $R^{504}$, $R^{505}$, $R^{506}$, or $R^{507}$ represents a hydroxyl group and at least one of $R^{501}$, $R^{502}$, $R^{503}$, $R^{504}$, $R^{505}$, $R^{506}$, or $R^{507}$ represents a carboxyl group

Condition (iv-1): at least two of $R^{501}$, $R^{502}$, $R^{503}$, $R^{504}$, $R^{505}$, $R^{506}$, or $R^{507}$ represent a carboxyl group

Condition (iii-2): at least one of $R^{508}$, $R^{509}$, $R^{510}$, $R^{511}$, $R^{512}$, $R^{513}$, and $R^{514}$ represents a hydroxyl group and at least one of $R^{508}$, $R^{509}$, $R^{510}$, $R^{511}$, $R^{512}$, $R^{513}$, and $R^{514}$ represents a carboxyl group

Condition (iv-2): at least two of $R^{508}$, $R^{509}$, $R^{510}$, $R^{511}$, $R^{512}$, $R^{513}$, and $R^{514}$ represent a carboxyl group

Formula (4)

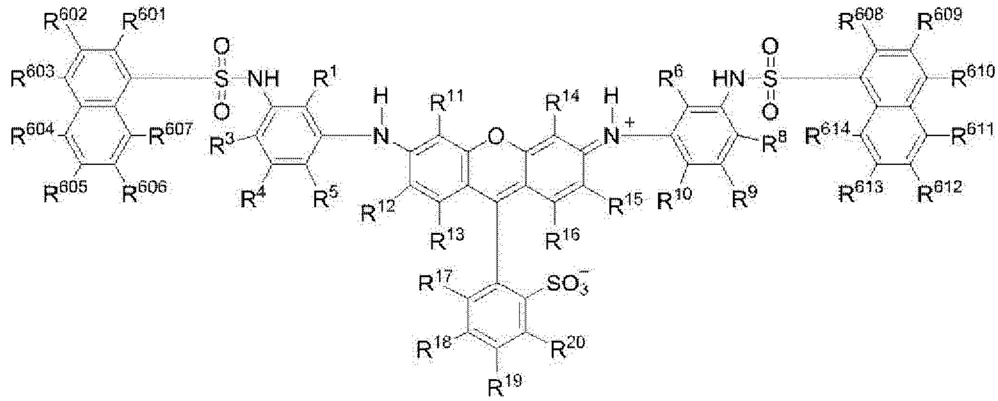

In Formula (4), $R^1$, $R^5$, $R^6$, and $R^{10}$ each independently represent an alkyl group. $R^4$, $R^9$, $R^{11}$, $R^{12}$, $R^{13}$, $R^{14}$, $R^{15}$, $R^{16}$, $R^{17}$, $R^{18}$, $R^{19}$, and $R^{20}$ each independently represent a hydrogen atom or a substituent. $R^3$ and $R^8$ each independently represent a hydrogen atom or an alkyl group. $R^{601}$, $R^{602}$, $R^{603}$, $R^{604}$, $R^{605}$, $R^{606}$, and $R^{607}$ each independently represent a hydrogen atom or a substituent. $R^{601}$, $R^{602}$, $R^{603}$, $R^{604}$, $R^{605}$, $R^{606}$, and $R^{607}$ satisfy the following condition (v-1) or (vi-1). $R^{608}$, $R^{609}$, $R^{610}$, $R^{611}$, $R^{612}$, $R^{613}$, and $R^{614}$ each independently represent a hydrogen atom or a substituent. $R^{608}$, $R^{609}$, $R^{610}$, $R^{611}$, $R^{612}$, $R^{613}$, and $R^{614}$ satisfy the following condition (v-2) or (vi-2).

Condition (v-1): at least one of $R^{601}$, $R^{602}$, $R^{603}$, $R^{604}$, $R^{605}$, $R^{606}$, or $R^{607}$ represents a hydroxyl group and at least one of $R^{601}$, $R^{602}$, $R^{603}$, $R^{604}$, $R^{605}$, $R^{606}$, or $R^{607}$ represents a carboxyl group

Condition (vi-1): at least two of $R^{601}$, $R^{602}$, $R^{603}$, $R^{604}$, $R^{605}$, $R^{606}$, or $R^{607}$ represent a carboxyl group

Condition (v-2): at least one of $R^{608}$, $R^{609}$, $R^{610}$, $R^{611}$, $R^{612}$, $R^{613}$, or $R^{614}$ represents a hydroxyl group and at least one of $R^{608}$, $R^{609}$, $R^{610}$, $R^{611}$, $R^{612}$, $R^{613}$, or $R^{614}$ represents a carboxyl group

Condition (vi-2): at least two of $R^{608}$, $R^{609}$, $R^{610}$, $R^{611}$, $R^{612}$, $R^{613}$, or $R^{614}$ represent a carboxyl group

$R^1$, $R^4$, $R^5$, $R^6$, $R^9$, $R^{10}$, $R^{11}$, $R^{12}$, $R^{13}$, $R^{14}$, $R^{15}$, $R^{16}$, $R^{17}$, $R^{18}$, $R^{19}$, and $R^{20}$ in Formula (2) have the same definitions and the same preferable ranges as $R^1$, $R^4$, $R^5$, $R^6$, $R^9$, $R^{10}$, $R^{11}$, $R^{12}$, $R^{13}$, $R^{14}$, $R^{15}$, $R^{16}$, $R^{17}$, $R^{18}$, $R^{19}$, and $R^{20}$ in Formula (1), respectively.

$R^3$ and $R^8$ in Formula (2) each independently represent a hydrogen atom or an alkyl group and preferably an alkyl group. As the alkyl group, an alkyl group having 1 to 6 carbon atoms is preferable, an alkyl group having 1 to 3 carbon atoms is more preferable, and a methyl group or an ethyl group is still more preferable. In addition, the alkyl group may have a substituent, and this substituent is selected from, for example, the substituent group A.

It is preferable that $R^{401}$, $R^{402}$, $R^{403}$, $R^{404}$, and $R^{405}$ in Formula (2) satisfy the condition (i-1). That is, it is preferable that at least one of $R^{401}$, $R^{402}$, $R^{403}$, $R^{404}$, or $R^{405}$ represents a hydroxyl group and at least one of $R^{401}$, $R^{402}$, $R^{403}$, $R^{404}$, or $R^{405}$ represents a carboxyl group. $R^{401}$, $R^{402}$, $R^{403}$, $R^{404}$, and $R^{405}$ have the same preferable ranges as $R^{401}$, $R^{402}$, $R^{403}$, $R^{404}$, and $R^{405}$ in Formula (X1), respectively.

It is preferable that $R^{406}$, $R^{407}$, $R^{408}$, $R^{409}$, and $R^{410}$ in Formula (2) satisfy the condition (i-2). That is, it is preferable that at least one of $R^{406}$, $R^{407}$, $R^{408}$, $R^{409}$, or $R^{410}$ represents a hydroxyl group and at least one of $R^{406}$, $R^{407}$, $R^{408}$, $R^{409}$, or $R^{410}$ represents a carboxyl group. $R^{406}$, $R^{407}$, $R^{408}$, $R^{409}$, and $R^{410}$ have the same preferable ranges as $R^{401}$, $R^{402}$, $R^{403}$, $R^{404}$, and $R^{405}$ in Formula (2), respectively.

$R^1$, $R^4$, $R^5$, $R^6$, $R^9$, $R^{10}$, $R^{11}$, $R^{12}$, $R^{13}$, $R^{14}$, $R^{15}$, $R^{16}$, $R^{17}$, $R^{18}$, $R^{19}$, and $R^{20}$ in Formula (3) have the same definitions and the same preferable ranges as $R^1$, $R^4$, $R^5$, $R^6$, $R^9$, $R^{10}$, $R^{11}$, $R^{12}$, $R^{13}$, $R^{14}$, $R^{15}$, $R^{16}$, $R^{17}$, $R^{18}$, $R^{19}$, and $R^{20}$ in Formula (1), respectively.

$R^3$ and $R^8$ in Formula (3) each independently represent a hydrogen atom or an alkyl group and preferably an alkyl group. As the alkyl group, an alkyl group having 1 to 6 carbon atoms is preferable, an alkyl group having 1 to 3 carbon atoms is more preferable, and a methyl group or an ethyl group is still more preferable. In addition, the alkyl group may have a substituent, and this substituent is selected from, for example, the substituent group A.

It is preferable that $R^{501}$, $R^{502}$, $R^{503}$, $R^{504}$, $R^{505}$, $R^{506}$, and $R^{507}$ in Formula (3) satisfy the condition (iii-1). That is, it is preferable that at least one of $R^{501}$, $R^{502}$, $R^{503}$, $R^{504}$, $R^{505}$, $R^{506}$, or $R^{507}$ represents a hydroxyl group and at least one of $R^{501}$, $R^{502}$, $R^{503}$, $R^{504}$, $R^{505}$, $R^{506}$, or $R^{507}$ represents a carboxyl group. $R^{501}$, $R^{502}$, $R^{503}$, $R^{504}$, $R^{505}$, $R^{506}$, and $R^{507}$ have the same preferable ranges as $R^{501}$, $R^{502}$, $R^{503}$, $R^{504}$, $R^{505}$, $R^{506}$, and $R^{507}$ in Formula (X2), respectively.

It is preferable that $R^{508}$, $R^{509}$, $R^{510}$, $R^{511}$, $R^{512}$, $R^{513}$, and $R^{514}$ in Formula (3) satisfy the condition (iii-2). That is, it is preferable that at least one of $R^{508}$, $R^{509}$, $R^{510}$, $R^{511}$, $R^{512}$, $R^{513}$, or $R^{514}$ represents a hydroxyl group and at least one of $R^{508}$, $R^{509}$, $R^{510}$, $R^{511}$, $R^{512}$, $R^{513}$, or $R^{514}$ represents a carboxyl group. $R^{508}$, $R^{509}$, $R^{510}$, $R^{511}$, $R^{512}$, $R^{513}$, and $R^{514}$ have the same preferable ranges as $R^{501}$, $R^{502}$, $R^{503}$, $R^{504}$, $R^{505}$, $R^{506}$, and $R^{507}$ in Formula (3), respectively.

$R^1$, $R^4$, $R^5$, $R^6$, $R^9$, $R^{10}$, $R^{11}$, $R^{12}$, $R^{13}$, $R^{14}$, $R^{15}$, $R^{16}$, $R^{17}$, $R^{18}$, $R^{19}$, and $R^{20}$ in Formula (4) have the same definitions and the same preferable ranges as $R^1$, $R^4$, $R^5$, $R^6$, $R^9$, $R^{10}$, $R^{11}$, $R^{12}$, $R^{13}$, $R^{14}$, $R^{15}$, $R^{16}$, $R^{17}$ , $R^{18}$, $R^{19}$, and $R^{20}$ in Formula (1), respectively.

$R^3$ and $R^8$ in Formula (4) each independently represent a hydrogen atom or an alkyl group and preferably an alkyl group. As the alkyl group, an alkyl group having 1 to 6 carbon atoms is preferable, an alkyl group having 1 to 3 carbon atoms is more preferable, and a methyl group or an ethyl group is still more preferable. In addition, the alkyl group may have a substituent, and this substituent is selected from, for example, the substituent group A.

It is preferable that $R^{601}$, $R^{602}$, $R^{603}$, $R^{604}$, $R^{605}$, $R^{606}$, and $R^{607}$ in Formula (4) satisfy the condition (v-1). That is, it is preferable that at least one of $R^{601}$, $R^{602}$, $R^{603}$, $R^{604}$, $R^{605}$, $R^{606}$, or $R^{607}$ represents a hydroxyl group and at least one of $R^{601}$, $R^{602}$, $R^{603}$, $R^{604}$, $R^{605}$, $R^{606}$, or $R^{607}$ represents a carboxyl group. $R^{601}$, $R^{602}$, $R^{603}$, $R^{604}$, $R^{605}$, $R^{606}$, and $R^{607}$ have the same preferable ranges as $R^{601}$, $R^{602}$, $R^{603}$, $R^{604}$, $R^{605}$, $R^{606}$, and $R^{607}$ in Formula (X3), respectively.

It is preferable that $R^{608}$, $R^{609}$, $R^{610}$, $R^{611}$, $R^{612}$, $R^{613}$, and $R^{614}$ in Formula (4) satisfy the condition (v-2). That is, it is preferable that at least one of $R^{608}$, $R^{609}$, $R^{610}$, $R^{611}$, $R^{612}$, $R^{613}$, or $R^{614}$ represents a hydroxyl group and at least one of $R^{608}$, $R^{609}$, $R^{610}$ , $R^{611}$, $R^{612}$, $R^{613}$, or $R^{614}$ represents a carboxyl group. $R^{608}$, $R^{609}$, $R^{610}$, $R^{611}$, $R^{612}$, $R^{613}$, and $R^{614}$ have the same preferable ranges as $R^{601}$, $R^{602}$ , $R^{603}$, $R^{604}$, $R^{605}$, $R^{606}$ , and $R^{607}$ in Formula (4), respectively.

Hereinafter, specific examples of the compound represented by Formula (1) will be shown, but the present invention is not limited thereto. In the following specific structural formulae of the compounds, Me represents a methyl group, and Et represents an ethyl group.

(1-1)

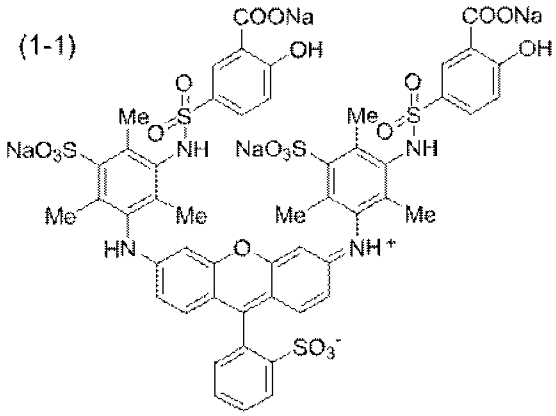

(1-2)

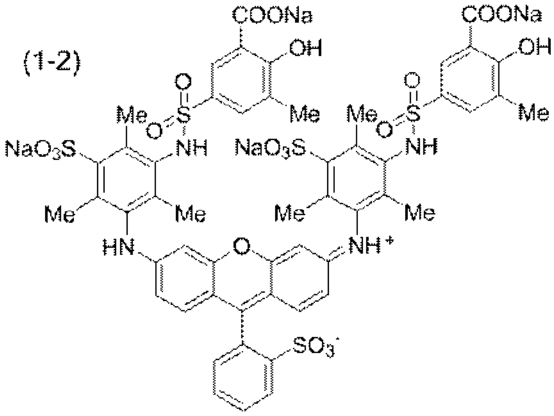

(1-3)

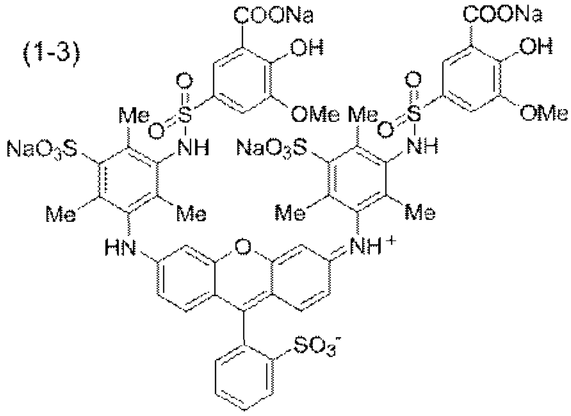

(1-4)

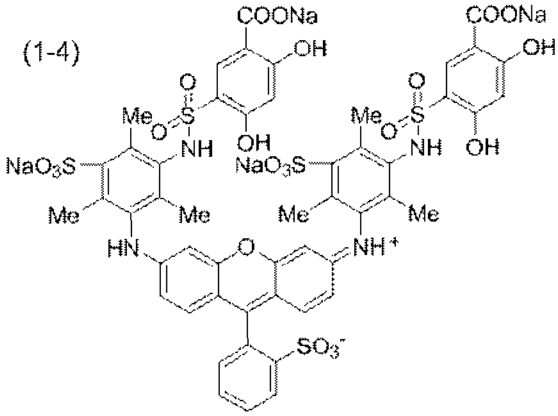

(1-5)

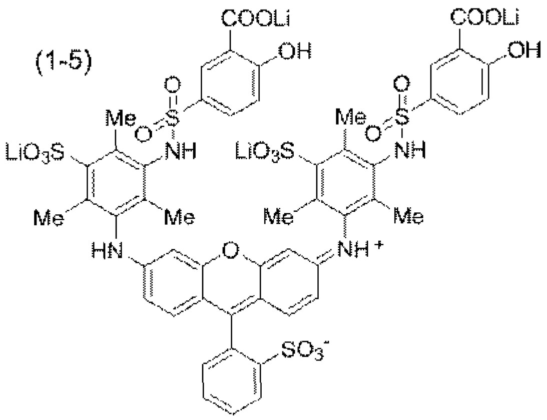

(1-6)

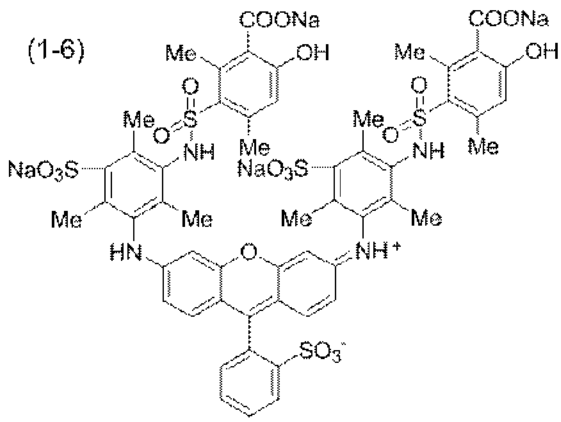

(1-7)

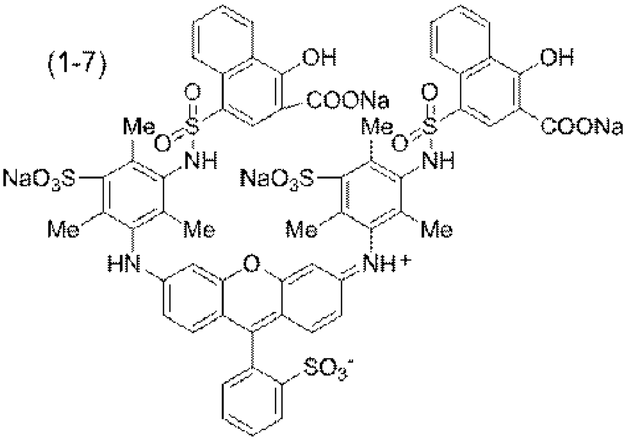

(1-8)

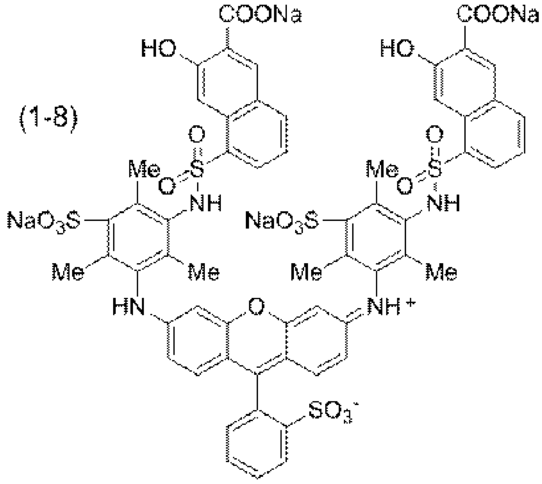

(1-9)

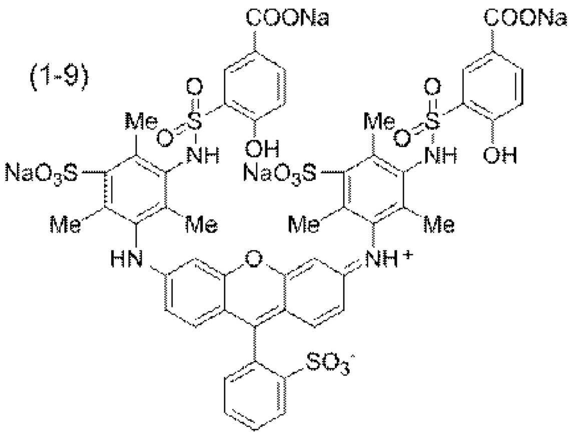

(1-10)

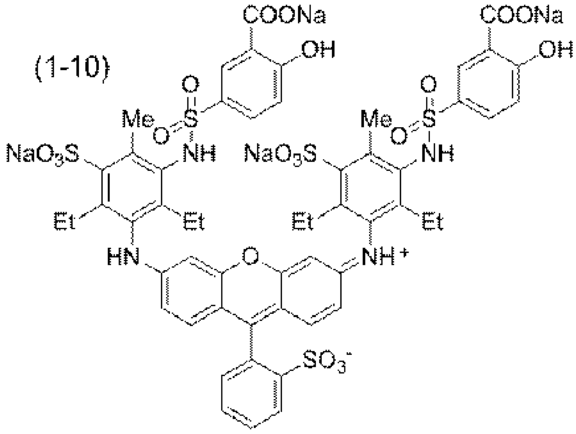

(1-11)

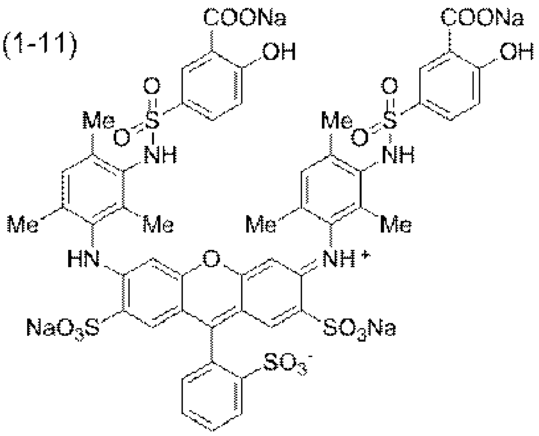

(1-12)

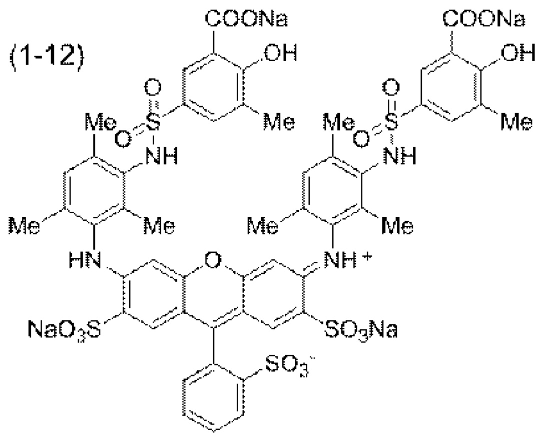

(1-13)

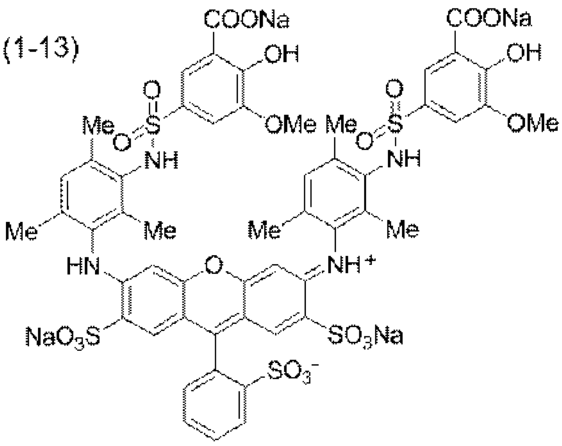

(1-14)

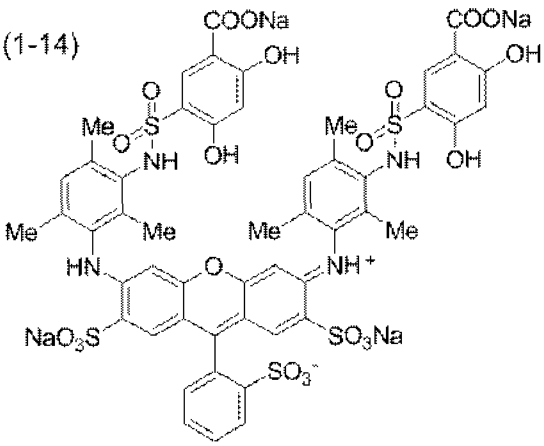

(1-15)

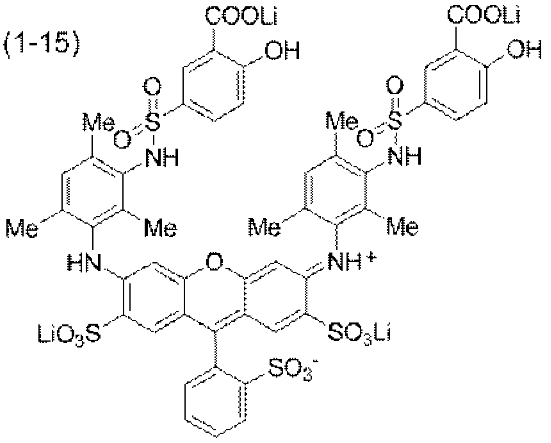

(1-16)

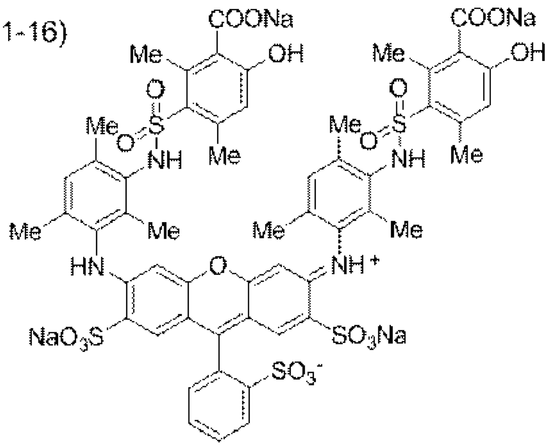

(1-17)

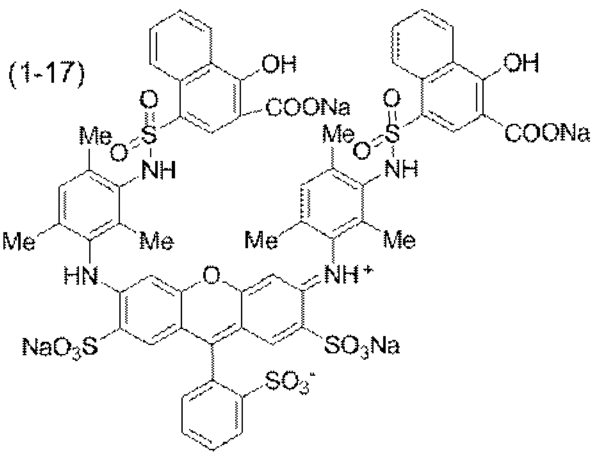

(1-18)

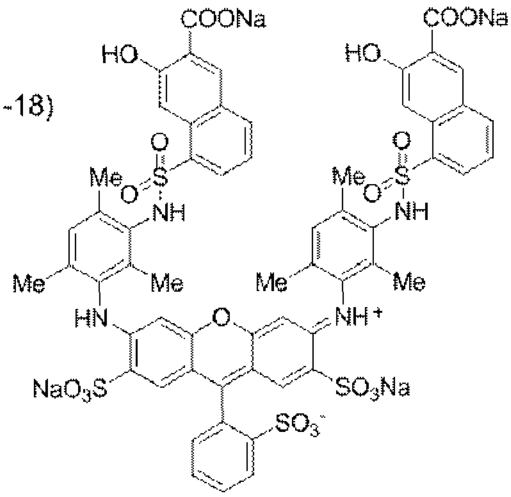

(1-19)

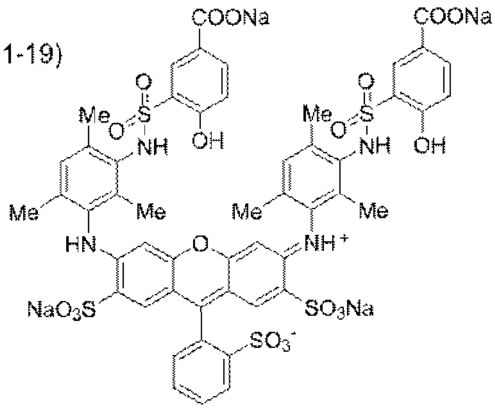

(1-20)

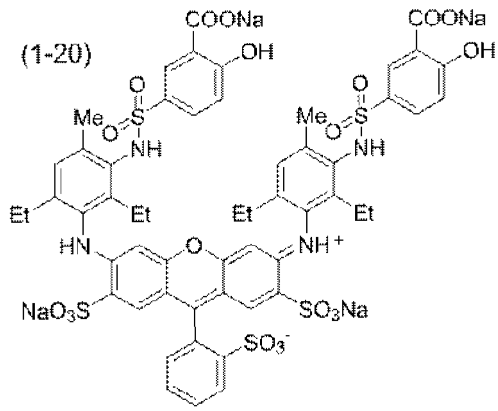

(1-21)

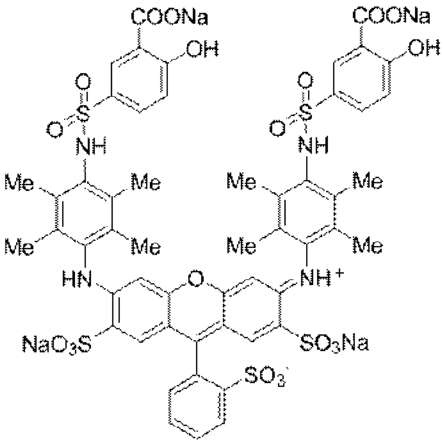

(1-22)

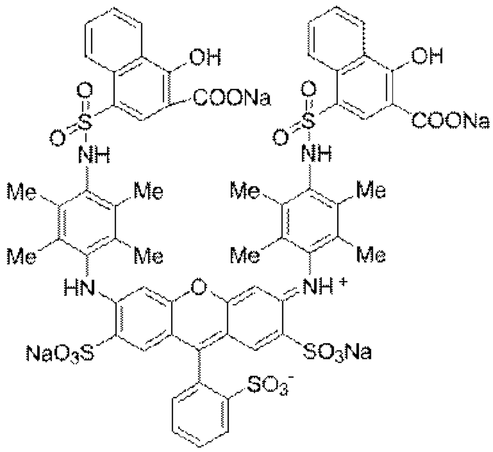

(1-23)

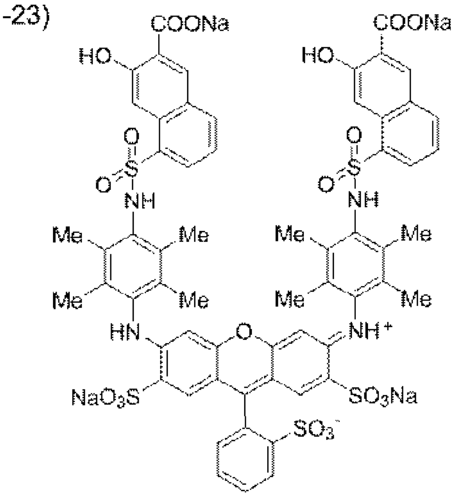

(1-24)

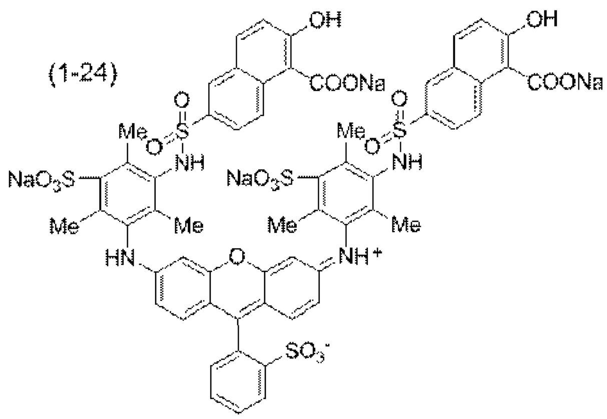

(1-25)

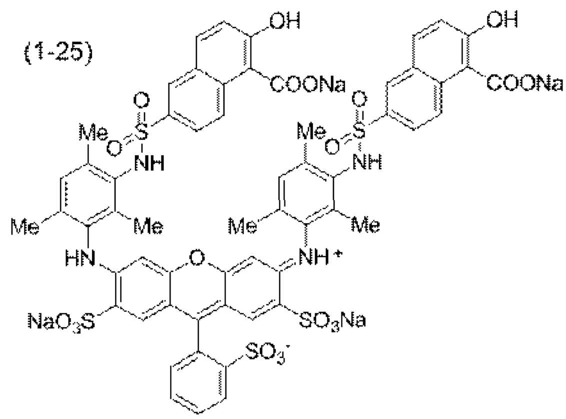

(1-26)

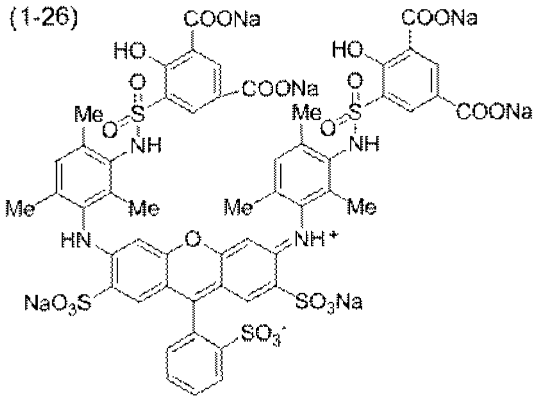

(1-27)

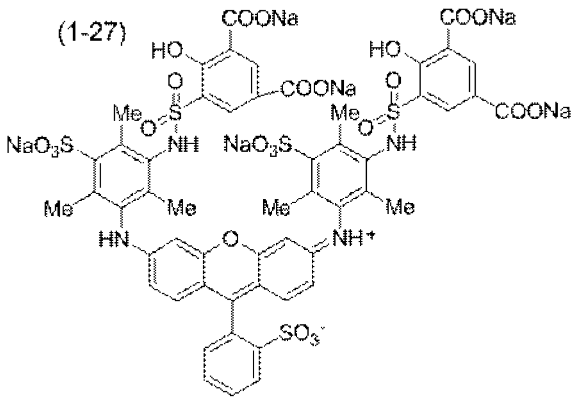

(1-28)

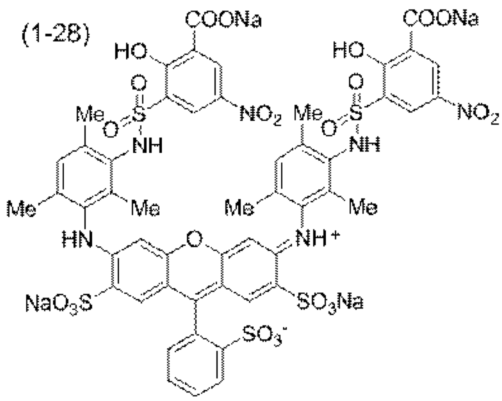

(1-29)

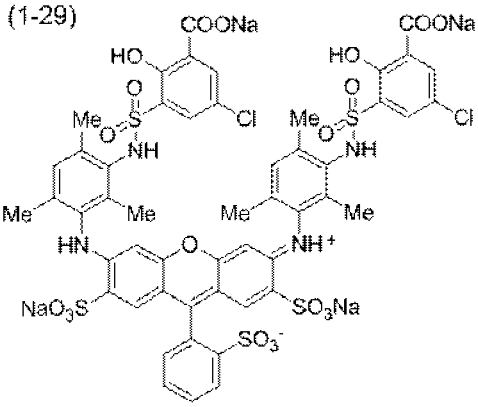

(1-30)

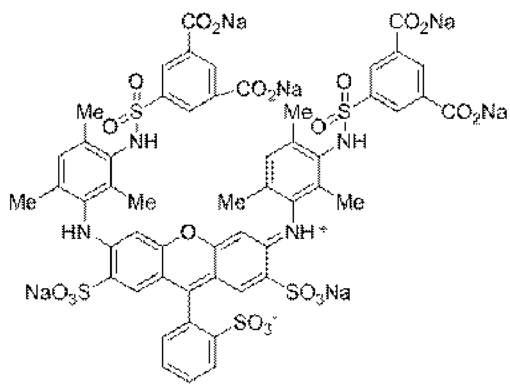

(1-31)

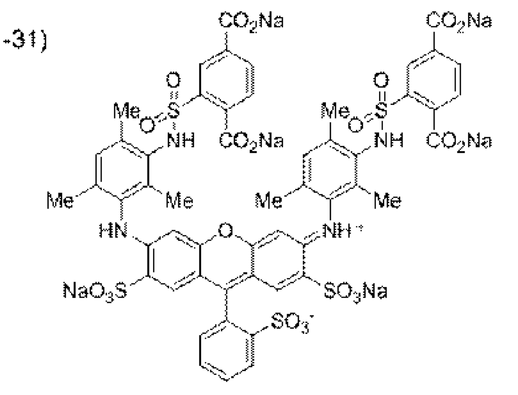

(1-32)

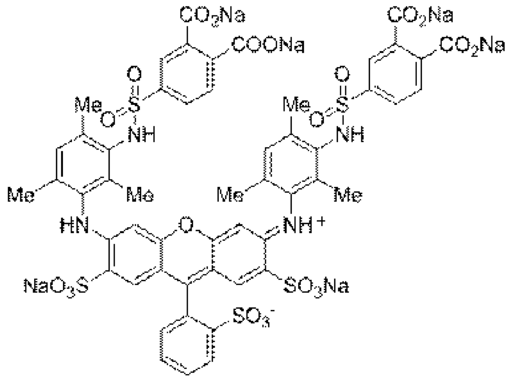

(1-33)

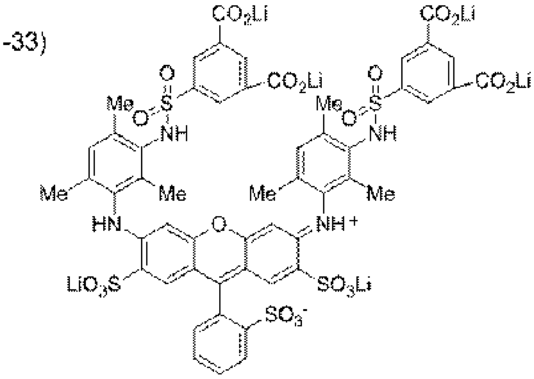

(1-34)

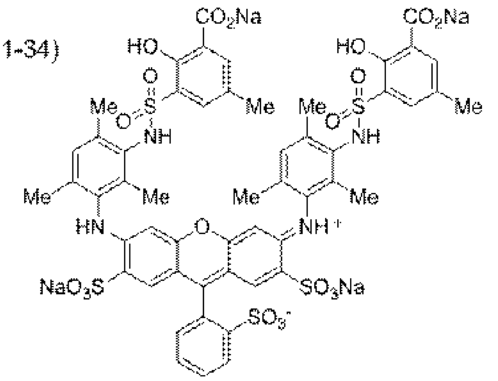

(1-35)

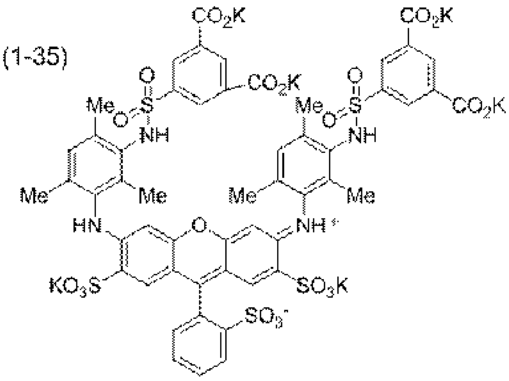

An exemplary specific synthesis method of the compound represented by Formula (1) will be described in Examples below.

[Compound represented by Formula (D)]

Formula (D)

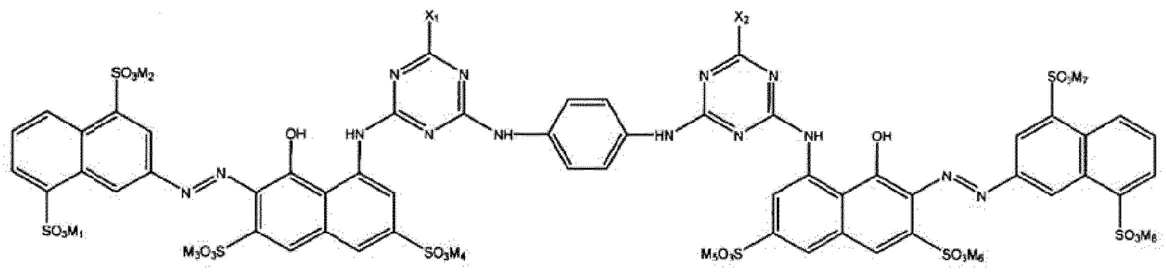

In Formula (D), $X_1$ and $X_2$ each independently represent a chlorine atom, a hydroxyl group, or an amino group. $M_1$ to $M_8$ each independently represent a hydrogen atom, an ammonium ion, an alkali metal ion, or an organic cation.

It is preferable that $X_1$ and $X_2$ each independently represent a chlorine atom, a hydroxyl group, or an amino group. In particular, a chlorine atom or a hydroxyl group is preferable, and a chlorine atom is most preferable from the viewpoint of raw material availability.

$M_1$ to $M_8$ each independently represent preferably a hydrogen atom, an ammonium ion, an alkali metal ion, or an organic cation, more preferably a hydrogen atom, an ammonium ion, or an alkali metal ion, and most preferably a hydrogen atom or an alkali metal ion.

In a case where a -SO3$M_1$ group to a -$SO_3M_8$ group form a salt (-$SO_3^-M^+$), examples of the counter ions ($M_1$ to $M_8$) each independently include an ammonium ion, an alkali metal ion (for example, a lithium ion, a sodium ion, or a potassium ion), and an organic cation (for example, a tetramethylammonium ion, a tetramethylguanidium ion, and tetramethylphosphonium ion). Among the counter ions, an alkali metal salt is preferable from the viewpoint of water

solubility. As the alkali metal salt, a potassium ion, a sodium ion, or a lithium ion is preferable, a lithium ion or a sodium ion is more preferable, and a sodium ion is most preferable.

From the viewpoint of water solubility, the compound represented by Formula (D) has preferably 4 to 8 salts ($-SO_3^-M^+$) in a molecule, more preferably 5 to 8 salts ($-SO_3^-M^+$), and still more preferably 6 to 8 salts ($-SO_3^-M^+$).

It is preferable that the compound represented by the formula (D) is a compound represented by the following Formula (D2).

Formula (D2)

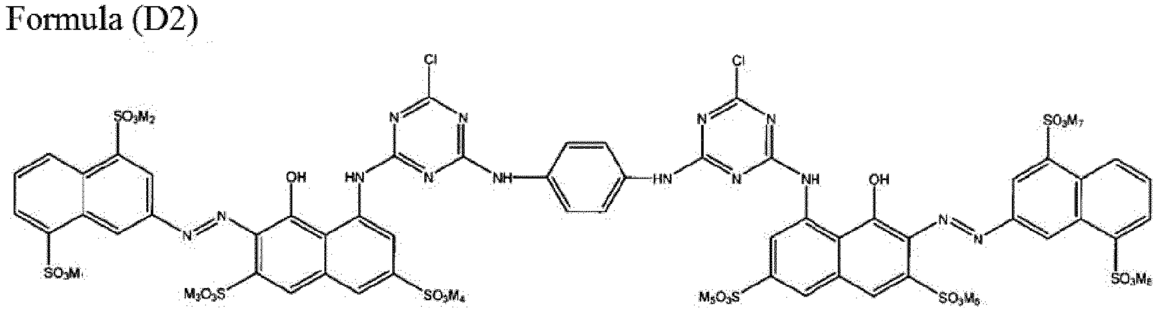

In Formula (D2), $M_1$ to $M_8$ each independently represent a hydrogen atom, an ammonium ion, an alkali metal ion, or an organic cation.

$M_1$ to $M_8$ each independently represent preferably a hydrogen atom, an ammonium ion, an alkali metal ion, or an organic cation, more preferably a hydrogen atom, an ammonium ion, or an alkali metal ion, and most preferably a hydrogen atom or an alkali metal ion.

Preferable examples of $M_1$ to $M_8$ in Formula (D2) have the definition and the same preferable combination as the preferable examples of $M_1$ to $M_8$ in Formula (D).

Specific examples of the compound represented by Formula (D) will be shown below, but the present invention is not limited thereto. In the following specific examples, the $-SO_3M_1$ group to the $-SO_3M_8$ group may be in the form of a free acid ($-SO_3H$) or in the form of a salt ($-SO_3^-M^+$).

(Exemplary Compound d-1)

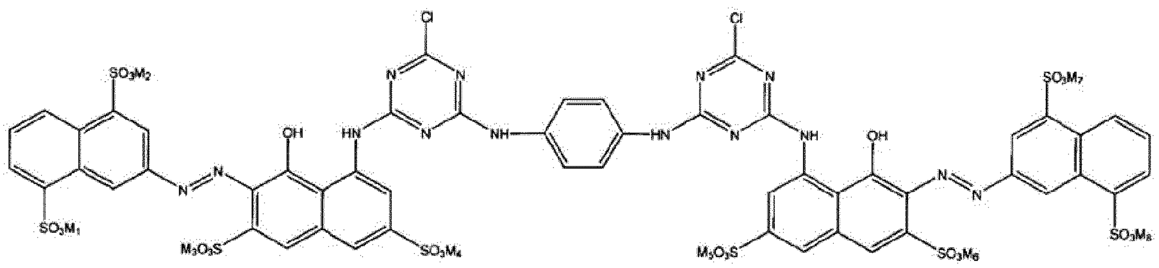

(Exemplary Compound d-2)

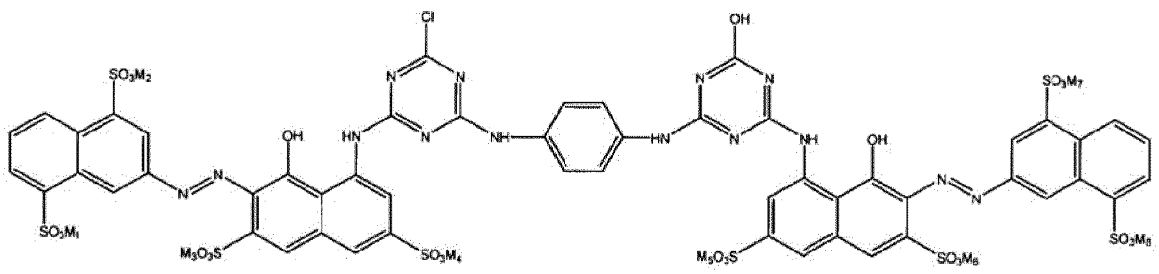

(Exemplary Compound d-3)

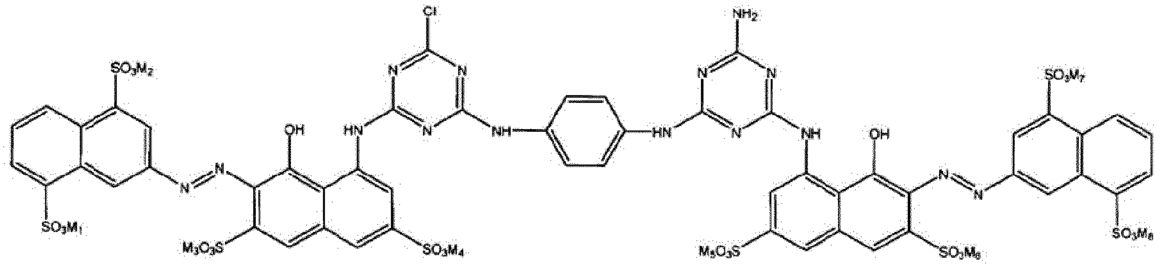

(Exemplary Compound d-4)

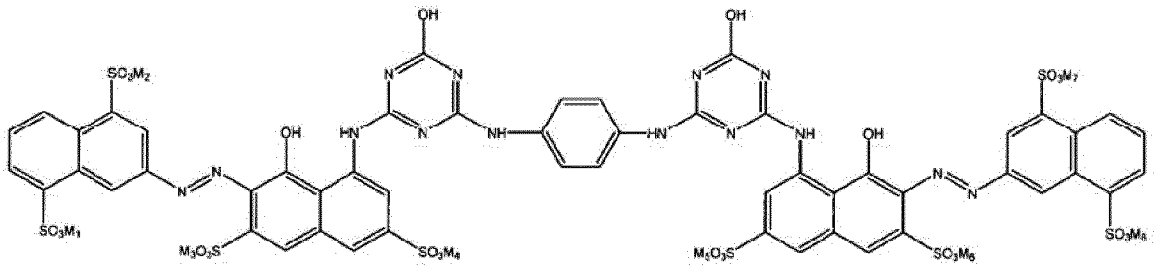

(Exemplary Compound d-5)

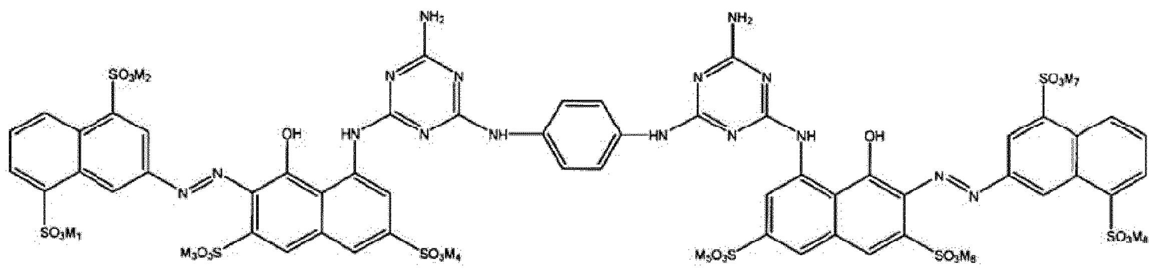

[Coloring Composition]

A coloring composition according to the present invention includes: a compound represented by Formula (1); and a compound represented by Formula (D).

The coloring composition according to the embodiment of the present invention may further include a medium and, in a case where a solvent is used as the medium, is suitable as an ink jet recording ink. The coloring composition according to the embodiment of the present invention can be prepared by using a lipophilic medium or an aqueous medium as the medium and dissolving and/or dispersing the compound represented by Formula (1) therein. It is preferable that an aqueous medium is used as the medium. Examples of the coloring composition according to the embodiment of the present invention include an ink composition excluding a medium.

The content of the compound represented by Formula (1) in the coloring composition is determined based on, for example, the kind of the compound represented by Formula (1), and the kind of the solvent component used for manufacturing the coloring composition. The content of the compound represented by Formula (1) in the coloring composition is preferably 0.1 to 20 mass%, more preferably 0.2 to 20 mass%, still more preferably 1 to 20 mass%, still more preferably 1 to 3.5 mass%, and most preferably 1 to 3 mass% with respect to the total mass of the coloring composition.

The content of the compound represented by Formula (D) in the coloring composition is preferably 0.1 to 3.0

mass%, more preferably 0.1 to 2.5 mass%, still more preferably 0.1 to 2.0 mass%, and most preferably 1.5 mass% or lower with respect to the total mass of the coloring composition.

The total content of the compound represented by Formula (1) and the compound represented by Formula (D) in the coloring composition is preferably 1 to 5 mass%, more preferably 1 to 3.5 mass%, still more preferably 1 to 3 mass%, still more preferably 2.0 to 3.5 mass%, and most preferably 2.0 to 3.0 mass%.

By adjusting the total content of the compound represented by Formula (1) and the compound represented by Formula (D) in the coloring composition to be 1 mass% or higher, the printing density of ink on a recording medium during printing can be improved. In addition, by adjusting the total content of the compound represented by Formula (1) in the coloring composition to be 3.0 mass% or lower, in a case where the coloring composition is used in an ink jet recording method, the jettability is excellent, and an effect of preventing the clogging or the like of an ink jet nozzle can be obtained.

From the viewpoints of a balance between color (chroma), adhesion (color developability), light fastness, ozone fastness, and moisture resistance, a mass ratio {Formula (1)/Formula (D)} of the content of the compound represented by Formula (1) to the content of the compound represented by Formula (D) is preferably {99/1} to {50/50}, more preferably {99/1} to {60/40}, still more preferably {99/1} to {70/30}, particularly preferably {99/1} to {80/20}, more particularly preferably {99/1} to {90/10}, and still more particularly preferably {99/1} to {95/5}.

The coloring composition according to the embodiment of the present invention optionally includes other additives within a range where the effects of the present invention are exhibited. The coloring composition according to the embodiment of the present invention can be preferably used as an ink jet recording ink.

[Ink Jet Recording Ink] An ink jet recording ink can be prepared by dissolving and/or dispersing the compound represented by Formula (1) and the compound represented by Formula (D) in a lipophilic medium or an aqueous medium. In the ink jet recording ink, an aqueous medium is preferably used.

The ink jet recording ink according to the embodiment of the present invention optionally includes other additives within a range where the effects of the present invention are exhibited. Examples of the other additives include well-known additives such as an anti-drying agent (wetting agent), an antifading agent, an emulsion stabilizer, a penetration enhancer, a ultraviolet absorber, a preservative, a fungicide, a pH adjuster, a surface tension adjuster, an antifoaming agent, a viscosity adjuster, a dispersant, a dispersion stabilizer, a rust inhibitor, a chelating agent, or a betaine compound. In the case of a water-soluble ink, these various additives can be directly added to the ink solution. In a case where an oil-soluble dye is used in the form of a dispersion, in general, the additives are added to a dye dispersion after the preparation of the dispersion. However, the additives may be added in the form of an oil phase or a water phase during the preparation.

The anti-drying agent is preferably used to prevent clogging caused by the ink jet recording ink being dried at an ink jetting port of a nozzle used in an inkjet recording method.

As the anti-drying agent, a water-soluble organic solvent having a lower vapor pressure than water is preferable. Specific examples of the water-soluble organic solvent which is preferable to prevent drying include: a polyhydric alcohol such as ethylene glycol, propylene glycol, diethylene glycol, polyethylene glycol, thiodiglycol, dithiodiglycol, 2-methyl-1,3-propanediol, 1,2,6-hexanetriol, an acetylenic glycol derivative, glycerin, or trimethylolpropane; a polyhydric alcohol lower alkyl ether such as ethylene glycol monomethyl (or ethyl) ether, diethylene glycol monomethyl (or ethyl) ether, or triethylene glycol monoethyl (or butyl) ether; a heterocycle such as 2-pyrrolidone, N-methyl-2-pyrrolidone, 1,3-dimethyl-2-imidazolidinone, or N-ethylmorpholine; a sulfur-containing compound such as sulfolane, dimethyl sulfoxide, or 3-sulfolane; a polyfunctional compound such as diacetone alcohol or diethanolamine; and a urea derivative. Among these, a polyhydric alcohol such as glycerin or diethylene glycol is more preferable. In addition, among the above-described anti-drying agents, one kind may be used alone, or a combination of two or more kinds may be used. The content of the anti-drying agent in the ink is preferably 10 to 50 mass%.

The penetration enhancer is used in order to enhance the penetration of the ink jet recording ink into paper. As the penetration enhancer, for example, an alcohol such as ethanol, isopropanol, butanol, di(tri)ethylene glycol monobutyl ether, or 1,2-hexanediol, sodium lauryl sulfate, sodium oleate, or a nonionic surfactant can be used. Typically, the penetration enhancer sufficiently functions in a case where the addition amount thereof is 5 to 30 mass%. It is preferable that the penetration enhancer is used in an addition amount range where blurring of printed characters and images or page omission (print through) do not occur.

The ultraviolet absorber can be used in order to improve storage of images. As the ultraviolet absorber, for example, a benzotriazole compound described in JP1983-185677A (JP-S58-185677A), JP1986-190537A (JP-S61-190537A), JP1990-000782A (JP-H2-000782A), JP1993-197075A (JP-H5-197075A), and JP1997-034057A (JP-H9-034057A), a benzophenone compound described in JP1971-002784A (JP-S46-002784A), JP1993-194483A (JP-H5-194483A), and US3214463A, a cinnamic acid compound described in JP1973-30492B (JP-S48-30492B), JP1981-21141B (JP-S56-21141B), and JP1998-088106A (JP-H10-088106A), a triazine compound described in JP1992-298503A (JP-H4-298503A), JP1996-053427A (JP-H8-053427A), JP1996-239368A (JP-H8-239368A), JP1999-182621A (JP-H10-182621A), and JP1996-501291A (JP-H8-501291A), a compound described in Research

Disclosure No.24239, or a so-called fluorescence brightening agent that is a compound that absorbs ultraviolet light to emit fluorescence such as a stilbene compound or a benzoxazol compound can also be used.

The antifading agent can be used in order to improve storage of images. As the antifading agent, various organic antifading agents or metal complexes can be used. Examples of the organic antifading agent include hydroquinones, alkoxyphenols, dialkoxyphenols, phenols, anilines, amines, indanes, chromans, alkoxyanilines, and heterocycles. Examples of the metal complex include a nickel complex and a zinc complex. Specifically, compounds described in the patents which are cited in Sections I to J in No. VII in Research Disclosure No. 17643, Research Disclosure No. 15162, the left column in page 650 in Research Disclosure No. 18716, page 527 in Research Disclosure No. 36544, page 872 in Research Disclosure No. 307105, and Research Disclosure No. 15162, or compounds which are included in formulae and compound examples of representative compounds described in page 127 to page 137 in JP1987-215272A (JP-S62-215272A) can be used.

Examples of the fungicide include sodium dehydroacetate, sodium benzoate, sodium pyridinethione-1-oxide, p-hydroxybenzoic acid ethyl ester, 1,2-benzisothiazolin-3-one, and salts thereof. The amount of the fungicide used in the ink is preferably 0.02 to 1.00 mass%.

As the pH adjuster, a neutralizer (an organic base or an inorganic alkali) can be used. In order to improve storage stability of the ink jet recording ink, the pH adjuster is added such that the pH of the inkjet recording ink is preferably 6 to 10 and more preferably 7 to 10.

Examples of the surface tension adjuster include a nonionic surfactant, a cation surfactant, and an anionic surfactant. The surface tension of the ink jet recording ink according to the embodiment of the present invention is preferably 25 to 70 mN/m and more preferably 25 to 60 mN/m. The viscosity of the ink jet recording ink according to the embodiment of the present invention is preferably 30 mPa·s or lower and more preferably 20 mPa·s or lower. Preferable examples of the surfactant include: an anionic surfactant such as an fatty acid salt, an alkylsulfonate, an alkylbenzenesulfonate, an alkylnaphthalenesulfonate, a dialkylsulfosuccinate, an alkylphosphate, a naphthalene sulfonic acid formalin condensate, or a polyoxyethylene alkylsulfonate; and a nonionic surfactant such as polyoxyethylene alkyl ether, polyoxyethylene alkyl aryl ether, polyoxyethylene fatty acid ester, sorbitan fatty acid ester, polyoxyethylene sorbitan fatty acid ester, polyoxyethylene alkyl amine, glycerin fatty acid ester, or an oxyethyleneoxypropylene block copolymer. In addition, SURFYNOLS (manufactured by Air Products & Chemicals Inc.) that is an acetylene polyoxyethylene oxide surfactant can also be preferably used. In addition, for example, an amine oxide amphoteric surfactant such as N,N-dimethyl-N-alkyl amine oxide is also preferable. Further, for example, surfactants which are described in pp. 37 and 38 in JP1984-157636A (JP-S59-157636A) and Research Disclosure No. 308119 (1989) can be used.

As the antifoaming agent, for example, a fluorine compound, a silicone compound, or a chelating agent such as EDTA can also be optionally used.

The betaine compound can be used in order to prevent image blurring under a high-humidity condition. As the betaine compound, for example, a compound described in JP2004-285269A can be preferably used. Although a preferable range thereof varies depending on the kind thereof, the addition amount of the betaine compound in the ink jet recording ink is preferably 0.01 to 10.0 mass%, more preferably 0.01 to 5.0 mass%, and most preferably 0.01 to 3.0 mass%.

As the aqueous medium, a mixture including water as a major component and to which a water-miscible organic solvent is optionally added can be used. Examples of the water-miscible organic solvent include an alcohol (for example, methanol, ethanol, propanol, isopropanol, butanol, isobutanol, sec-butanol, t-butanol, pentanol, hexanol, cyclohexanol, or benzyl alcohol), a polyhydric alcohol (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol, or thiodiglycol), a glycol derivative (for example, ethylene glycol monomethyl ether, ethylene glycol monoethyl ether, ethylene glycol monobutyl ether, diethylene glycol monomethyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethylene glycol monomethyl ether acetate, triethylene glycol monoethyl ether, or ethylene glycol monophenyl ether), an amine (for example, ethanol amine, diethanol amine, triethanol amine, N-methyl diethanol amine, N-ethyl diethanol amine, morpholine, N-ethyl morpholine, ethylene diamine, diethylene triamine, triethylene tetramine, polyethyleneimine, or tetramethyl propylene diamine), and other polar solvents (for example, formamide, N,N-dimethyl formamide, N,N-dimethyl acetamide, dimethyl sulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile, or acetone). As the water-miscible organic solvent, two or more kinds may be used in combination.

The viscosity of the ink jet recording ink according to the embodiment of the present invention is preferably 30 mPa·s or lower. In addition, the surface tension of the ink jet recording ink according to the embodiment of the present invention is preferably 25 mN/m to 70 mN/m. The viscosity and the surface tension can be adjusted by adding various additives such as a viscosity adjuster, a surface tension adjuster, a specific resistance adjuster, a film conditioner, an ultraviolet absorber, an antioxidant, an antifading agent, a fungicide, a rust inhibitor, a dispersant, and a surfactant.

The inkjet recording ink according to the embodiment of the present invention can be used as any one of various

color inks but is preferably used as a magenta ink. In addition, the ink jet recording ink according to the embodiment of the present invention can be used not only for forming a monochromic image but also for forming a full color image. In order to form a full-color image, a magenta ink, a cyan ink, and a yellow ink can be used. In addition, in order to adjust the tone, a black ink may be further used.

The inkjet recording ink according to the embodiment of the present invention can be used in a recording method such as printing, duplicating, marking, writing, drawing, or stamping and is particularly suitable in an inkjet recording method.

[Ink Jet Recording Method]

In the inkjet recording method according to the embodiment of the present invention, energy is applied to the ink jet recording ink according to the embodiment of the present invention to form an image on a well-known image receiving material, that is, plain paper or resin coated paper, for example, ink jet paper, films, electrophotographic common paper, fabric, glass, metal, or ceramic described in JP1996-169172A (JP-H8-169172A), JP1996-027693A (JP-H8-027693A), JP1990-276670A (JP-H2-276670A), JP1995-276789A (JP-H7-276789A), JP1997-323475A (JP-H9-323475A), JP1987-238783A (JP-S62-238783A), JP1998-153989A (JP-H10-153989A), JP1998-217473A (JP-H10-217473A), JP1998-235995A (JP-H10-235995A), JP1998-337947A (JP-H10-337947A), and JP1998-217597A (JP-H10-217597A).

During the formation of an image, in order to impart glossiness or water fastness or to improve weather fastness, a polymer particle dispersion (also referred to as a polymer latex) may also be used. Regarding the timing when the polymer latex is added to the image receiving material, the addition may be performed before, during, or after the addition of the colorants. Therefore, a position where the addition is performed may be the image receiving paper or the ink. Alternatively, a liquid material consisting only of the polymer latex may be used. Specifically, a method described in, for example, JP2000-363090, JP2000-315231, JP2000-354380, JP2000-343944, JP2000-268952, JP2000-299465, and JP2000-297365, can be preferably used.

[Ink Jet Printer Cartridge and Ink Jet Recorded Material]

An ink cartridge for ink jet recording according to the embodiment of the present invention is filled with the above-described ink jet recording ink according to the embodiment of the present invention. In addition, an ink jet recorded material is obtained by forming a colored image on a recording material using the ink jet recording ink according to the embodiment of the present invention.

The inkjet recording ink according to the embodiment of the present invention can be used in well-known inkjet recording methods without any particular limitation, for example, a charge control method of jetting ink using an electrostatic attraction force, a drop-on-demand method (pressure pulse method) using a vibration pressure of a piezoelectric element, an acoustic ink jet method of jetting ink using a radiation pressure by converting an electrical signal into an acoustic beam and irradiating the ink with the acoustic beam, or a thermal ink jet method of heating ink to form bubbles and using a pressure generated from the bubbles. Examples of the ink jet recording method include a method of jetting a plurality of droplets of a low-density ink called photo ink with a small volume, a method of improving image quality using a plurality of inks having substantially the same color and different densities, and a method of using a colorless transparent ink.

Examples

Hereinafter, the present invention will be described using examples, but the present invention is not limited to these examples. Unless specified otherwise, "%" and "part(s)" represent "mass%" and "part(s) by mass".

(Synthesis Example)

(Synthesis of Exemplary Compound (1-11))

An exemplary compound (1-11) can be synthesized, for example, using the following scheme.

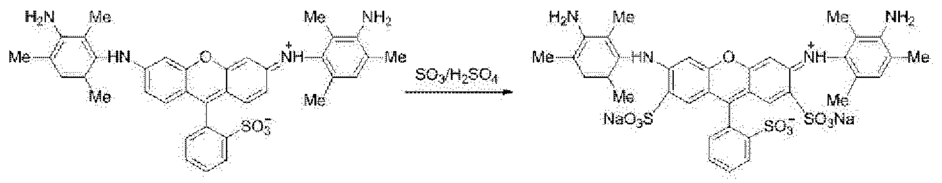


Intermediate (A) Intermediate (B)

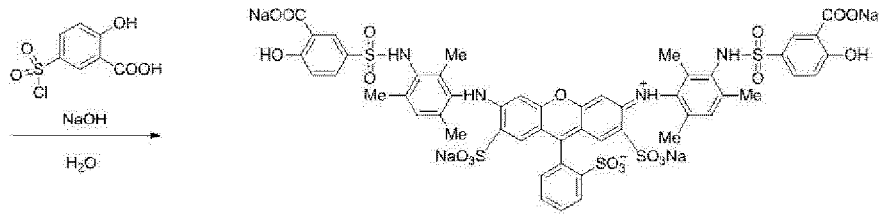


Exemplary Compound (1-11)

(Synthesis of Intermediate (B))

23.0 g of an intermediate (A) (which was synthesized using a method described in paragraph "0065", p. 17 of JP2011-148973A) was added to 420 g of 10% fuming sulfuric acid, and a reaction was caused to occur at room temperature for 48 hours. The reaction solution was poured into a large excess of ethyl acetate, and precipitated crystals was separated by filtration. The separated crystals were dissolved in 500 mL of methanol, the solution was adjusted to pH 7 using a 28% sodium methoxide methanol solution, and precipitated sodium sulfate was removed by filtration. Next, the filtrate was condensed using a rotary evaporator. The obtained residue was purified by column chromatography (filler: SEPHADEX LH-20 (manufactured by Pharmacia), developing solvent: methanol) to obtain crystals of an intermediate (B).

Yield amount: 21.0 g
Yield: 68%
Mass spectrum (MS) (m/z)=793 ($[M-2Na+H]^-$, 100%)

(Synthesis of Exemplary Compound (1-11))

3.0 g of the intermediate (B) was dissolved in 15 mL of ultrapure water, and the reaction solution was cooled to an internal temperature of 10°C or lower. 2.55 g of powder of 5-(chlorosulfonyl)salicylic acid (synthesized using a method described in German Patent No. DE264786) was added, 10% NaOH aqueous solution was added dropwise at an internal temperature of 10°C or lower such that the pH of the reaction solution was maintained at 8.0, and the dropwise addition was continued until the pH did not change. The obtained reaction solution was poured into a large excess of isopropyl alcohol, and a precipitated solid was separated by filtration. The obtained solid was dissolved in 20 mL of a mixed solvent (water/methanol=1/1). Next, the obtained solution was purified by column chromatography (filler: SEPHADEX LH-20 (manufactured by Pharmacia), developing solvent: water/methanol). Next, an inorganic salt and a residual organic solvent were removed using a dialysis membrane (molecular weight cutoff: 3500, Spectra/Por 3 Dialysis Membrane (trade name, manufactured by Spectrum Laboratories, Inc.)). The pH of the obtained aqueous solution was adjusted to 7 using a diluted sodium hydroxide aqueous solution, and dust was removed by filtration using a membrane filter. The obtained aqueous solution was condensed and dried using a rotary evaporator. As a result, green glossy crystals of the exemplary compound (1-11) were obtained.

Yield amount: 1.5 g
Yield: 33%
MS (m/z)=1191 ($[M-1]^-$, 100%)

In an absorption spectrum of the exemplary compound (1-11) in the dilute aqueous solution, the absorption maximum was 532 nm, and the molar absorption coefficient was 87000. Fig. 1 is a diagram showing a $^1$H-NMR spectrum

of the exemplary compound (1-11) in dimethyl sulfoxide-d6.

(Synthesis of Exemplary Compound (1-18))

An exemplary compound (1-18) can be synthesized, for example, using the following scheme.

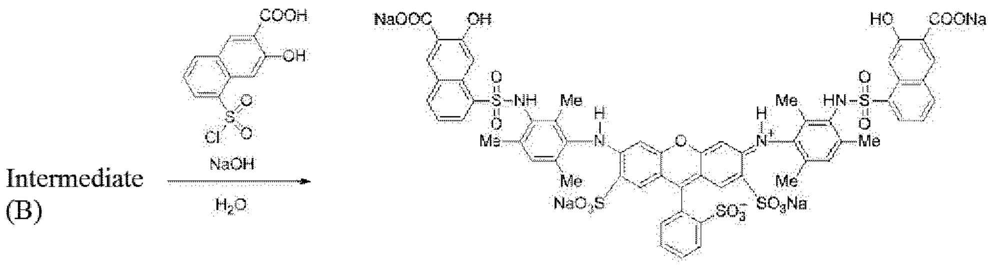


Exemplary Compound (1-18)

3.0 g of the intermediate (B) obtained as the synthetic intermediate of the exemplary compound (1-11) described above was dissolved in 15 mL of ultrapure water, and the obtained solution was cooled to an internal temperature of 10°C or lower. 2.2 g of powder of 5-chlorosulfonyl-3-hydroxy-2-naphthoic acid (synthesized using a method described in German Patent No. DE264786) was added, 10% NaOH aqueous solution was added dropwise at an internal temperature of 10°C or lower such that the pH of the reaction solution was maintained at 7.5, and the dropwise addition was continued until the pH did not change. The obtained reaction solution was poured into a large excess of isopropyl alcohol, and a precipitated solid was separated by filtration. The obtained solid was dissolved in 20 mL of a mixed solvent (water/methanol=1/1). Next, the obtained solution was purified by column chromatography (filler: SEPHADEX LH-20 (manufactured by Pharmacia), developing solvent: water/methanol). Next, an inorganic salt and a residual organic solvent were removed using a dialysis membrane (molecular weight cutoff: 3500, Spectra/Por 3 Dialysis Membrane (trade name, manufactured by Spectrum Laboratories, Inc.)). The pH of the obtained aqueous solution was adjusted to 7 using a diluted sodium hydroxide aqueous solution, and dust was removed by filtration using a membrane filter. The obtained aqueous solution was condensed and dried using a rotary evaporator. As a result, green glossy crystals of the exemplary compound (1-18) were obtained.

Yield amount: 1.2 g
Yield: 24%
MS (m/z)=1291 ([M-1]$^-$, 100%)

In an absorption spectrum of the exemplary compound (1-18) in the dilute aqueous solution, the absorption maximum was 532 nm, and the molar absorption coefficient was 85000. Fig. 2 is a diagram showing a $^1$H-NMR spectrum of the exemplary compound (1-18) in dimethyl sulfoxide-d6.

(Synthesis of Exemplary Compound (1-25))

An exemplary compound (1-25) can be synthesized, for example, using the following scheme.

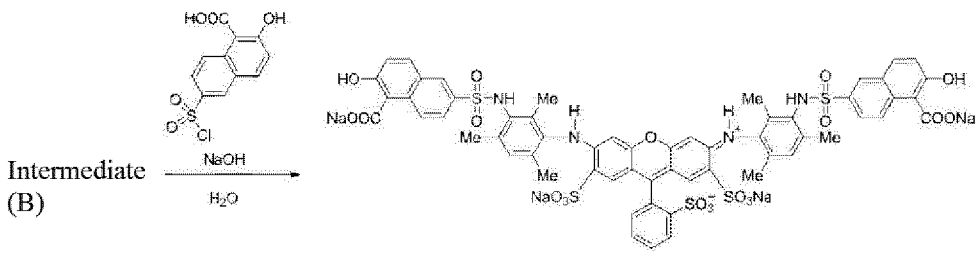


Exemplary Compound (1-25)

3.0 g of the intermediate (B) obtained as the synthetic intermediate of the exemplary compound (1-11) described above was dissolved in 15 mL of ultrapure water, and the obtained solution was cooled to an internal temperature of

10°C or lower. 2.2 g of powder of 6-chlorosulfonyl-2-hydroxy-1-naphthoic acid (synthesized using a method described in German Patent No. DE278091) was added, 10% NaOH aqueous solution was added dropwise at an internal temperature of 10°C or lower such that the pH of the reaction solution was maintained at 7.5, and the dropwise addition was continued until the pH did not change. The obtained reaction solution was poured into a large excess of isopropyl alcohol, and a precipitated solid was separated by filtration. The obtained solid was dissolved in 20 mL of a mixed solvent (water/methanol=1/1). Next, the obtained solution was purified by column chromatography (filler: SEPHADEX LH-20 (manufactured by Pharmacia), developing solvent: water/methanol). Next, an inorganic salt and a residual organic solvent were removed using a dialysis membrane (molecular weight cutoff: 3500, Spectra/Por 3 Dialysis Membrane (trade name, manufactured by Spectrum Laboratories, Inc.)). The pH of the obtained aqueous solution was adjusted to 7 using a diluted sodium hydroxide aqueous solution, and dust was removed by filtration using a membrane filter. The obtained aqueous solution was condensed and dried using a rotary evaporator. As a result, green glossy crystals of the exemplary compound (1-25) were obtained.

Yield amount: 1.3 g
Yield: 26%
MS (m/z)=1291 ([M-1]$^-$, 100%)

In an absorption spectrum of Exemplary Compound (1-25) in the dilute aqueous solution, the absorption maximum was 532 nm, and the molar absorption coefficient was 83000.

(Synthesis of Exemplary Compound (1-26))

An exemplary compound (1-26) can be synthesized, for example, using the following scheme.

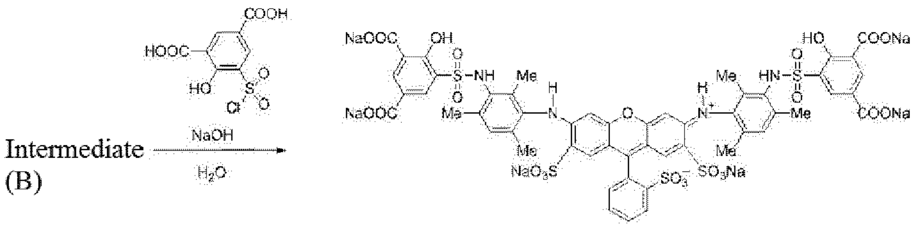


Exemplary Compound (1-26)

3.0 g of the intermediate (B) obtained as the synthetic intermediate of the exemplary compound (1-11) described above was dissolved in 15 mL of ultrapure water, and the obtained solution was cooled to an internal temperature of 10°C or lower. 2.7 g of powder of 5-chlorosulfonyl-4-hydroxyisophthalic acid (synthesized using a method described in German Patent No. DE264786) was added, 10% NaOH aqueous solution was added dropwise at an internal temperature of 10°C or lower such that the pH of the reaction solution was maintained at 7.5, and the dropwise addition was continued until the pH did not change. The obtained reaction solution was poured into a large excess of isopropyl alcohol, and a precipitated solid was separated by filtration. The obtained solid was dissolved in 20 mL of a mixed solvent (water/methanol=1/1). Next, the obtained solution was purified by column chromatography (filler: SEPHADEX LH-20 (manufactured by Pharmacia), developing solvent: water/methanol). Next, an inorganic salt and a residual organic solvent were removed using a dialysis membrane (molecular weight cutoff: 3500, Spectra/Por 3 Dialysis Membrane (trade name, manufactured by Spectrum Laboratories, Inc.)). The pH of the obtained aqueous solution was adjusted to 7 using a diluted sodium hydroxide aqueous solution, and dust was removed by filtration using a membrane filter. The obtained aqueous solution was condensed and dried using a rotary evaporator. As a result, green glossy crystals of the exemplary compound (1-26) were obtained.

Yield amount: 1.8 g
Yield: 36%
MS (m/z)=1279 ([M-1]$^-$, 100%)

In an absorption spectrum of Exemplary Compound (1-26) in the dilute aqueous solution, the absorption maximum was 534 nm, and the molar absorption coefficient was 95000. Fig. 3 is a diagram showing a $^1$H-NMR spectrum of the exemplary compound (1-26) in dimethyl sulfoxide-d6.

(Synthesis of Exemplary Compound (1-30))

An exemplary compound (1-30) can be synthesized, for example, using the following scheme.

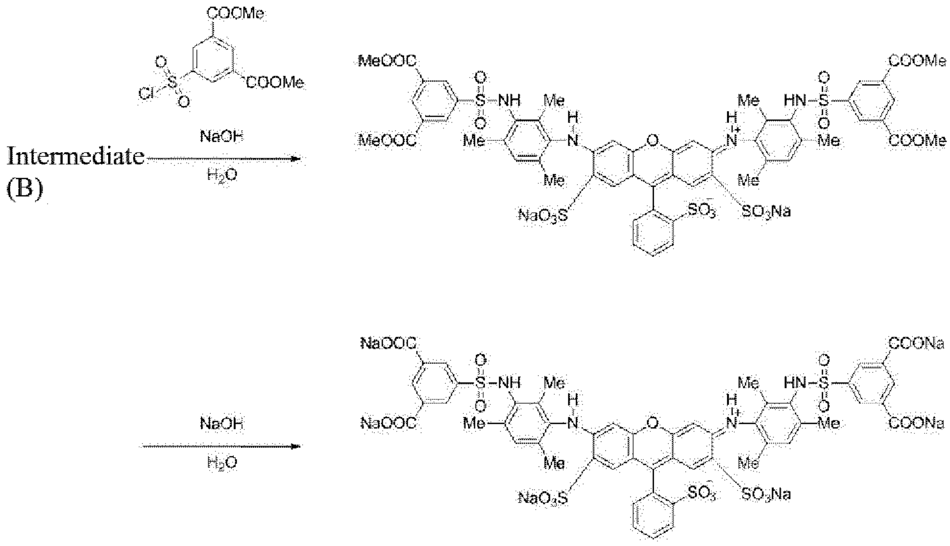


Exemplary Compound (1-30)

3.0 g of the intermediate (B) obtained as the synthetic intermediate of the exemplary compound (1-11) described above was dissolved in 15 mL of ultrapure water. 2.2 g of powder of dimethyl 5-chlorosulfonyl-terephthalate (synthesized using a method described in German Patent No. DE278091) was added, 10% NaOH aqueous solution was added dropwise such that the pH of the reaction solution was maintained at 5 to 7, and the dropwise addition was continued until the pH did not change. After completion of the reaction, 3 mL of 50% NaOH aqueous solution was added and stirred for 1 hour. The obtained reaction solution was poured into a large excess of ethanol, and a precipitated solid was separated by filtration. The obtained solid was dissolved in 20 mL of a mixed solvent (water/methanol=1/1). Next, the obtained solution was purified by column chromatography (filler: SEPHADEX LH-20 (manufactured by Pharmacia), developing solvent: water/methanol). Next, an inorganic salt and a residual organic solvent were removed using a dialysis membrane (molecular weight cutoff: 3500, Spectra/Por 3 Dialysis Membrane (trade name, manufactured by Spectrum Laboratories, Inc.)). The pH of the obtained aqueous solution was adjusted to 7 using a diluted sodium hydroxide aqueous solution, and dust was removed by filtration using a membrane filter. The obtained aqueous solution was condensed and dried using a rotary evaporator. As a result, green glossy crystals of the exemplary compound (1-30) were obtained.

Yield amount: 3.7 g
Yield: 70%
MS (m/z)=1247 ($[M-1]^-$, 100%)

In an absorption spectrum of Exemplary Compound (1-30) in the dilute aqueous solution, the absorption maximum was 532 nm, and the molar absorption coefficient was 82000. Fig. 4 is a diagram showing a $^1$H-NMR spectrum of the exemplary compound (1-30) in dimethyl sulfoxide-d6.

Other Exemplary Compounds can be synthesized using the above-described method.

In the following Examples and Comparative Examples, in a case where exemplary compounds (d-1) to (d-5) were used, compounds represented by the above-described structural formula in which all of $M_1$ to $M_8$ represent a sodium ion were used.

[Example 1]

Deionized water was added to the following components such that the balance was 100 g, and the components were stirred for 1 hour while heating them at 30°C to 40°C. Next, the pH of the solution was adjusted to 8.5 using 10 mol/L of sodium hydroxide aqueous solution, and the obtained solution was filtered under reduced pressure through a microfilter having an average pore size of 0.20 μm. As a result, an ink solution 1 for magenta was prepared.

Composition of Ink Solution 1:

| | |
|---|---|
| Compound of Formula (1) (exemplary compound (1-11)) | 2.25 g |
| Compound of Formula (D) (exemplary compound (d-1)) | 0.25 g |
| PROXEL XL II (preservative, manufactured by Lonza) | 0.11 g |
| Glycerin | 10.00 g |
| Triethylene glycol | 2.00 g |
| Triethylene glycol monobutyl ether | 10.00 g |
| 2-pyrrolidone | 2.00 g |
| SURFYNOL (manufactured by Air Products & Chemicals Inc.) | 1.00 g |

[Example 2]

Deionized water was added to the following components such that the balance was 100 g, and the components were stirred for 1 hour while heating them at 30°C to 40°C. Next, the pH of the solution was adjusted to 8.5 using 10 mol/L of sodium hydroxide aqueous solution, and the obtained solution was filtered under reduced pressure through a microfilter having an average pore size of 0.20 μm. As a result, an ink solution 2 for magenta was prepared.

Composition of Ink Solution 2:

| | |
|---|---|
| Compound of Formula (1) (exemplary compound (1-11)) | 2.25 g |
| Compound of Formula (D) (exemplary compound (d-1)) | 0.25 g |
| PROXEL XL II (preservative, manufactured by Lonza) | 0.11 g |
| Betaine-1 (betaine compound having the following structure) | 1.28 g |
| Glycerin | 10.00 g |
| Triethylene glycol | 2.00 g |
| Triethylene glycol monobutyl ether | 10.00 g |
| 2-pyrrolidone | 2.00 g |
| SURFYNOL (manufactured by Air Products & Chemicals Inc.) | 1.00 g |

(Betaine-1)

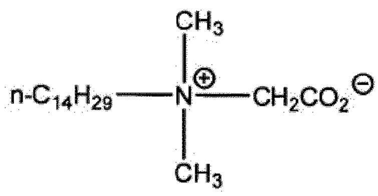

[Example 3]

Deionized water was added to the following components such that the balance was 100 g, and the components were stirred for 1 hour while heating them at 30°C to 40°C. Next, the pH of the solution was adjusted to 8.5 using 10 mol/L of sodium hydroxide aqueous solution, and the obtained solution was filtered under reduced pressure through a microfilter having an average pore size of 0.20 μm. As a result, an ink solution 3 for magenta was prepared.

Composition of Ink Solution 3:

| | |
|---|---|
| Compound of Formula (1) (exemplary compound (1-11)) | 2.25 g |
| Compound of Formula (D) (exemplary compound (d-1)) | 0.25 g |
| PROXEL XL II (preservative, manufactured by Lonza) | 0.11 g |
| Betaine-2 (betaine compound having the following structure) | 1.28 g |
| Glycerin | 10.00 g |
| Triethylene glycol | 2.00 g |
| Triethylene glycol monobutyl ether | 10.00 g |
| 2-pyrrolidone | 2.00 g |
| SURFYNOL (manufactured by Air Products & Chemicals Inc.) | 1.00 g |

(Betaine-2)

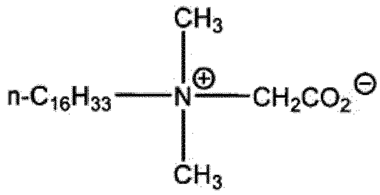

[Example 4]

Deionized water was added to the following components such that the balance was 100 g, and the components were stirred for 1 hour while heating them at 30°C to 40°C. Next, the pH of the solution was adjusted to 8.5 using 10 mol/L of sodium hydroxide aqueous solution, and the obtained solution was filtered under reduced pressure through a microfilter having an average pore size of 0.20 μm. As a result, an ink solution 4 for magenta was prepared.

Composition of Ink Solution 4:

| | |
|---|---|
| Compound of Formula (1) (exemplary compound (1-11)) | 2.00 g |
| Compound of Formula (D) (exemplary compound (d-1)) | 0.50 g |
| PROXEL XL II (preservative, manufactured by Lonza) | 0.11 g |
| Betaine-1 (betaine compound having the following structure) | 1.14 g |
| Glycerin | 10.00 g |
| Triethylene glycol | 2.00 g |
| Triethylene glycol monobutyl ether | 10.00 g |
| 2-pyrrolidone | 2.00 g |
| SURFYNOL (manufactured by Air Products & Chemicals Inc.) | 1.00 g |

(Betaine-1)

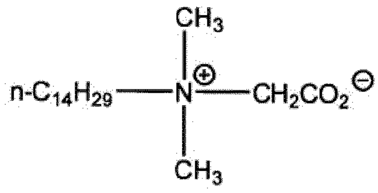

[Example 5]

Deionized water was added to the following components such that the balance was 100 g, and the components were stirred for 1 hour while heating them at 30°C to 40°C. Next, the pH of the solution was adjusted to 8.5 using 10 mol/L of sodium hydroxide aqueous solution, and the obtained solution was filtered under reduced pressure through a microfilter having an average pore size of 0.20 μm. As a result, an ink solution 5 for magenta was prepared.

Composition of Ink Solution 5:

| | |
|---|---|
| Compound of Formula (1) (exemplary compound (1-11)) | 1.75 g |
| Compound of Formula (D) (exemplary compound (d-1)) | 0.75 g |
| PROXEL XL II (preservative, manufactured by Lonza) | 0.11 g |
| Betaine-1 (betaine compound having the following structure) | 1.00 g |
| Glycerin | 10.00 g |
| Triethylene glycol | 2.00 g |
| Triethylene glycol monobutyl ether | 10.00 g |
| 2-pyrrolidone | 2.00 g |
| SURFYNOL (manufactured by Air Products & Chemicals Inc.) | 1.00 g |

(Betaine-1)

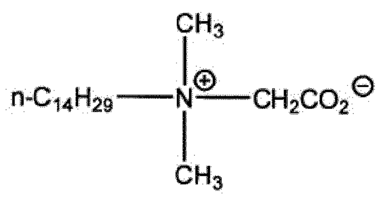

[Example 6]

Deionized water was added to the following components such that the balance was 100 g, and the components were stirred for 1 hour while heating them at 30°C to 40°C. Next, the pH of the solution was adjusted to 8.5 using 10 mol/L of sodium hydroxide aqueous solution, and the obtained solution was filtered under reduced pressure through a microfilter having an average pore size of 0.20 μm. As a result, an ink solution 6 for magenta was prepared.

Composition of Ink Solution 6:

| | |
|---|---|
| Compound of Formula (1) (exemplary compound (1-11)) | 1.65 g |
| Compound of Formula (D) (exemplary compound (d-1)) | 0.35 g |
| PROXEL XL II (preservative, manufactured by Lonza) | 0.11 g |
| Betaine-1 (betaine compound having the following structure) | 1.00 g |

(continued)

| | |
|---|---|
| Glycerin | 10.00 g |
| Triethylene glycol | 2.00 g |
| Triethylene glycol monobutyl ether | 10.00 g |
| 2-pyrrolidone | 2.00 g |
| SURFYNOL (manufactured by Air Products & Chemicals Inc.) | 1.00 g |

(Betaine-1)

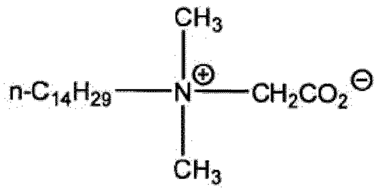

[Example 7]

Deionized water was added to the following components such that the balance was 100 g, and the components were stirred for 1 hour while heating them at 30°C to 40°C. Next, the pH of the solution was adjusted to 8.5 using 10 mol/L of sodium hydroxide aqueous solution, and the obtained solution was filtered under reduced pressure through a microfilter having an average pore size of 0.20 μm. As a result, an ink solution 7 for magenta was prepared.

Composition of Ink Solution 7:

| | |
|---|---|
| Compound of Formula (1) (exemplary compound (1-11)) | 1.25 g |
| Compound of Formula (D) (exemplary compound (d-1)) | 1.25 g |
| PROXEL XL II (preservative, manufactured by Lonza) | 0.11 g |
| Betaine-1 (betaine compound having the following structure) | 1.00 g |
| Glycerin | 10.00 g |
| Triethylene glycol | 2.00 g |
| Triethylene glycol monobutyl ether | 10.00 g |
| 2-pyrrolidone | 2.00 g |
| SURFYNOL (manufactured by Air Products & Chemicals Inc.) | 1.00 g |

(Betaine-1)

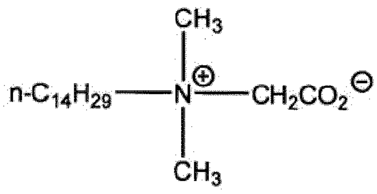

[Example 8]

Deionized water was added to the following components such that the balance was 100 g, and the components

were stirred for 1 hour while heating them at 30°C to 40°C. Next, the pH of the solution was adjusted to 8.5 using 10 mol/L of sodium hydroxide aqueous solution, and the obtained solution was filtered under reduced pressure through a microfilter having an average pore size of 0.20 μm. As a result, an ink solution 8 for magenta was prepared.

Composition of Ink Solution 8:

| | |
|---|---|
| Compound of Formula (1) (exemplary compound (1-11)) | 2.40 g |
| Compound of Formula (D) (exemplary compound (d-1)) | 0.60 g |
| PROXEL XL II (preservative, manufactured by Lonza) | 0.11 g |
| Betaine-1 (betaine compound having the following structure) | 1.00 g |
| Glycerin | 10.00 g |
| Triethylene glycol | 2.00 g |
| Triethylene glycol monobutyl ether | 10.00 g |
| 2-pyrrolidone | 2.00 g |
| SURFYNOL (manufactured by Air Products & Chemicals Inc.) | 1.00 g |

(Betaine-1)

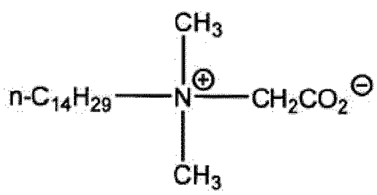

[Example 9]

Deionized water was added to the following components such that the balance was 100 g, and the components were stirred for 1 hour while heating them at 30°C to 40°C. Next, the pH of the solution was adjusted to 8.5 using 10 mol/L of sodium hydroxide aqueous solution, and the obtained solution was filtered under reduced pressure through a microfilter having an average pore size of 0.20 μm. As a result, an ink solution 9 for magenta was prepared.

Composition of Ink Solution 9:

| | |
|---|---|
| Compound of Formula (1) (exemplary compound (1-11)) | 2.00 g |
| Compound of Formula (D) (exemplary compound (d-1)) | 1.00 g |
| PROXEL XL II (preservative, manufactured by Lonza) | 0.11 g |
| Betaine-1 (betaine compound having the following structure) | 1.00 g |
| Glycerin | 10.00 g |
| Triethylene glycol | 2.00 g |
| Triethylene glycol monobutyl ether | 10.00 g |
| 2-pyrrolidone | 2.00 g |
| SURFYNOL (manufactured by Air Products & Chemicals Inc.) | 1.00 g |

(Betaine-1)

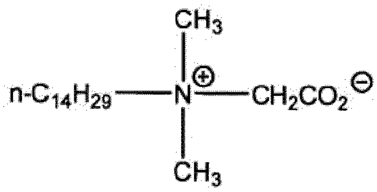

[Example 10]

Deionized water was added to the following components such that the balance was 100 g, and the components were stirred for 1 hour while heating them at 30°C to 40°C. Next, the pH of the solution was adjusted to 8.5 using 10 mol/L of sodium hydroxide aqueous solution, and the obtained solution was filtered under reduced pressure through a microfilter having an average pore size of 0.20 μm. As a result, an ink solution 10 for magenta was prepared.

Composition of Ink Solution 10:

| | |
|---|---|
| Compound of Formula (1) (exemplary compound (1-11)) | 1.50 g |
| Compound of Formula (D) (exemplary compound (d-1)) | 1.50 g |
| PROXEL XL II (preservative, manufactured by Lonza) | 0.11 g |
| Betaine-1 (betaine compound having the following structure) | 1.00 g |
| Glycerin | 10.00 g |
| Triethylene glycol | 2.00 g |
| Triethylene glycol monobutyl ether | 10.00 g |
| 2-pyrrolidone | 2.00 g |
| SURFYNOL (manufactured by Air Products & Chemicals Inc.) | 1.00 g |

(B etame-1)

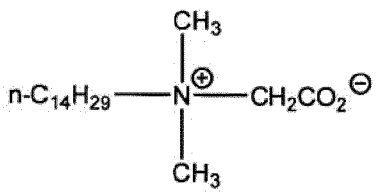

[Example 11]

An inkjet recording ink 11 was prepared through the same operation as in Example 2, except that the exemplary compound (1-18) was used instead of the exemplary compound (1-11).

[Example 12]

An ink jet recording ink 12 was prepared through the same operation as in Example 2, except that the exemplary compound (1-19) was used instead of the exemplary compound (1-11).

[Example 13]

An ink jet recording ink 13 was prepared through the same operation as in Example 2, except that the exemplary compound (1-20) was used instead of the exemplary compound (1-11).

[Example 14]

An ink jet recording ink 14 was prepared through the same operation as in Example 2, except that the exemplary compound (1-25) was used instead of the exemplary compound (1-11).

[Example 15]

An ink jet recording ink 15 was prepared through the same operation as in Example 1, except that the exemplary compound (1-26) was used instead of the exemplary compound (1-11).

[Example 16]

An ink jet recording ink 16 was prepared through the same operation as in Example 2, except that the exemplary compound (1-26) was used instead of the exemplary compound (1-11).

[Example 17]

An ink jet recording ink 17 was prepared through the same operation as in Example 2, except that the exemplary compound (1-29) was used instead of the exemplary compound (1-11).

[Example 18]

An ink jet recording ink 18 was prepared through the same operation as in Example 1, except that the exemplary compound (1-30) was used instead of the exemplary compound (1-11).

[Example 19]

An ink jet recording ink 19 was prepared through the same operation as in Example 2, except that the exemplary compound (1-30) was used instead of the exemplary compound (1-11).

[Example 20]

An ink jet recording ink 20 was prepared through the same operation as in Example 2, except that the exemplary compound (1-34) was used instead of the exemplary compound (1-11).

[Example 21]

An ink jet recording ink 21 was prepared through the same operation as in Example 1, except that the exemplary compound (1-35) was used instead of the exemplary compound (1-11).

[Example 22]

An ink jet recording ink 22 was prepared through the same operation as in Example 2, except that the exemplary compound (1-35) was used instead of the exemplary compound (1-11).

[Example 23]

An ink jet recording ink 23 was prepared through the same operation as in Example 1, except that the exemplary compound (d-2) was used instead of the exemplary compound (d-1).

[Example 24]

An ink jet recording ink 24 was prepared through the same operation as in Example 2, except that the exemplary compound (d-2) was used instead of the exemplary compound (d-1).

[Example 25]

An ink jet recording ink 25 was prepared through the same operation as in Example 2, except that the exemplary

compound (d-3) was used instead of the exemplary compound (d-1).

[Example 26]

An ink jet recording ink 26 was prepared through the same operation as in Example 2, except that the exemplary compound (d-4) was used instead of the exemplary compound (d-1).

[Example 27]

An ink jet recording ink 27 was prepared through the same operation as in Example 2, except that the exemplary compound (d-5) was used instead of the exemplary compound (d-1).

[Example 28]

Deionized water was added to the following components such that the balance was 100 g, and the components were stirred for 1 hour while heating them at 30°C to 40°C. Next, the pH of the solution was adjusted to 8.5 using 10 mol/L of sodium hydroxide aqueous solution, and the obtained solution was filtered under reduced pressure through a microfilter having an average pore size of 0.20 μm. As a result, an ink solution 28 for magenta was prepared.

Composition of Ink Solution 28:

| | |
|---|---|
| Compound of Formula (1) (exemplary compound (1-27)) | 2.25 g |
| Compound of Formula (D) (exemplary compound (d-3)) | 0.25 g |
| PROXEL XL II (preservative, manufactured by Lonza) | 0.11 g |
| Glycerin | 7.00 g |
| Ethylene urea | 7.00 g |
| 1,5-pentanediol | 7.00 g |
| 2-pyrrolidone | 5.00 g |
| SURFYNOL (manufactured by Air Products & Chemicals Inc.) | 0.50 g |

[Example 29]

Deionized water was added to the following components such that the balance was 100 g, and the components were stirred for 1 hour while heating them at 30°C to 40°C. Next, the pH of the solution was adjusted to 8.5 using 10 mol/L of sodium hydroxide aqueous solution, and the obtained solution was filtered under reduced pressure through a microfilter having an average pore size of 0.20 μm. As a result, an ink solution 29 for magenta was prepared.

Composition of Ink Solution 29:

| | |
|---|---|
| Compound of Formula (1) (exemplary compound (1-30)) | 2.25 g |
| Compound of Formula (D) (exemplary compound (d-3)) | 0.25 g |
| PROXEL XL II (preservative, manufactured by Lonza) | 0.11 g |
| Glycerin | 7.00 g |
| Ethylene urea | 7.00 g |
| 1,5-pentanediol | 7.00 g |
| 2-pyrrolidone | 5.00 g |
| SURFYNOL (manufactured by Air Products & Chemicals Inc.) | 0.50 g |

[Example 30]

Deionized water was added to the following components such that the balance was 100 g, and the components

were stirred for 1 hour while heating them at 30°C to 40°C. Next, the pH of the solution was adjusted to 8.5 using 10 mol/L of sodium hydroxide aqueous solution, and the obtained solution was filtered under reduced pressure through a microfilter having an average pore size of 0.20 μm. As a result, an ink solution 30 for magenta was prepared.

Composition of Ink Solution 30:

| | |
|---|---|
| Compound of Formula (1) (exemplary compound (1-27)) | 2.00 g |
| Compound of Formula (D) (exemplary compound (d-3)) | 1.00 g |
| PROXEL XL II (preservative, manufactured by Lonza) | 0.11 g |
| Glycerin | 7.00 g |
| Ethylene urea | 7.00 g |
| 1,5-pentanediol | 7.00 g |
| 2-pyrrolidone | 5.00 g |
| SURFYNOL (manufactured by Air Products & Chemicals Inc.) | 0.50 g |

[Example 31]

Deionized water was added to the following components such that the balance was 100 g, and the components were stirred for 1 hour while heating them at 30°C to 40°C. Next, the pH of the solution was adjusted to 8.5 using 10 mol/L of sodium hydroxide aqueous solution, and the obtained solution was filtered under reduced pressure through a microfilter having an average pore size of 0.20 μm. As a result, an ink solution 31 for magenta was prepared.

Composition of Ink Solution 31:

| | |
|---|---|
| Compound of Formula (1) (exemplary compound (1-30)) | 2.00 g |
| Compound of Formula (D) (exemplary compound (d-3)) | 1.00 g |
| PROXEL XL II (preservative, manufactured by Lonza) | 0.11 g |
| Glycerin | 7.00 g |
| Ethylene urea | 7.00 g |
| 1,5-pentanediol | 7.00 g |
| 2-pyrrolidone | 5.00 g |
| SURFYNOL (manufactured by Air Products & Chemicals Inc.) | 0.50 g |

[Example 32]

Deionized water was added to the following components such that the balance was 100 g, and the components were stirred for 1 hour while heating them at 30°C to 40°C. Next, the pH of the solution was adjusted to 8.5 using 10 mol/L of sodium hydroxide aqueous solution, and the obtained solution was filtered under reduced pressure through a microfilter having an average pore size of 0.20 μm. As a result, an ink solution 32 for magenta was prepared.

Composition of Ink Solution 32:

| | |
|---|---|
| Compound of Formula (1) (exemplary compound (1-30)) | 1.50 g |
| Compound of Formula (D) (exemplary compound (d-3)) | 1.50 g |
| PROXEL XL II (preservative, manufactured by Lonza) | 0.11 g |
| Glycerin | 7.00 g |
| Ethylene urea | 7.00 g |
| 1,5-pentanediol | 7.00 g |

(continued)

| | |
|---|---|
| 2-pyrrolidone | 5.00 g |
| SURFYNOL (manufactured by Air Products & Chemicals Inc.) | 0.50 g |

[Comparative Example 1]

Deionized water was added to the following components such that the balance was 100 g, and the components were stirred for 1 hour while heating them at 30°C to 40°C. Next, the pH of the solution was adjusted to 8.5 using 10 mol/L of sodium hydroxide aqueous solution, and the obtained solution was filtered under reduced pressure through a microfilter having an average pore size of 0.20 μm. As a result, a comparative ink solution 1 for magenta was prepared.

Composition of Comparative Ink Solution 1:

| | |
|---|---|
| Compound of Formula (D) (exemplary compound (d-1)) | 2.50 g |
| PROXEL XL II (preservative, manufactured by Lonza) | 0.11 g |
| Glycerin | 10.00 g |
| Triethylene glycol | 2.00 g |
| Triethylene glycol monobutyl ether | 10.00 g |
| 2-pyrrolidone | 2.00 g |
| SURFYNOL (manufactured by Air Products & Chemicals Inc.) | 1.00 g |

[Comparative Example 2]

Deionized water was added to the following components such that the balance was 100 g, and the components were stirred for 1 hour while heating them at 30°C to 40°C. Next, the pH of the solution was adjusted to 8.5 using 10 mol/L of sodium hydroxide aqueous solution, and the obtained solution was filtered under reduced pressure through a microfilter having an average pore size of 0.20 μm. As a result, a comparative ink solution 2 for magenta was prepared.

Composition of Comparative Ink Solution 2:

| | |
|---|---|
| Compound of Formula (D) (exemplary compound (d-1)) | 2.50 g |
| PROXEL XL II (preservative, manufactured by Lonza) | 0.11 g |
| Betaine-1 (betaine compound having the following structure) | 1.43 g |
| Glycerin | 10.00 g |
| Triethylene glycol | 2.00 g |
| Triethylene glycol monobutyl ether | 10.00 g |
| 2-pyrrolidone | 2.00 g |
| SURFYNOL (manufactured by Air Products & Chemicals Inc.) | 1.00 g |

(Betaine-1)

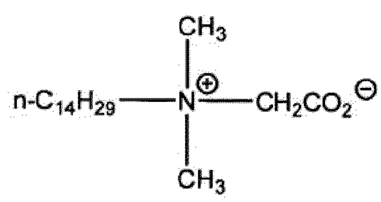

[Comparative Example 3]

Deionized water was added to the following components such that the balance was 100 g, and the components were stirred for 1 hour while heating them at 30°C to 40°C. Next, the pH of the solution was adjusted to 8.5 using 10 mol/L of sodium hydroxide aqueous solution, and the obtained solution was filtered under reduced pressure through a microfilter having an average pore size of 0.20 μm. As a result, a comparative ink solution 3 for magenta was prepared.

Composition of Comparative Ink Solution 3:

| | |
|---|---|
| Compound of Formula (1) (exemplary compound (1-11)) | 2.50 g |
| PROXEL XL II (preservative, manufactured by Lonza) | 0.11 g |
| Glycerin | 10.00 g |
| Triethylene glycol | 2.00 g |
| Triethylene glycol monobutyl ether | 10.00 g |
| 2-pyrrolidone | 2.00 g |
| SURFYNOL (manufactured by Air Products & Chemicals Inc.) | 1.00 g |

[Comparative Example 4]

Deionized water was added to the following components such that the balance was 100 g, and the components were stirred for 1 hour while heating them at 30°C to 40°C. Next, the pH of the solution was adjusted to 8.5 using 10 mol/L of sodium hydroxide aqueous solution, and the obtained solution was filtered under reduced pressure through a microfilter having an average pore size of 0.20 μm. As a result, a comparative ink solution 4 for magenta was prepared.

Composition of Comparative Ink Solution 4:

| | |
|---|---|
| Compound of Formula (1) (comparative compound 1) | 2.00 g |
| Compound of Formula (D) (exemplary compound (d-1)) | 0.50 g |
| PROXEL XL II (preservative, manufactured by Lonza) | 0.11 g |
| Glycerin | 10.00 g |
| Triethylene glycol | 2.00 g |
| Triethylene glycol monobutyl ether | 10.00 g |
| 2-pyrrolidone | 2.00 g |
| SURFYNOL (manufactured by Air Products & Chemicals Inc.) | 1.00 g |

[Comparative Example 5]

Deionized water was added to the following components such that the balance was 100 g, and the components were stirred for 1 hour while heating them at 30°C to 40°C. Next, the pH of the solution was adjusted to 8.5 using 10 mol/L of sodium hydroxide aqueous solution, and the obtained solution was filtered under reduced pressure through a microfilter having an average pore size of 0.20 μm. As a result, a comparative ink solution 5 for magenta was prepared.

Composition of Comparative Ink Solution 5:

| | |
|---|---|
| Compound of Formula (1) (comparative compound 2) | 2.00 g |
| Compound of Formula (D) (exemplary compound (d-1)) | 0.50 g |
| PROXEL XL II (preservative, manufactured by Lonza) | 0.11 g |
| Glycerin | 10.00 g |
| Triethylene glycol | 2.00 g |

(continued)

| | |
|---|---|
| Triethylene glycol monobutyl ether | 10.00 g |
| 2-pyrrolidone | 2.00 g |
| SURFYNOL (manufactured by Air Products & Chemicals Inc.) | 1.00 g |

[Comparative Example 6]

Deionized water was added to the following components such that the balance was 100 g, and the components were stirred for 1 hour while heating them at 30°C to 40°C. Next, the pH of the solution was adjusted to 8.5 using 10 mol/L of sodium hydroxide aqueous solution, and the obtained solution was filtered under reduced pressure through a microfilter having an average pore size of 0.20 μm. As a result, a comparative ink solution 6 for magenta was prepared.

Composition of Comparative Ink Solution 6:

| | |
|---|---|
| Compound of Formula (1) (comparative compound 3) | 2.00 g |
| Compound of Formula (D) (exemplary compound (d-1)) | 0.50 g |
| PROXEL XL II (preservative, manufactured by Lonza) | 0.11 g |
| Glycerin | 10.00 g |
| Triethylene glycol | 2.00 g |
| Triethylene glycol monobutyl ether | 10.00 g |
| 2-pyrrolidone | 2.00 g |
| SURFYNOL (manufactured by Air Products & Chemicals Inc.) | 1.00 g |

[Comparative Example 7]

Deionized water was added to the following components such that the balance was 100 g, and the components were stirred for 1 hour while heating them at 30°C to 40°C. Next, the pH of the solution was adjusted to 8.5 using 10 mol/L of sodium hydroxide aqueous solution, and the obtained solution was filtered under reduced pressure through a microfilter having an average pore size of 0.20 μm. As a result, a comparative ink solution 7 for magenta was prepared.

Composition of Comparative Ink Solution 7:

| | |
|---|---|
| Compound of Formula (1) (comparative compound 4) | 2.00 g |
| Compound of Formula (D) (exemplary compound (d-1)) | 0.50 g |
| PROXEL XL II (preservative, manufactured by Lonza) | 0.11 g |
| Glycerin | 10.00 g |
| Triethylene glycol | 2.00 g |
| Triethylene glycol monobutyl ether | 10.00 g |
| 2-pyrrolidone | 2.00 g |
| SURFYNOL (manufactured by Air Products & Chemicals Inc.) | 1.00 g |

[Comparative Example 8]

Deionized water was added to the following components such that the balance was 100 g, and the components were stirred for 1 hour while heating them at 30°C to 40°C. Next, the pH of the solution was adjusted to 8.5 using 10 mol/L of sodium hydroxide aqueous solution, and the obtained solution was filtered under reduced pressure through a microfilter having an average pore size of 0.20 μm. As a result, a comparative ink solution 8 for magenta was prepared.

Composition of Comparative Ink Solution 8:

| | |
|---|---|
| Compound of Formula (D) (exemplary compound (d-1)) | 2.50 g |
| PROXEL XL II (preservative, manufactured by Lonza) | 0.11 g |
| Glycerin | 7.00 g |
| Ethylene urea | 7.00 g |
| 1,5-pentanediol | 7.00 g |
| 2-pyrrolidone | 5.00 g |
| SURFYNOL (manufactured by Air Products & Chemicals Inc.) | 0.50 g |

[Comparative Example 9]

Deionized water was added to the following components such that the balance was 100 g, and the components were stirred for 1 hour while heating them at 30°C to 40°C. Next, the pH of the solution was adjusted to 8.5 using 10 mol/L of sodium hydroxide aqueous solution, and the obtained solution was filtered under reduced pressure through a microfilter having an average pore size of 0.20 μm. As a result, a comparative ink solution 9 for magenta was prepared.

Composition of Comparative Ink Solution 9:

| | |
|---|---|
| Compound of Formula (1) (exemplary compound (1-27)) | 1.00 g |
| PROXEL XL II (preservative, manufactured by Lonza) | 0.11 g |
| Glycerin | 7.00 g |
| Ethylene urea | 7.00 g |
| 1,5-pentanediol | 7.00 g |
| 2-pyrrolidone | 5.00 g |
| SURFYNOL (manufactured by Air Products & Chemicals Inc.) | 0.50 g |

[Comparative Example 10]

Deionized water was added to the following components such that the balance was 100 g, and the components were stirred for 1 hour while heating them at 30°C to 40°C. Next, the pH of the solution was adjusted to 8.5 using 10 mol/L of sodium hydroxide aqueous solution, and the obtained solution was filtered under reduced pressure through a microfilter having an average pore size of 0.20 μm. As a result, a comparative ink solution 10 for magenta was prepared.

Composition of Comparative Ink Solution 10:

| | |
|---|---|
| Compound of Formula (1) (exemplary compound (1-30)) | 1.00 g |
| PROXEL XL II (preservative, manufactured by Lonza) | 0.11 g |
| Glycerin | 7.00 g |
| Ethylene urea | 7.00 g |
| 1,5-pentanediol | 7.00 g |
| 2-pyrrolidone | 5.00 g |
| SURFYNOL (manufactured by Air Products & Chemicals Inc.) | 0.50 g |

(Comparative Compound 1)

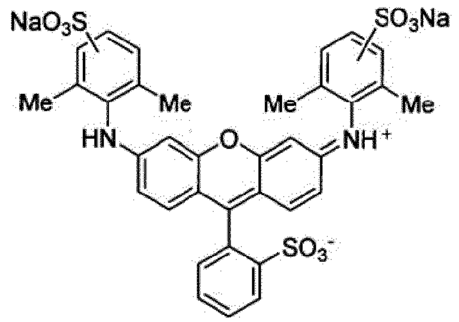

(Comparative Compound 2)

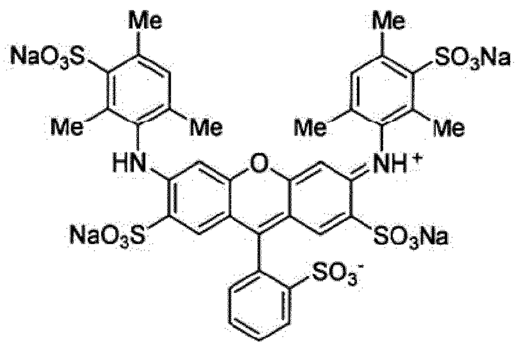

(Comparative Compound 3)

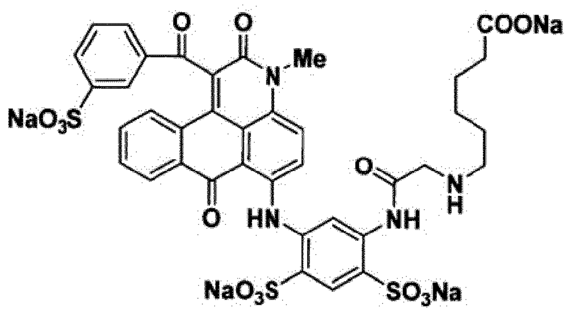

(Comparative Compound 4)

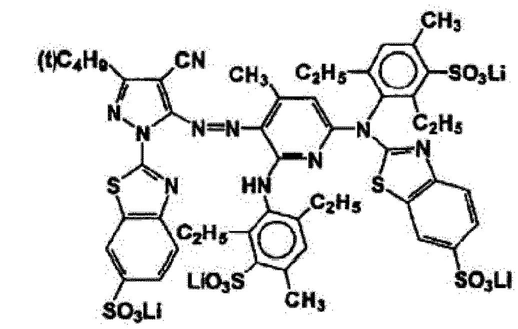

(Image Recording and Evaluation)

The ink jet recording inks 1 to 27 according to Examples and the ink jet recording inks 1 to 7 according to Comparative Examples were evaluated as follows. The results are shown in Table 1 below.

Table 1 shows the results of the respective evaluations performed after filling an ink cartridge with each of the ink jet recording inks and recording an image on photographic paper ("KOUTAKU", manufactured by Seiko Epson Corporation) using an inkjet printer (PM-700C, manufactured by Seiko Epson Corporation)

The ink jet recording inks 28 to 32 according to Examples and the ink jet recording inks 8 to 10 according to Comparative Examples were evaluated as follows. The results are shown in Table 1 below. Table 1 shows the results of the respective evaluations performed after filling an ink cartridge with each of the ink jet recording inks and recording an image on inkjet paper (photo glossy paper PT-201, manufactured by Canon Corporation) using an ink jet printer (PIXUS Pro 9000 Mk II, manufactured by Canon Corporation).

<Color>

In a case where the color of a printed sample was determined by visual inspection, the evaluation was performed in three steps. A sample having a color of pure magenta was evaluated as "A", a sample having a color of reddish magenta was evaluated as "B", and a sample having a color of reddish violet was evaluated as "C".

<Chroma>

The chroma (C*) of a printed material was calculated according to the following expression based on measurement of color characteristics. Using a reflection densitometer (trade name: X-Rite 310TR, manufactured by X-Rite Inc.), the lightness L* and the chromaticity a and b* of a printed image portion at an applied voltage of 50% were measured according to the CIE L*a*b* color system (International Commission on Illumination (1976)/ or JIS Z8781-4:2013). The chroma (C*) was obtained from the obtained values according to the following calculation expression and was evaluated based on the following determination criteria.
Ink Jet Recording Ink

$$\text{Chroma } (C^*)=(a^{*2}+b^{*2})^{1/2}$$

A: C* was 90 or higher
B: C* was 80 or higher and lower than 90
C: C* was lower than 80

<Printing Density>

Using an ink jet printer (trade name: PM-700C, manufactured by Seiko Epson Corporation), an inkjet printer (PIXUS Pro 9000 Mk II, manufactured by Canon Corporation), and the ink jet recording ink described above, a monochromic image pattern in which an optical density (OD) value of magenta changed stepwise in a range of 0.1 to 2.0 was printed on an ink jet recording medium (photographic paper <GLOSSY> (trade name, manufactured by Seiko Epson Corporation)) and inkjet paper (photo glossy paper PT-201, manufactured by Canon Corporation). The image density at the printing density (ODmax) on the photo paper was measured using a reflection densitometer (X-Rite 310 TR) and was evaluated in four steps. A pattern having a printing density of 2.00 or higher was evaluated as "A", a pattern having a printing density of 1.8 or higher and lower than 2.0 was evaluated as "B", a pattern having a printing density of lower than 1.8 was evaluated as "C", and a pattern having a printing density of lower than 1.7 was evaluated as "D".

<Light Fastness>

Immediately after the formation of the solid image, an image density Ci was measured. Next, the image was irradiated with xenon light (100000 lux) for 28 days using a weather meter (ATLAS C.165), and then an image density Cf1 was measured again. Based on the image density values before and after the irradiation of the xenon light, a colorant residue rate was calculated and evaluated. The image density was measured using a reflection densitometer (trade name: X-Rite 310TR, manufactured by X-Rite Inc.). The colorant residue rate was measured in an image portion where the initial image density was 1.0±0.2.
The colorant residue rate was obtained according to the following expression and was evaluated based on the following determination criteria.

$$\text{Colorant Residue Rate } (\%)=(Cf1/Ci)\times 100$$

A: the colorant residue rate was 90% or higher and lower than 95%
B: the colorant residue rate was 80% or higher and lower than 90%
C: the colorant residue rate was lower than 80%

<Ozone Fastness>

A 5 kV alternating current voltage was applied while causing dry air to flow through the inside of a double glass tube of an ozonizer (manufactured by Siemens AG). The photo glossy paper on which the image was formed was left to stand for 3 days in a box having an ozone gas concentration of 5±0.1 ppm that was set in a dark place at room

temperature using the ozonizer. Next, the image density was measured using a reflection densitometer (trade name: X-Rite 310TR, manufactured by X-rite Inc.) after leaving the photo glossy paper to stand in ozone gas. Based on an initial image density Ci and an image density Cf2 measured after leaving the photo glossy paper to stand in ozone gas, a colorant residue rate was calculated and evaluated. The colorant residue rate was measured in an image portion where the initial image density was 1.0±0.2. The ozone gas concentration in the box was set using an ozone gas monitor (Mode: OZG-EM-01, manufactured by Applies Corporation).

The colorant residue rate was obtained according to the following expression and was evaluated based on the following determination criteria.

$$\text{Colorant Residue Rate (\%)}=(\text{Cf2}/\text{Ci})\times 100$$

A: the colorant residue rate was 85% or higher and lower than 90%
B: the colorant residue rate was 80% or higher and lower than 85%
C: the colorant residue rate was lower than 80%

<Moisture Resistance>

Regarding image blurring under high-humidity conditions, a 3 cm×3 cm printing pattern was prepared by disposing 1 mm×1 mm magenta squares such that 0.5 mm white spaces were formed between the squares. After storing this image sample under conditions of 45°C and a relative humidity of 80% for 7 days, the blurring of the magenta dye was observed in the white spaces.

Specifically, the OD values of the printed material before and after the exposure to the high-humidity conditions were measured using a reflection densitometer "Spectrilino" (trade name, manufactured by Gretag Macbeth GmbH), and an increase in the magenta density of the white space immediately after the printing was measured in a green filter of Status A. A case where the measured value was lower than 0.02 was evaluated as A, a case where the measured value was 0.02 or higher and lower than 0.05 was evaluated as B, a case where the measured value was 0.05 or higher and lower than 0.10 was evaluated as C, and a case where the measured value was 0.10 or higher was evaluated as D.

<Jetting Stability>

Regarding jetting stability, an ink cartridge for an ink jet recording apparatus (trade name: PM-700C, manufactured by Seiko Epson Corporation) was filled with each of the ink jet recording inks obtained in Examples according to the present invention and Comparative Examples, this cartridge was set on the ink jet recording apparatus, the jetting of the ink from all the nozzles was checked, and an image was printed on each of 100 sheets of A4 paper. The evaluation was performed based on the following criteria. Further, each of the ink jet recording inks obtained in Examples according to the present invention and Comparative Examples was stored under conditions of 40°C and 80% RH for 2 weeks. Next, by performing the above-described experiment again, whether or not there was a difference in ink jettability immediately after the adjustment of the inkjet recording ink was evaluated.

The difference before and after the mandatory storage test was evaluated based on the following criteria.

A: substantially no irregularities of characters was found from the start to the end of printing
B: irregularities of characters were found on some pieces of the recording paper
C: irregularities of characters were found from the start to the end of printing

[Table 1]

| | Color | Chroma | Printing Density | Light Fastness | Ozone Fastness | Moisture Resistance | Jetting Stability | Note |
|---|---|---|---|---|---|---|---|---|
| Example 1 | A | A | A | A | A | B | A | Present Invention |
| Example 2 | A | A | A | A | A | A | A | Present Invention |
| Example 3 | A | A | A | A | A | A | A | Present Invention |
| Example 4 | A | A | A | B | B | A | A | Present Invention |
| Example 5 | A | A | A | B | B | A | A | Present Invention |
| Example 6 | B | B | A | B | B | A | A | Present Invention |
| Example 7 | B | B | A | B | B | B | A | Present Invention |
| Example 8 | A | A | A | A | A | A | A | Present Invention |
| Example 9 | A | A | A | B | A | A | A | Present Invention |
| Example 10 | B | B | A | B | B | B | A | Present Invention |
| Example 11 | A | A | A | A | A | A | A | Present Invention |
| Example 12 | A | A | A | A | A | A | A | Present Invention |
| Example 13 | A | A | A | A | A | A | A | Present Invention |
| Example 14 | A | A | A | A | A | A | A | Present Invention |
| Example 15 | A | A | A | A | A | B | A | Present Invention |
| Example 16 | A | A | A | A | A | A | A | Present Invention |
| Example 17 | A | A | A | A | A | A | A | Present Invention |
| Example 18 | A | A | A | A | A | B | A | Present Invention |
| Example 19 | A | A | A | A | A | A | A | Present Invention |
| Example 20 | A | A | A | A | A | A | A | Present Invention |
| Example 21 | A | A | A | A | A | B | A | Present Invention |
| Example 22 | A | A | A | A | A | A | A | Present Invention |
| Example 23 | A | A | A | A | A | B | A | Present Invention |
| Example 24 | A | A | A | A | A | A | A | Present Invention |

(continued)

| | Color | Chroma | Printing Density | Light Fastness | Ozone Fastness | Moisture Resistance | Jetting Stability | Note |
|---|---|---|---|---|---|---|---|---|
| Example 25 | A | A | A | A | A | A | A | Present Invention |
| Example 26 | A | A | A | A | A | A | A | Present Invention |
| Example 27 | A | A | A | A | A | A | A | Present Invention |
| Example 29 | A | A | A | A | A | A | A | Present Invention |
| Example 29 | A | A | A | A | A | A | A | Present Invention |
| Example 30 | B | B | A | B | B | A | A | Present Invention |
| Example 31 | B | B | A | B | B | A | A | Present Invention |
| Example 32 | B | B | A | B | B | B | A | Present Invention |
| Comparative Example 1 | A | A | A | C | C | C | A | Comparative Example |
| Comparative Example 2 | A | A | A | C | C | B | A | Comparative Example |
| Comparative Example 3 | A | A | C | B | B | B | A | Comparative Example |
| Comparative Example 4 | B | B | A | A | C | C | B | Comparative Example |
| Comparative Example 5 | A | A | A | A | C | B | B | Comparative Example |
| Comparative Example 6 | C | B | D | C | C | B | B | Comparative Example |
| Comparative Example 7 | B | C | B | A | B | C | B | Comparative Example |
| Comparative Example 8 | B | B | B | C | C | B | A | Comparative Example |
| Comparative Example 9 | A | A | C | B | B | A | A | Comparative Example |
| Comparative Example 10 | A | A | C | B | B | A | A | Comparative Example |

As can be seen from the results of Table 1, each of the inks according to Examples in which the compound according to the present invention was used were excellent in all the evaluations of color, adhesion, light fastness, ozone fastness, and moisture resistance.

According to the present invention, it is possible to provide: a coloring composition with which an image having excellent color and adhesion and having excellent light fastness, ozone fastness, and moisture resistance can be formed; an ink jet recording ink including the coloring composition; an ink jet recording method using the ink jet recording ink; and an ink jet printer cartridge that is filled with the inkjet recording ink.

The present invention has been described in detail with reference to the specific embodiment.

## Claims

**1.** A coloring composition comprising:

a compound represented by the following Formula (1); and
a compound represented by the following Formula (D),

Formula (1)

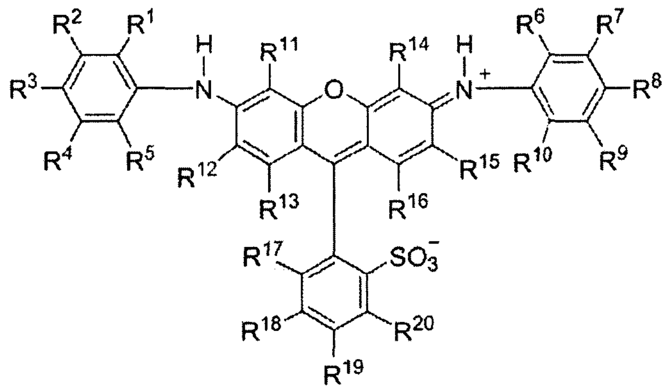

wherein, in the Formula (1), $R^1$, $R^5$, $R^6$, and $R^{10}$ each independently represent an unsubstituted alkyl group having 1 to 6 carbon atoms,
$R^{11}$, $R^{13}$, $R^{14}$, $R^{16}$, $R^{17}$, $R^{18}$, $R^{19}$, and $R^{20}$ each independently represent a hydrogen atom or a substituent,
wherein $R^4$, $R^9$, $R^{12}$, and $R^{15}$ each independently represent a hydrogen atom or a substituent selected from an unsubstituted alkyl group having 1 to 6 carbon atoms and an ionic hydrophilic group, selected from the group consisting of a carboxyl group, a sulfo group, and a phosphono group, wherein the ionic hydrophilic group may include a counter cation selected from a hydrogen atom, an alkali metal cation, and an ammonium ion,
R2, $R^3$, $R^7$, and $R^8$ each independently represent a hydrogen atom, an unsubstituted alkyl group having 1 to 6 carbon atoms, or a substituent represented by the following Formula (A), and
at least one of $R^2$, $R^3$, $R^7$, or $R^8$ represents a substituent represented by the following Formula (A),

Formula (A)

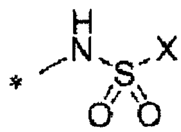

wherein, in the Formula (A), X represents a substituent represented by the following Formula (X1), (X2), or (X3), and
* represents a bond to a benzene ring,

Formula (X1)

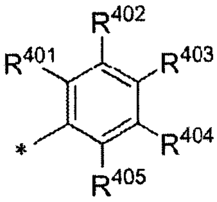

wherein, in the Formula (X1), $R^{401}$, $R^{402}$, $R^{403}$, $R^{404}$, and $R^{405}$ each independently represent a hydrogen atom or a substituent,
$R^{401}$, $R^{402}$, $R^{403}$, $R^{404}$, and $R^{405}$ satisfy the following condition (i) or (ii),
* represents a bond to a sulfur atom,
the condition (i): at least one of $R^{401}$, $R^{402}$, $R^{403}$, $R^{404}$, or $R^{405}$ represents a hydroxyl group and at least one of $R^{401}$, $R^{402}$, $R^{403}$, $R^{404}$, or $R^{405}$ represents a carboxyl group, and
the condition (ii): at least two of $R^{401}$, $R^{402}$, $R^{403}$, $R^{404}$, or $R^{405}$ represent a carboxyl group,

Formula (X2)

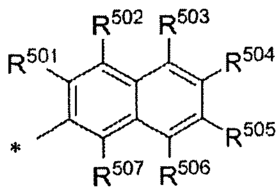

wherein, in the Formula (X2), $R^{501}$, $R^{502}$, $R^{503}$, $R^{504}$, $R^{505}$, $R^{506}$, and $R^{507}$ each independently represent a hydrogen atom or a substituent,
$R^{501}$, $R^{502}$, $R^{503}$, $R^{504}$, $R^{505}$, $R^{506}$, and $R^{507}$ satisfy the following condition (iii) or (iv),
* represents a bond to a sulfur atom,
the condition (iii): at least one of $R^{501}$, $R^{502}$, $R^{503}$, $R^{504}$, $R^{505}$, $R^{506}$, or $R^{507}$ represents a hydroxyl group and at least one of $R^{501}$, $R^{502}$, $R^{503}$, $R^{504}$, $R^{505}$, $R^{506}$, or $R^{507}$ represents a carboxyl group, and
the condition (iv): at least two of $R^{501}$, $R^{502}$, $R^{503}$, $R^{504}$, $R^{505}$, $R^{506}$, or $R^{507}$ represent a carboxyl group,

Formula (X3)

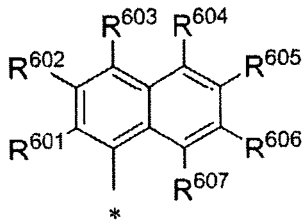

wherein, in the Formula (X3), $R^{601}$, $R^{602}$, $R^{603}$, $R^{604}$, $R^{605}$, $R^{606}$, and $R^{607}$ each independently represent a hydrogen atom or a substituent,
$R^{601}$, $R^{602}$, $R^{603}$, $R^{604}$, $R^{605}$, $R^{606}$, and $R^{607}$ satisfy the following condition (v) or (vi), * represents a bond to a sulfur atom,
the condition (v): at least one of $R^{601}$, $R^{602}$, $R^{603}$, $R^{604}$, $R^{605}$, $R^{606}$, or $R^{607}$ represents a hydroxyl group and at least one of $R^{601}$, $R^{602}$, $R^{603}$, $R^{604}$, $R^{605}$, $R^{606}$, or $R^{607}$ represents a carboxyl group, and
the condition (vi): at least two of $R^{601}$, $R^{602}$, $R^{603}$, $R^{604}$, $R^{605}$, $R^{606}$, or $R^{607}$ represent a carboxyl group, and

Formula (D)

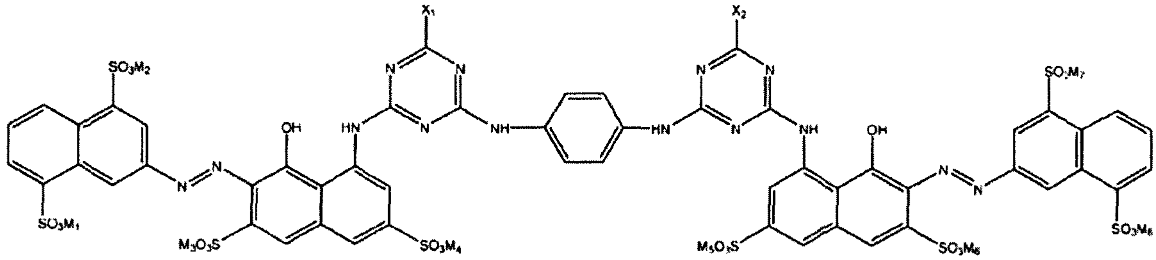

wherein, in the Formula (D), $X_1$ and $X_2$ each independently represent a chlorine atom, a hydroxyl group, or an amino group, and
$M_1$ to $M_8$ each independently represent a hydrogen atom, an ammonium ion, an alkali metal ion, or an organic cation.

2. The coloring composition according to claim 1, wherein X in the Formula (A) represents a substituent represented by the Formula (X1), and $R^{401}$, $R^{402}$, $R^{403}$, $R^{404}$, and $R^{405}$ in the Formula (X1) satisfy the condition (i).

3. The coloring composition according to claim 1, wherein X in the Formula (A) represents a substituent represented by the Formula (X2), and $R^{501}$, $R^{502}$, $R^{503}$, $R^{504}$, $R^{505}$, $R^{506}$, and $R^{507}$ in the Formula (X2) satisfy the condition (iii).

4. The coloring composition according to claim 1, wherein X in the Formula (A) represents a substituent represented by the Formula (X3), and $R^{601}$, $R^{602}$, $R^{603}$, $R^{604}$, $R^{605}$, $R^{606}$, and $R^{607}$ in the Formula (X3) satisfy the condition (v).

5. The coloring composition according to any one of claims 1 to 4, wherein a total content of the compound represented by the Formula (1) and the compound represented by the Formula (D) is 3.5 mass% or lower with respect to the coloring composition.

6. The coloring composition according to any one of claims 1 to 5, wherein a mass ratio {Formula (1)/Formula (D)} of a content of the compound represented by the Formula (1) to a content of the compound represented by the Formula (D) is {99/1} to {50/50}.

7. An ink jet recording ink comprising the coloring composition according to any one of claims 1 to 6.

8. An inkjet recording method using the inkjet recording ink according to claim 7.

9. An inkjet printer cartridge that is filled with the inkjet recording ink according to claim 7.

## Patentansprüche

1. Färbende Zusammensetzung umfassend:

eine durch die folgende Formel (1) dargestellte Verbindung; und
eine durch die folgende Formel (D) dargestellte Verbindung,

Formel (1)

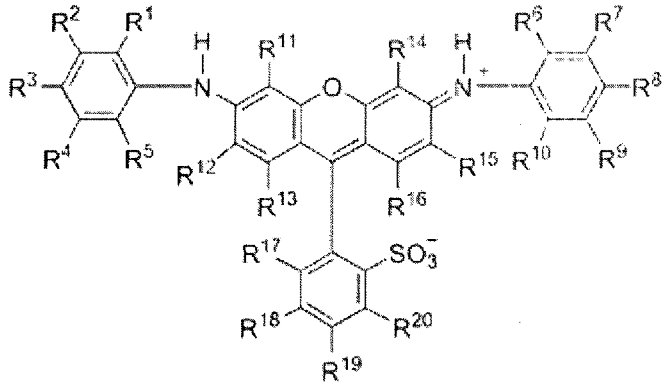

wobei in Formel (1) $R^1$, $R^5$, $R^6$ und $R^{10}$ jeweils unabhängig eine unsubstituierte Alkylgruppe mit 1 bis 6 Kohlenstoffatomen darstellen,
$R^{11}$, $R^{13}$, $R^{14}$, $R^{16}$, $R^{17}$, $R^{18}$, $R^{19}$ und $R^{20}$ jeweils unabhängig ein Wasserstoffatom oder einen Substituent darstellen,
wobei $R^4$, $R^9$, $R^{12}$ und $R^{15}$ jeweils unabhängig ein Wasserstoffatom oder einen Substituent darstellen, der ausgewählt ist aus einer unsubstituierten Alkylgruppe mit 1 bis 6 Kohlenstoffatomen und einer hydrophilen Gruppe, ausgewählt aus der Gruppe bestehend aus einer Carboxylgruppe, einer Sulfogruppe und einer Phosphongruppe. wobei die ionische hydrophile Gruppe ein Gegenkation, ausgewählt aus einem Wasserstoffatom, einem Alkalimetallkation und einem Ammoniumion umfassen kann,
$R^2$, $R^3$, $R^7$ und $R^8$ jeweils unabhängig ein Wasserstoffatom, eine unsubstituierte Alkylgruppe mit 1 bis 6 Kohlenstoffatomen oder einen durch die folgende Formel (A) dargestellten Substituent darstellen, und
mindestens einer aus $R^2$, $R^3$, $R^7$ oder $R^8$ einen durch die folgende Formel (A) dargestellten Substituent darstellt,

Formel (A)

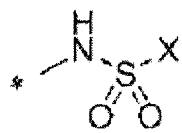

wobei in Formel (A), X einen durch die folgende Formel (X1), (X2) oder (X3) dargestellten Substituent darstellt und * eine Bindung zu einem Benzolring darstellt,

Formel (X1)

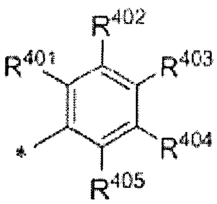

wobei in Formel (X1) $R^{401}$, $R^{402}$, $R^{403}$, $R^{404}$ und $R^{465}$ jeweils unabhängig ein Wasserstoffatom oder einen Substituent darstellen,
$R^{401}$, $R^{402}$, $R^{403}$, $R^{404}$ und $R^{405}$ die folgende Bedingung (i) oder (ii) erfüllen.
* eine Bindung zu einem Schwefelatom darstellt,
Bedingung (i): mindestens einer aus $R^{401}$, $R^{402}$, $R^{403}$, $R^{401}$ und $R^{405}$ stellt eine Hydroxygruppe dar und mindestens einer aus $R^{401}$, $R^{402}$, $R^{403}$, $R^{404}$ und $R^{405}$ stellt eine Carboxylgruppe dar und

Bedingung (ii): mindestens zwei aus $R^{401}$, $R^{402}$, $R^{403}$ $R^{404}$ und $R^{405}$ stellen eine Carboxylgruppe dar,

Formel (X2)

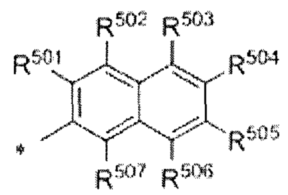

wobei in Formel (X2) $R^{501}$, $R^{502}$, $R^{503}$, $R^{504}$, $R^{505}$, $R^{506}$ und $R^{507}$ jeweils unabhängig ein Wasserstoffatom oder einen Substituent darstellen,
$R^{501}$, $R^{502}$, $R^{503}$, $R^{504}$, $R^{505}$, $R^{506}$ und $R^{507}$ die folgende Bedingung (iii) oder (iv) erfüllen.
* eine Bindung zu einem Schwefelatom darstellt.
Bedingung (iii): mindestens einer aus $R^{501}$, $R^{502}$, $R^{503}$, $R^{504}$, $R^{505}$, $R^{506}$, und $R^{507}$ stell eine Hydroxygruppe dar und mindestens einer aus $R^{501}$, $R^{502}$, $R^{503}$, $R^{504}$, $R^{505}$, $R^{506}$ und $R^{507}$ stellt eine Carboxylgruppe dar und
Bedingung (iv): mindestens zwei aus $R^{501}$, $R^{502}$, $R^{503}$, $R^{504}$, $R^{505}$, $R^{506}$ und $R^{507}$ stellen eine Carboxylgruppe dar,

Formel (X3)

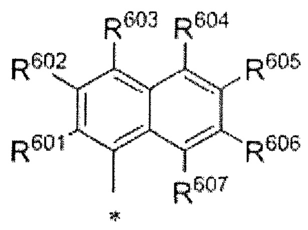

wobei in Formel (X3) $R^{601}$, $R^{602}$, $R^{603}$, $R^{604}$, $R^{605}$, $R^{606}$ und $R^{607}$ jeweils unabhängig ein Wasserstoffatom oder einen Substituent darstellen,
$R^{601}$, $R^{602}$, $R^{603}$. $R^{604}$, $R^{605}$, $R^{606}$ und $R^{607}$ die folgende Bedingung (v) oder (vi) erfüllen.
* eine Bindung zu einem Schwefelatom darstellt.
Bedingung (v): mindestens einer aus $R^{601}$, $R^{602}$, $R^{603}$, $R^{604}$, $R^{505}$, $R^{606}$ und $R^{607}$ stellt eine Hydroxygruppe dar und mindestens einer aus $R^{601}$, $R^{602}$, $R^{603}$, $R^{604}$, $R^{605}$, $R^{606}$ und $R^{607}$ stellt eine Carboxylgruppe dar und
Bedingung (vi): mindestens zwei aus $R^{601}$, $R^{602}$, $R^{603}$, $R^{604}$, $R^{605}$, $R^{606}$ und $R^{607}$ stellen einer Carboxylgruppe dar, und

Formel (D)

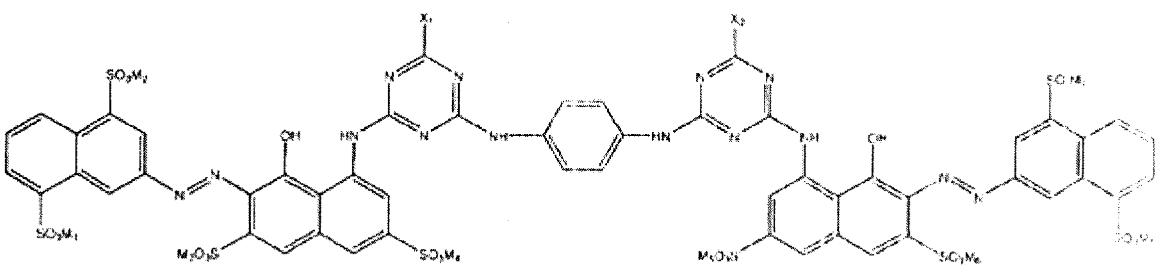

wobei in Formel (D) $X_1$ und $X_2$ jeweils unabhängig ein Chloratom, eine Hydroxygruppe oder eine Aminogruppe darstellen und
$M_1$ bis $M_8$ jeweils unabhängig ein Wasserstoffatom, ein Ammoniumion. ein Alkalimetallion oder ein organisches Kation darstellen.

2. Färbende Zusammensetzung nach Anspruch 1. wobei X in Formel (A) einen durch die Formel (X1) dargestellten Substituent darstellt und $R^{401}$, $R^{402}$, $R^{403}$, $R^{404}$ und $R^{405}$ in Formel (X1) Bedingung (i) erfüllen.

3. Färbende Zusammensetzung nach Anspruch 1, wobei X in Formel (A) einen durch die Formel (X2) dargestellten Substituent darstellt und $R^{501}$, $R^{502}$, $R^{503}$, $R^{504}$, $R^{505}$, $R^{506}$ und $R^{507}$ in Formel (X2) Bedingung (iii) erfüllen.

4. Färbende Zusammensetzung nach Anspruch 1. wobei X in Formel (A) einen durch die Formel (X3) dargestelltem Substituent darstellt und $R^{601}$, $R^{602}$, $R^{603}$, $R^{604}$, $R^{605}$, $R^{606}$ und $R^{607}$ in Formel (X3) Bedingung (v) erfüllen.

5. Färbende Zusammensetzung nach einem der Ansprüche 1 bis 4. wobei ein Gesamtgehalt an der durch Formel (1) dargestellten Verbindung und der durch Formel (D) dargestellten Verbindung 3,5 Masse% oder weniger, bezogen auf die färbende Zusammensetzung beträgt.

6. Färbende Zusammensetzung nach einem der Ansprüche 1 bis 5, wobei ein Masseverhältnis {Formel (1)/Formel (D)} eines Gehalts an der durch Formel (1) dargestellten Verbindung zu einem Gehalt an der durch Formel (D) dargestellten Verbindung (D) {99/1} bis {50/50} beträgt.

7. Tintenstrahlaufzeichnungstinte umfassend die färbende Zusammensetzung nach einem der Ansprüche 1 bis 6.

8. Tintenstrahlaufzeichnungsverfahren, das die Tintenstrahlaufzeichnungstinte nach Anspruch 7 verwendet.

9. Tintenstrahldruckerkartusche gefüllt mit der Tintenstrahlaufzeichnungstinte nach Anspruch 7.

**Revendications**

1. Composition colorante, comprenant :

un composé représenté par la Formule suivante (1), et
un composé représenté par la Formule suivante (D)

Formula (1)

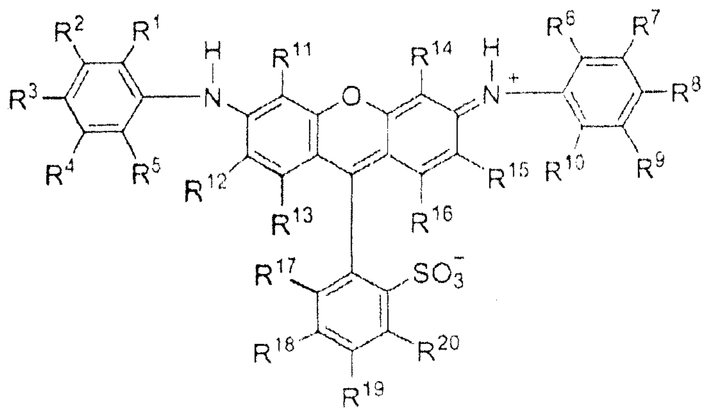

dans laquelle dans la Formule (1), $R^1$, $R^5$, $R^6$ et $R^{10}$ représentent chacun indépendamment un groupe alkyle non substitué présentant de 1 à 6 atomes de carbone :

$R^{11}$, $R^{11}$, $R^{14}$, $R^{16}$, $R^{17}$, $R^{18}$, $R^{19}$ et $R^{20}$ représentent chacun indépendamment un atome d'hydrogène ou un substituant ;
dans laquelle $R^4$, $R^9$, $R^{12}$ et $R^{15}$ représentent chacun indépendamment un atome d'hydrogène ou un substituant sélectionné parmi un groupe alkyle non substitué présentant de 1 à 6 atomes de carbone et un groupe ionique hydrophile, sélectionné parmi le groupe consistant en un groupe carboxyle, un groupe sulfo,

et un groupe phosphono. dans laquelle le groupe ionique hydrophile peut inclure un contre-cation sélectionné parmi un atome d'hydrogène, un cation métal alcalin, et un ion ammonium ;

$R^2$, $R^3$, $R^7$ et $R^8$ représentent chacun indépendamment un atome d'hydrogène, un groupe alkyle non substitué présentant de 1 à 6 atomes de carbone, ou un substituant représenté par la formule suivante (A), et au moins un élément parmi $R^2$, $R^3$, $R^7$ ou $R^8$ représente un substituant représente par la Formule suivante (A),

Formula (A)

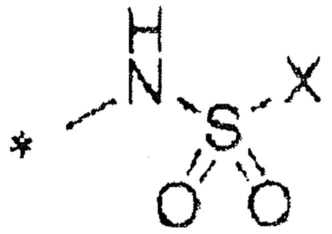

dans laquelle dans la Formule (A), X représente un substituant représenté par la formule suivante (X1), (X2), ou (X3), et

* représente une liaison à un noyau benzénique,

Formula (X1)

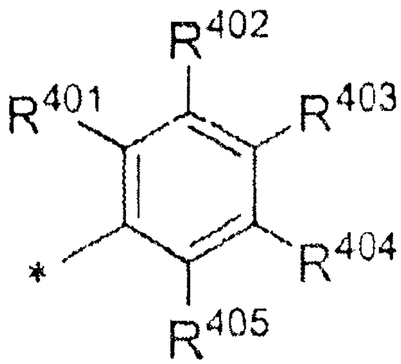

dans laquelle dans la Formule (X1), $R^{401}$, $R^{402}$, $R^{403}$, $R^{404}$ et $R^{405}$ représentent chacun indépendamment un atome d'hydrogène ou un substituant ;

$R^{401}$, $R^{402}$, $R^{403}$, $R^{404}$ et $R^{405}$ satisfont la condition suivante (i) ou (ii),

* représente une liaison à un atome de soufre,

la condition (i) : au moins un élément parmi $R^{401}$, $R^{402}$, $R^{403}$, $R^{401}$ et $R^{405}$ représente un groupe hydroxyle et au moins un élément parmi $R^{401}$, $R^{407}$, $R^{403}$, $R^{404}$ et $R^{405}$ représente un groupe carboxyle, et

la condition (ii) : au moins deux éléments parmi $R^{401}$, $R^{402}$, $R^{403}$, $R^{404}$ et $R^{405}$ représentent un groupe carboxyle,

Formula (X2)

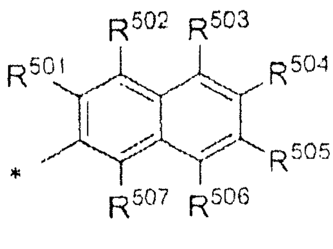

dans laquelle dans la Formule (X2), $R^{501}$, $R^{502}$, $R^{503}$, $R^{504}$, $R^{505}$ $R^{506}$ et $R^{507}$ représentent chacun indépendamment un atome d'hydrogène ou un substituant ;
$R^{501}$, $R^{502}$, $R^{503}$, $R^{504}$. $R^{505}$ $R^{506}$ et $R^{507}$ satisfont la condition suivante (iii) ou (iv).
* représente une liaison à un atome de soufre,
la condition (iii) : au moins un élément parmi $R^{501}$, $R^{502}$, $R^{503}$, $R^{504}$, $R^{505}$ $R^{506}$ et $R^{507}$ représente un groupe hydroxyle et au moins un élément parmi $R^{501}$, $R^{502}$, $R^{503}$, $R^{504}$, $R^{505}$ $R^{506}$ et $R^{507}$ représente un groupe carboxyle, et
la condition (iv) : au moins deux éléments parmi $R^{501}$, $R^{502}$, $R^{503}$, $R^{504}$, $R^{505}$ $R^{503}$ et $R^{504}$ représentent un groupe carboxyle,

Formula (X3)

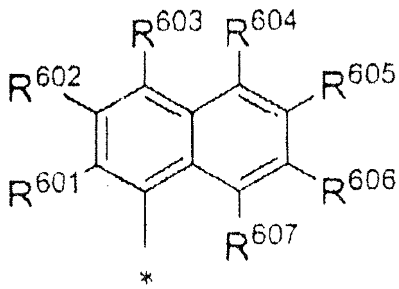

dans laquelle dans la Formule (X3), $R^{601}$, $R^{602}$, $R^{601}$, $R^{604}$, $R^{605}$ $R^{606}$ et $R^{607}$ représentent chacun indépendamment un atome d'hydrogène ou un substituant ;
$R^{601}$, $R^{602}$, $R^{603}$, $R^{604}$, $R^{605}$ $R^{606}$ et $R^{607}$ satisfont la condition suivante (v) ou (vi),
* représente une liaison à un atome de soufre,
la condition (v) : au moins un élément parmi $R^{601}$, $R^{602}$, $R^{603}$, $R^{604}$, $R^{605}$ $R^{606}$ et $R^{607}$ représente un groupe hydroxyle et au moins un élément parmi $R^{601}$, $R^{602}$, $R^{603}$, $R^{604}$, $R^{605}$ $R^{607}$ et $R^{607}$ représente un groupe carboxyle, et
la condition (vi) : au moins deux éléments parmi $R^{601}$, $R^{602}$, $R^{603}$, $R^{604}$, $R^{605}$ $R^{606}$ et $R^{607}$ représentent un groupe carboxyle, et

Formula (D)

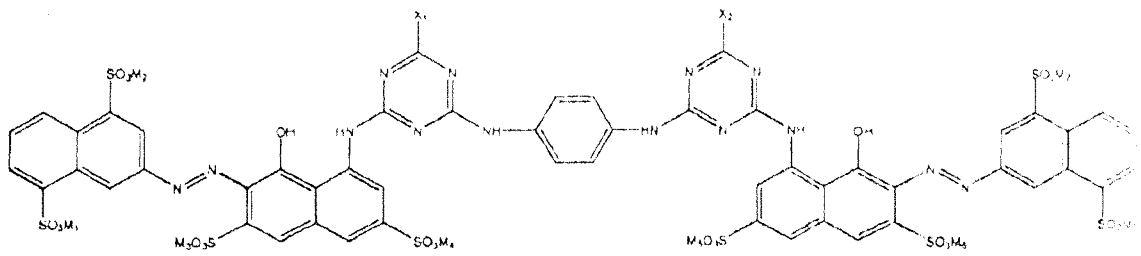

dans laquelle dans la Formule (D), $X_1$ et $X_2$ représentent chacun indépendamment un atome de chlore, un groupe hydroxyle, ou un groupe amino, et
$M^1$ à $M^8$ représentent chacun indépendamment un atome d'hydrogène, un ion ammonium, un ion métal alcalin, ou un cation organique.

2. Composition colorante selon la revendication 1,
dans laquelle X dans la Formule (A) représente un substituant représenté par la Formule (X1), et $R^{401}$, $R^{402}$, $R^{403}$, $R^{404}$ et $R^{405}$ dans la Formule (X1) satisfont la condition (i).

3. Composition colorante selon la revendication 1,
dans laquelle X dans la Formule (A) représente un substituant représenté par la Formule (X2), et $R^{501}$, $R^{502}$, $R^{503}$, $R^{504}$, $R^{505}$ $R^{506}$ et $R^{507}$ dans la Formule (X2) satisfont la condition (iii).

4. Composition colorante selon la revendication 1,

dans laquelle X dans la Formule (A) représente un substituant représenté par la Formule (X3), et $R^{601}$, $R^{602}$, $R^{603}$, $R^{604}$, $R^{605}$ $R^{606}$ et $R^{607}$ dans la Formule (X3) satisfont la condition (v).

**5.** Composition colorante selon l'une quelconque des revendications 1 à 4.
dans laquelle une teneur totale du composé représenté par la Formule (1) et du composé représenté par la Formule (D) est inférieure ou égale à 3,5 % en masse par rapport à la composition colorante.

**6.** Composition colorante selon l'une quelconque des revendications 1 à 5.
dans laquelle un rapport de masse {Formule (1)/Formule (D)} entre une teneur du composé représenté par la Formule (1) et une teneur du composé représenté par la Formule (D) s'élève à {99/1} à {50/50}.

**7.** Encre d'enregistrement pour jet d'encre comprenant la composition colorante selon l'une quelconque des revendications 1 à 6.

**8.** Procédé d'enregistrement à jet d'encre utilisant l'encre d'enregistrement pour jet d'encre selon la revendication 7.

**9.** Cartouche d'imprimante pour jet d'encre, laquelle est remplie avec l'encre d'enregistrement pour jet d'encre selon la revendication 7.

FIG. 1

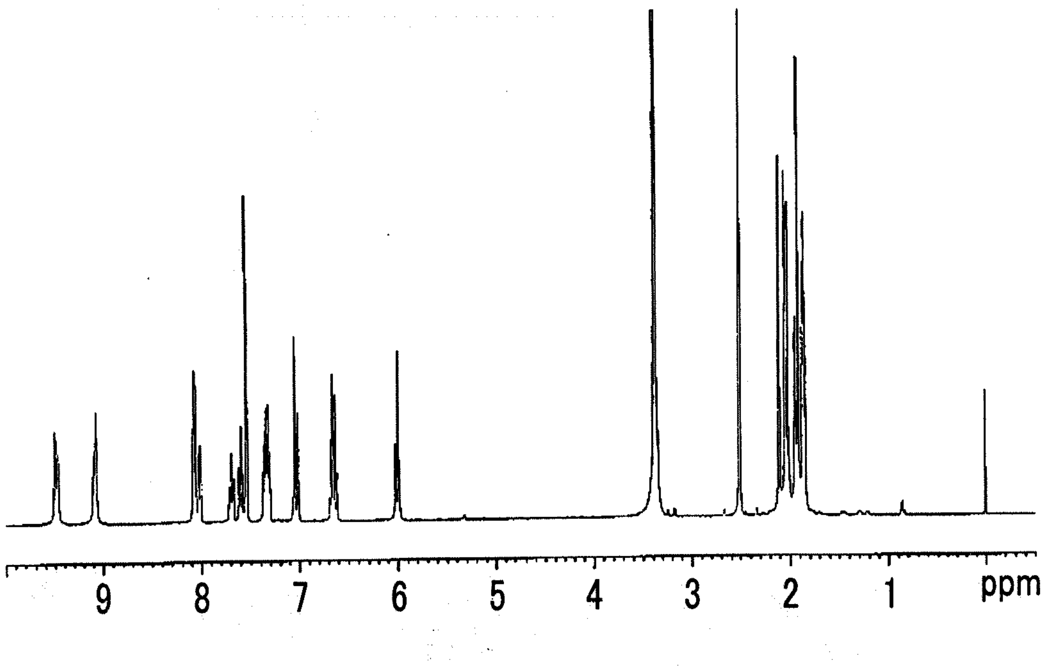


FIG. 2

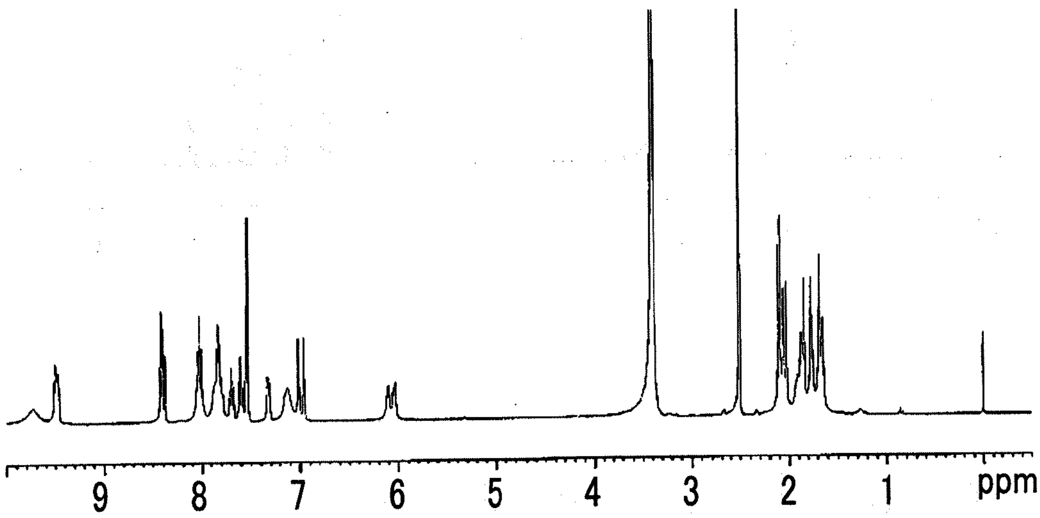

FIG. 3

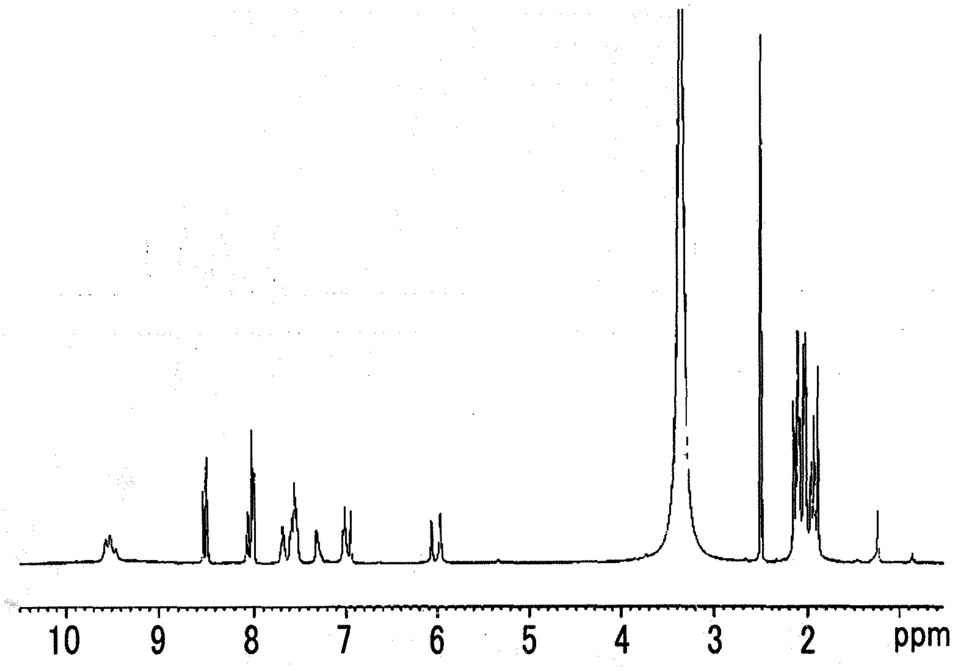


FIG. 4

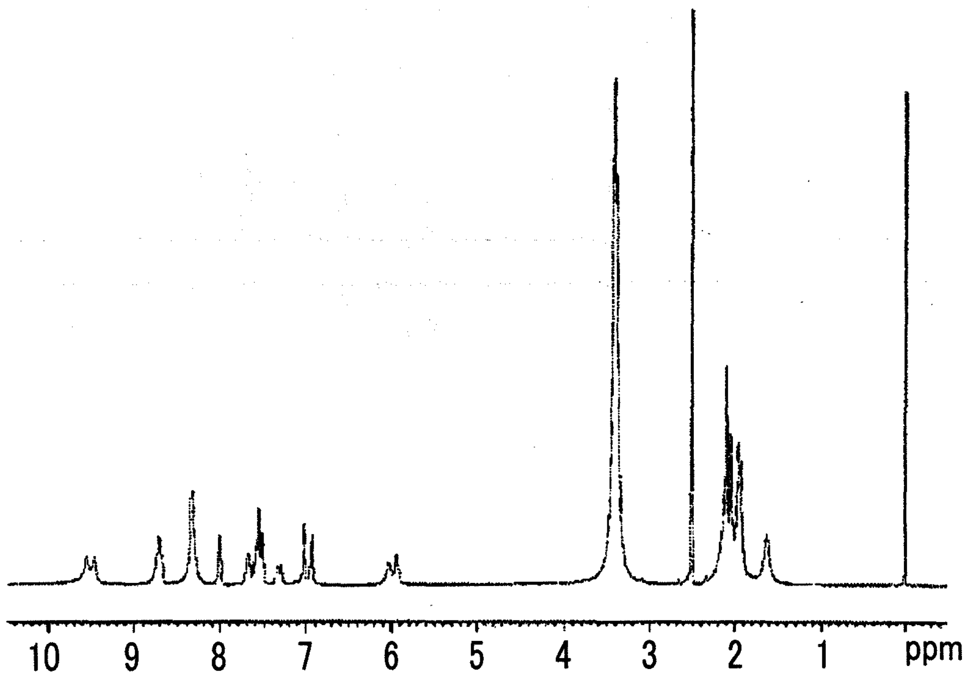

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013133395 A
- WO 2015105108 A
- WO 2015105108 A1
- EP 1247846 A1
- US 2014305336 A1
- JP 58185677 A
- JP S58185677 A
- JP 61190537 A
- JP S61190537 A
- JP 2000782 A
- JP H2000782 A
- JP 5197075 A
- JP H5197075 A
- JP 9034057 A
- JP H9034057 A
- JP 46002784 A
- JP S46002784 A
- JP 5194483 A
- JP H5194483 A
- US 3214463 A
- JP 48030492 B
- JP S4830492 B
- JP 56021141 B
- JP S5621141 B
- JP 10088106 A
- JP H10088106 A
- JP 4298503 A
- JP H4298503 A
- JP 8053427 A
- JP H8053427 A
- JP 8239368 A
- JP H8239368 A
- JP 11182621 A
- JP H10182621 A
- JP 8501291 A
- JP H8501291 A
- JP 62215272 A
- JP S62215272 A
- JP 59157636 A
- JP S59157636 A
- JP 2004285269 A
- JP 8169172 A
- JP H8169172 A
- JP 8027693 A
- JP H8027693 A
- JP 2276670 A
- JP H2276670 A
- JP 7276789 A
- JP H7276789 A
- JP 9323475 A
- JP H9323475 A
- JP 62238783 A
- JP S62238783 A
- JP 10153989 A
- JP H10153989 A
- JP 10217473 A
- JP H10217473 A
- JP 10235995 A
- JP H10235995 A
- JP 10337947 A
- JP H10337947 A
- JP 10217597 A
- JP H10217597 A
- JP 2000363090 A
- JP 2000315231 A
- JP 2000354380 A
- JP 2000343944 A
- JP 2000268952 A
- JP 2000299465 A
- JP 2000297365 A
- JP 2011148973 A
- DE 264786
- DE 278091